# EUROPEAN PATENT APPLICATION

(11) **EP 4 477 068 A1**
(43) Date of publication of application: **18.12.2024**
(21) Application number: 23813255.9
(22) Date of filing: 27.10.2023
(51) Int. Cl.: A01G 31/00, A01G 31/02

(54) **CULTIVATION DEVICE AND CULTIVATION METHOD FOR ENTIRE PLANT**

(30) Priority: 28.04.2023 JP 2023075083
(71) Applicant: GCJ Co., Ltd., Osaka-shi, Osaka 5360015 (JP)
(72) Inventor: TANAKA, Kunisuke, Osaka-shi, Osaka 536-0015 (JP); KINOSHITA, Akira, Osaka-shi, Osaka 536-0015 (JP); HASEGAWA, Ryo, Osaka-shi, Osaka 536-0015 (JP); YAMAMOTO, Ryo, Osaka-shi, Osaka 536-0015 (JP)
(74) Representative: Hoffmann Eitle
(86) International application number: PCT/JP2023/038947
(87) International publication number: WO 2024/224663

(57) **Abstract**

The aim of the present invention is to provide a plant culturing apparatus and a plant culturing method for a plant whole body that allow liquid phase roots and vapor phase roots to separately appear in the root system thereof without using soil. More specifically, according to the present invention, the above described aim is achieved by culturing a plant whole body in the plant culturing apparatus for a plant whole body, which comprises a light-shading casing that is provided with at least one through hole on the ceiling surface and holds a culture liquid, and an inner surface showing capillary force, that are arranged on at least a part of an inner side surface from among an inner surface of the light-shading casing.

## Description

### [Technical Field]

The present invention relates to culture apparatus that can be used to culture a plant whole body, and a culture method for the same.

### [Background]

Heretofore, culture apparatus for a plant whole body used in current plant factories require large tracts of land, large facilities and equipment, and energy to operate the large facilities and equipment. Furthermore, the control systems for the supply of light, water and oxygen must be properly operated.

In other words, in order to operate the current plant factory, it is required to have both high technical ability and abundant financial strength [see Patent document 1].

On the other hand, places where establishment of a plant factory is truly required include a place where sufficient water supply cannot be expected, or a place where crops cannot be cultured immediately after a disaster.

### [Related Art]

### [Patent Document]

[Patent Document 1] WO 2019/069826 A

### [Summary of the Invention]

### [Problem to be solved by the Invention]

However, from an economic point of view, it is a problem that the establishment of a current plant factory is not easy on a narrow land even if water can be replenished or an area that will be reconstructed from disasters in the future.

Plants include (1) trunks, stems, branches, leaves, etc., which are present above ground in soil culture; (2) a root system, which is present underground in soil culture; (3) flowers, seeds, fruits, etc.; (4) seeds; (5) scents and the like; and (6) products such as medicinal components. In this specification, for the sake of convenience, (1) the "subterranean stem" is excluded from the stem that constitutes the plant body, and (2) the "subterranean stem" is included in the root system.

In the plant whole body, a "stem" is an organ which acts as an axis of the plant body in vascular plants, supports leaves and fruits, transports a water component and nutrition from roots to leaves and fruits, and transports nutrition produced in leaves to roots. Edible or medicinal plants that store nutrition in their roots include, for example, sweet potato, Japanese yam, Japanese white radish, carrot, turnip, edible burdock, and medicinal ginseng.

In addition, a "subterranean stem" is one of the metamorphosis of stem that appeared underground in soil culture, and it has the function of supporting the plant whole body like the root, and some plants also have the function of storing nutrition in it. Edible or medicinal plants that store nutrition in subterranean stems include, for example, potato, Jerusalem artichoke, konjac, taro, threeleaf arrowhead, onion, ginger, lily bulb.

It is known that the root system of the plant whole body has a role to support the plant body, a role to absorb nutrition and a water component necessary for the growth of the plant whole body, and a role to storage carbohydrates such as starch produced by photosynthesis in the above ground part, plant growth regulators and synthesized various medicinal components. It is also known that, of the root system, mature thick roots play a major supporting role, and young roots and root hairs efficiently absorb water and nutrition from the soil due to increase of the surface area. Furthermore, it is known that the lack of oxygen causes root rot and the plant whole body withers.

However, regarding the role of the root system, the root system is hidden in the soil, so it cannot be visually confirmed directly, and even if the soil grains are removed, the distribution of various forms of roots in the soil cannot be determined. Also, even if the root system can be visually observed with hydroponics, since the entire root system is in flowing water, it is not possible to distinguish between a water-absorbing part and an oxygen-absorbing part. No detailed investigation has been carried out at present.

The present inventors focused on the function of, in particular, the root system in the plant whole body, based on the knowledge gained when developing the "ceramic culture" [JP H10-150871 A1], and continued further research. It was confirmed that in the first place, soil is not required for the growth of plants, and plant culture is possible anywhere as long as there is a means for absorbing a water component, nutrition and air containing oxygen from the roots, and a means of physically supporting the plant whole body.

More specifically, the part of the root that is in contact with the inner wall of the ceramic cylinder absorbed water, and the root hairs are abundant on the side that was not in contact. That is, in the root, there are a root part which grows toward a side where a water component is plenty, that is, a liquid phase, and absorbs mainly a water component and nutrition; and a root part which grows toward a vapor phase, and is presumed to mainly absorb oxygen from the air.

In the present invention, the root that mainly absorbs water and nutrition is called a "liquid-phase root", and the root that mainly absorbs oxygen is called a "vapor-phase root".

In conventional soil culture, ideally the soil grains form a structure of soil aggregates. There are interstices between soil grains or soil aggregates. Then, it is assumed that when an amount of water in the soil is large, the entire root system absorbs a water component and nutrition from the water absorbed by the soil grains or soil aggregates as well as the liquid phase present in the interstices, and when an amount of water in the soil is small, a part of the root is in contact with the surface of the soil grains likely in ceramic culture and absorbs water and nutrition as liquid-phase roots; and in the interstices between the soil grains or soil aggregates, the other part absorbs oxygen from the air as vapor phase roots. In other words, the root system of soil-cultured plants is considered to have vapor-phase roots and liquid-phase roots disorderly.

The present inventors speculates if the root system is separated into a site where liquid-phase roots appear and a site where vapor-phase roots appear so that in the respective sites, a water component and nutrition are absorbed from the liquid phase by the liquid-phase roots and oxygen in the air is absorbed from the vapor phase by the vapor-phase roots, even when the dissolved oxygen in the liquid phase is deficient, the presence of the vapor-phase root will prevent the root system of the plant whole body from becoming oxygen deficient.

Therefore, the present inventors aimed to develop culture apparatus for a plant whole body and a method for culture of such a plant whole body, which allow liquid-phase roots and vapor-phase roots to separately appear in the root system without using soil.

In this context, "culture of a plant whole body" includes industrial culture of plants in order to utilize the plant whole body for purposes of acquisition of scent and the like; oxygen emission and CO₂ absorption; moderation of humidity and temperature of the surrounding environment, etc.

### [Means for solving the problem]

In order to solve the aforementioned problem, the culture apparatus for a plant whole body newly developed by the present inventors comprising
a light-shading case that has at least one through hole on its ceiling surface and holds culturing liquid; and
an internal object showing capillary force arranged on at least a part of an inner side surface from among an inner surface of the light-shading case.

That is, the present invention is characterized by holding the culturing liquid as stagnant water in the light-shading case having an internal object showing capillary force. In the interior space of the light-shading case, a large amount of root system grows without coming into contact with the internal object, and potatoes and root vegetables also grow.

As used herein, the capillary force refers to the ability to carry water upward against gravity, that is, the suction ability due to capillary action, the internal microstructure of the internal object showing capillary force and the wettability of water to the material of the internal object affect the capillary force.

The present invention adopts a light-shading case having an internal object showing capillary force, it uses stagnant water which is culturing liquid held in the light-shading case to supply a water component to a plant whole body, and a water component in capillaries in the internal object is used to control humidity and temperature in the interior space.

When the culture apparatus and the culture method according to the present invention are used, a part in the root systems which is present in a liquid phase grows as a liquid-phase root absorbing a water component and nutrition from the liquid phase, and a part in the root systems which is present in a vapor phase grows as a vapor-phase root absorbing oxygen from the vapor phase. Consequently, unlike the and soil culture or conventional hydroponics, it becomes possible that the liquid-phase roots and the vapor-phase roots are respectively aggregated and they can be cultured separately in the respective appropriate phase, and therefore, even if dissolved oxygen in the stagnant water which is culturing liquid is deficient and it becomes unable to absorb oxygen from the liquid-phase root, the vapor-phase root will continue to absorb oxygen, so the root system of the plant whole body never become oxygen-deficient.

Further, since the culture apparatus according to the present invention has a through hole as a support means for the plant whole body, supporting roots required in soil culture is not essential. Therefore, the total amount of the liquid-phase roots and vapor-phase roots becomes greatly increase.

Therefore, the culture apparatus for a plant whole body according to the present invention can be applied to various primordia without being limited to the type, size, or morphology of a plant. The morphology of a plant includes any morphology of a plant such as a morphology with root portions and a morphology without root portions but having reproductive potential (e.g., seed, bulb, subterranean stem, terrestrial stem, buds, adventitious buds, axillary buds, anther, filament, ear, leaf, cuttings, small seedlings, large seedlings, scale, ovary, ovule, embryo, pollen, adventitious embryo, adventitious roots, plant tissue or plant cell of cultured plant and the like).

The present invention provides culture apparatus for a plant whole body, comprising
a light-shading case that has at least one through hole on its ceiling surface and holds culturing liquid; and
an internal object showing capillary force arranged on at least a part of an inner side surface from among an inner surface of the light-shading case.

A water-level adjustment means for adjusting a water level of the culturing liquid may be connected to the light-shading case.

The light-shading case may comprise a light-shading case main body in a form of a box, and a lid that covers an upper opening of the light-shading case main body and is removable.

The lid may be hung by spanning multiple hanging tools that span opposing opening edges of the light-shading case main body.

The through hole may be in a form of a slit-like long hole.

A door that can be opened and closed may be set on at least one side of the light-shading case.

The internal object may be arranged on the entire inner side surface of the light-shading case.

The internal object may be arranged on the inner surface other than an area of the through hole.

Another internal object having water retention capacity to supply the culturing liquid to the plant whole body may be laid on the entire bottom surface of the light-shading case.

The internal object may be removably arranged on the light-shading case via at least one holder that is attached on at least the inner side surface from among an inner surface of the light-shading case.

The internal object may be arranged diagonally by leaning against the inner side surface of the light-shading case.

A mounting table that mounts the plant whole body may be set on a bottom surface of the light-shading case.

The mounting table may be made of the same material for the internal object.

The mounting table may be made up of a drain board.

The internal object is a fired body made of a non-metal inorganic solid material, and contains continuous pores that are voids, and the void rate of the entire fired body is 10 to 80% (vol/vol), the average pore size of the void is 3 µm or less, and the voids with a pore size of 3 µm or less account for 70% or more of the total voids in volume ratio.

A lighting case provided with a light source illuminating light to a top surface of the light-shading case may be stacked on the light-shading case.

A lighting unit provided with a light source illuminating light to a top surface of the light-shading case may be set above the light-shading case.

One embodiment of the present invention provides
a culture method for a plant whole body using the aforementioned culture apparatus for a plant whole body, which comprises at least
a step of forming a spacial area capable of accommodating a root system of the plant whole body within the light-shading case by arranging an internal object showing capillary force at least a part of an inner side surface from among an inner surface of the light-shading case holding culturing liquid;
a step of supplying a culturing liquid into the light-shading case before or after the step of forming a spacial area;
a step of growing root parts that absorb a water component and nutrition from the liquid phase in the culturing liquid held within the light-shading case; and
a step of growing root parts that absorb oxygen from the vapor phase in a water component and oxygen present inside the spacial area of the light-shading case.

The plant whole body may be placed on a mounting table which is set on the bottom surface of the light-shading case for culturing.

The culturing liquid held in the light-shading case may be water or a nutrient solution containing nutrition required for growing the plant whole body to be cultured, and may be stagnant water.

The nutrition may be essential macroelements selected from the group consisting of nitrogen, phosphate, potassium, calcium, magnesium and sulfur; essential trace elements selected from the group consisting of iron, manganese, boron, zinc, molybdenum, copper, chlorine, nickel; or useful elements selected from the group consisting of silicon, sodium, cobalt, etc.

### [Effects of the Invention]

When the culture apparatus and the culture method according to the present invention are used, since soil is not required for culturing a plant whole body, anybody can operate a plant factory anywhere at a low cost without requiring vast land, large facilities and apparatus, and further energy to operate such a large facilities and apparatus.

In soil culture, plants are bound to a specific location, and further, since after harvesting, it is necessary to remove the soil attached to the root system, which takes time and effort before shipping.

However, since the restraint by the soil and the influence of the impurities from the soil are removed according to the present invention, it becomes possible that the plant whole body is industrially produced, and then the target substance is harvested using its chemosynthetic power to activate the development of technology, and that nutrition necessary for synthesizing the target substance is appropriately supplied to the plant, and the absorption from the roots is directly and efficiently performed in order to efficiently synthesize the target component.

In short, the soil-free plant culture technology by the present invention is the entrance and foundation technology of the ultimate green chemistry.

### [Brief Description of the Drawings]

[Figure 1] An overall perspective view for the first embodiment of the culture apparatus for a plant whole body according to the present invention.
[Figure 2] An enlarged partial cross-sectional perspective view of the culture apparatus illustrated in Figure 1.
[Figure 3] An enlarged partial cross-sectional perspective view showing the usage state of the culture apparatus illustrated in Figure 1.
[Figure 4] A longitudinal cross-sectional view showing the usage status of the culture apparatus illustrated in Figure 1.
[Figure 5] A vertical cross-sectional view showing the second embodiment of the culture apparatus for a plant whole body according to the present invention.
[Figure 6] A perspective view showing the third embodiment of the culture apparatus for a plant whole body according to the present invention.
[Figure 7] A vertical cross-sectional view from the front of the culture apparatus illustrated in Figure 6.
[Figure 8] A vertical cross-sectional view from the left side of the culture apparatus illustrated in Figure 6.
[Figure 9] A perspective view showing the fourth embodiment of the culture apparatus for a plant whole body according to the present invention.
[Figure 10] A horizontal cross-sectional perspective view of the culture apparatus illustrated in Figure 9.
[Figure 11] A vertical cross-sectional view showing the fifth embodiment of the culture apparatus for a plant whole body according to the present invention.
[Figure 12] A photograph showing Example 1 of the culture apparatus according to the present invention.
[Figure 13] A plan view of the results of measuring the photon flux density illuminated from the light source in Example 1.
[Figure 14] A photograph showing the results of analyzing the wave lengths of the light illuminated from the light source in Example 1.
[Figure 15] An electron micrograph of the cross-section of the fired body which is an internal object used in Example 1 of the culture apparatus according to the present invention.
[Figure 16] A diagram including photographs showing changes in the state of the potatoes in Example 1 cultured using the culture apparatus and the culture method according to the present invention.
[Figure 17] A partially-enlarged view of the photograph included in the diagram of Figure 16.

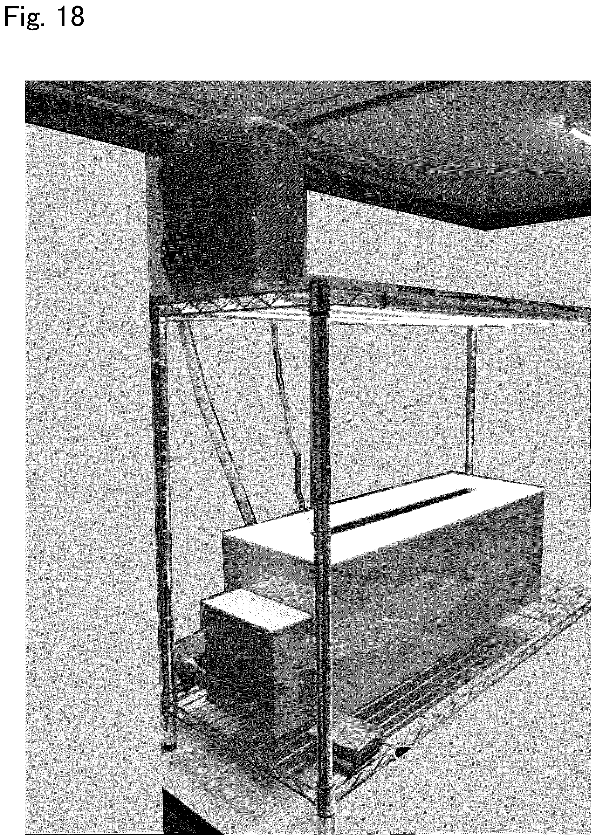

[Figure 18] A diagram showing Example 2 of the culture apparatus according to the present invention.
[Figure 19] A plan view of the results of measuring the photon flux density illuminated from the light source in Example 2.
[Figure 20] A photograph showing the results of analyzing the wave lengths of the light illuminated from the light source in Example 2.

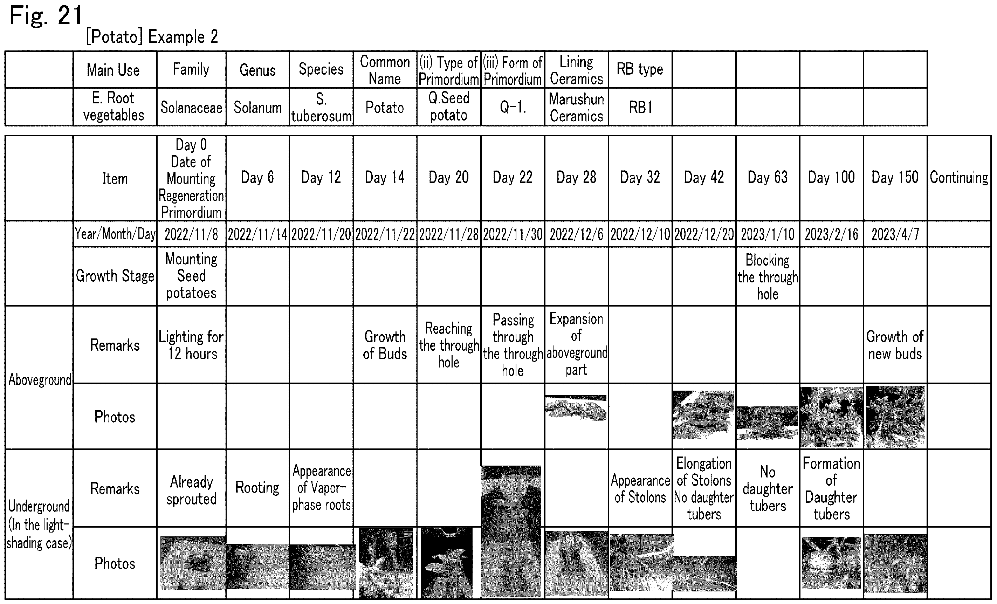

[Figure 21] A diagram including photographs showing changes in the state of potatoes in Example 2 cultured using the culture apparatus and the culture method according to the present invention.

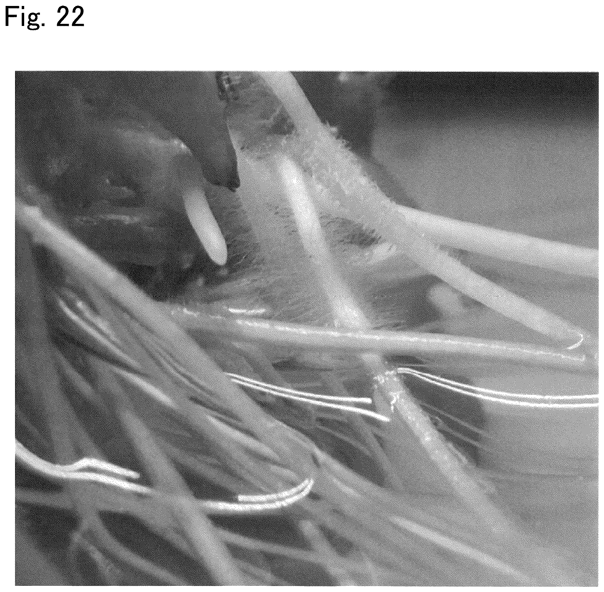

[Figure 22] A partially-enlarged view of the photograph included in the diagram of Figure 21.
[Figure 23] A diagram including photographs showing changes in the state of the turmerics in Example 3 cultured using the culture apparatus and the culture method according to the present invention.
[Figure 24] An enlarged view of the photograph included in the diagram of Figure 23.
[Figure 25] An enlarged view of the photograph included in the diagram of Figure 23.
[Figure 26] A diagram including photographs showing changes in the state of the gingers in Example 4 cultured using the culture apparatus and the culture method according to the present invention.
[Figure 27] An enlarged view of the photograph included in the diagram of Figure 26.
[Figure 28] An enlarged view of the photograph included in the diagram of Figure 26.
[Figure 29] A diagram including photographs showing changes in the state of corn in Example 5 cultured using the culture apparatus and the culture method according to the present invention.
[Figure 30] An enlarged view of the photograph included in the diagram of Figure 29.
[Figure 31] An enlarged view of the photograph included in the diagram of Figure 29.
[Figure 32] A diagram including photographs showing changes in the state of the soybean in Example 6 cultured using the culture apparatus and the culture method according to the present invention.
[Figure 33] An enlarged view of the photograph included in the diagram of Figure 32.
[Figure 34] An enlarged view of the photograph included in the diagram of Figure 32.
[Figure 35] A diagram including photographs showing changes in the state of the rapeseeds in Example 7 cultured using the culture apparatus and the culture method according to the present invention.
[Figure 36] An enlarged view of the photograph included in the diagram of Figure 35.
[Figure 37] An enlarged view of the photograph included in the diagram of Figure 35.
[Figure 38] An enlarged view of the photograph included in the diagram of Figure 35.
[Figure 39] An enlarged view of the photograph included in the diagram of Figure 35.
[Figure 40] A diagram including photographs showing changes in the state of the basils in Example 8 cultured using the culture apparatus and the culture method according to the present invention.
[Figure 41] An enlarged view of the photograph included in the diagram of Figure 40.
[Figure 42] An enlarged view of the photograph included in the diagram of Figure 40.
[Figure 43] An enlarged view of the photograph included in the diagram of Figure 40.
[Figure 44] An enlarged view of the photograph included in the diagram of Figure 40.
[Figure 45] A diagram including photographs showing changes in the state of the Japanese peppermint in Example 9 cultured using the culture apparatus and the culture method according to the present invention.
[Figure 46] An enlarged view of the photograph included in the diagram of Figure 45.
[Figure 47] An enlarged view of the photograph included in the diagram of Figure 45.
[Figure 48] An enlarged view of the photograph included in the diagram of Figure 45.
[Figure 49] A diagram including photographs showing changes in the state of the green perilla in Example 10 cultured using the culture apparatus and the culture method according to the present invention.
[Figure 50] An enlarged view of the photograph included in the diagram of Figure 49.
[Figure 51] An enlarged view of the photograph included in the diagram of Figure 49.
[Figure 52] An enlarged view of the photograph included in the diagram of Figure 49.
[Figure 53] An enlarged view of the photograph included in the diagram of Figure 49.
[Figure 54] A diagram including photographs showing changes in the state of the strawberry in Example 11 cultured using the culture apparatus and the culture method according to the present invention.
[Figure 55] An enlarged view of the photograph included in the diagram of Figure 54.
[Figure 56] An enlarged view of the photograph included in the diagram of Figure 54.
[Figure 57] A diagram including photographs showing changes in the state of the trifoliate orange in Example 12 cultured using the culture apparatus and the culture method according to the present invention.
[Figure 58] An enlarged view of the photograph included in the diagram of Figure 57.
[Figure 59] A diagram including photographs showing changes in the state of the tea tree in Example 13 cultured using the culture apparatus and the culture method according to the present invention.
[Figure 60] An enlarged view of the photograph included in the diagram of Figure 59.
[Figure 61] An enlarged view of the photograph included in the diagram of Figure 59.
[Figure 62] A diagram including photographs showing changes in the state of the passion fruit in Example 14 cultured using the culture apparatus and the culture method according to the present invention.
[Figure 63] An enlarged view of the photograph included in the diagram of Figure 62.
[Figure 64] An enlarged view of the photograph included in the diagram of Figure 62.
[Figure 65] A diagram including photographs showing changes in the state of the fig in Example 15 cultured using the culture apparatus and the culture method according to the present invention.
[Figure 66] An enlarged view of the photograph included in the diagram of Figure 65.
[Figure 67] An enlarged view of the photograph included in the diagram of Figure 65.
[Figure 68] A diagram including photographs showing changes in the state of the Chinese licorices in Example 16 cultured using the culture apparatus and the culture method according to the present invention.
[Figure 69] An enlarged view of the photograph included in the diagram of Figure 68.
[Figure 70] An enlarged view of the photograph included in the diagram of Figure 68.
[Figure 71] A diagram including photographs showing changes in the state of the cotton in Example 17 cultured using the culture apparatus and the culture method according to the present invention.
[Figure 72] An enlarged view of the photograph included in the diagram of Figure 71.
[Figure 73] An enlarged view of the photograph included in the diagram of Figure 71.
[Figure 74] A diagram including photographs showing changes in the state of the cherry tomato in Example 18 cultured using the culture apparatus and the culture method according to the present invention.
[Figure 75] An enlarged view of the photograph included in the diagram of Figure 74
[Figure 76] An enlarged view of the photograph included in the diagram of Figure 74.
[Figure 77] A diagram including photographs showing changes in the state of the cucumber in Example 19 cultured using the culture apparatus and the culture method according to the present invention.
[Figure 78] An enlarged view of the photograph included in the diagram of Figure 77.
[Figure 79] An enlarged view of the photograph included in the diagram of Figure 77.
[Figure 80] A diagram including photographs showing changes in the state of the eggplant in Example 20 cultured using the culture apparatus and the culture method according to the present invention.
[Figure 81] An enlarged view of the photograph included in the diagram of Figure 80.
[Figure 82] An enlarged view of the photograph included in the diagram of Figure 80.
[Figure 83] A diagram including photographs showing changes in the state of the nasturtium in Example 21 cultured using the culture apparatus and the culture method according to the present invention.
[Figure 84] An enlarged view of the photograph included in the diagram of Figure 83.
[Figure 85] An enlarged view of the photograph included in the diagram of Figure 83.
[Figure 86] A diagram including photographs showing changes in the state of the balloon flower in Example 22 cultured using the culture apparatus and the culture method according to the present invention.
[Figure 87] An enlarged view of the photograph included in the diagram of Figure 86.
[Figure 88] An enlarged view of the photograph included in the diagram of Figure 86.
[Figure 89] A diagram including photographs showing changes in the state of the soybeans in Example 23 cultured using the culture apparatus and the culture method according to the present invention.
[Figure 90] An enlarged view of the photograph included in the diagram of Figure 89.
[Figure 91] An enlarged view of the photograph included in the diagram of Figure 89.

### [Mode for Carrying Out the Invention]

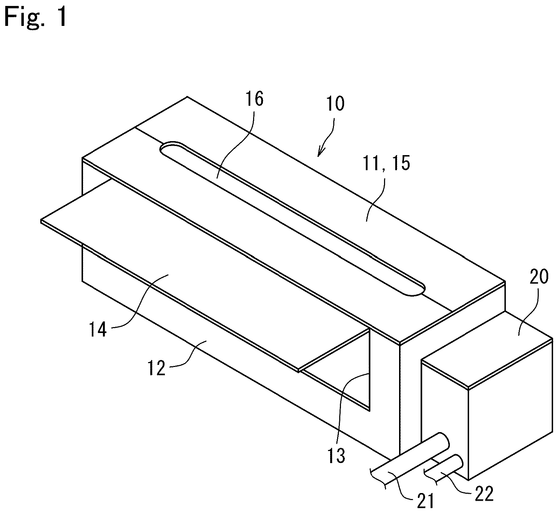

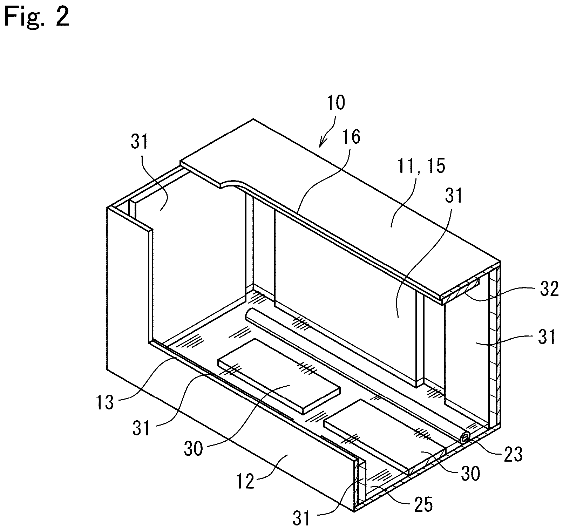

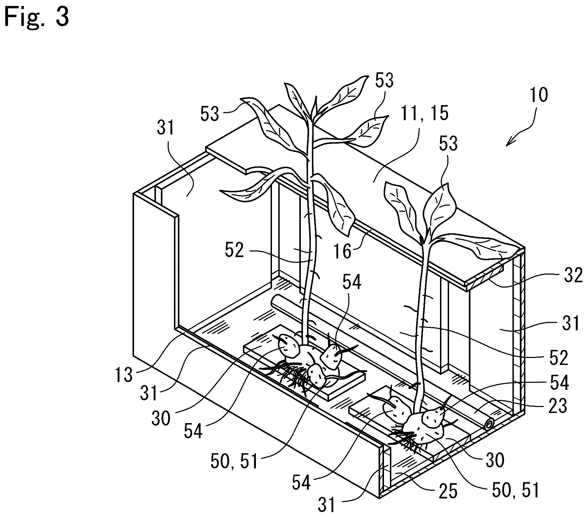

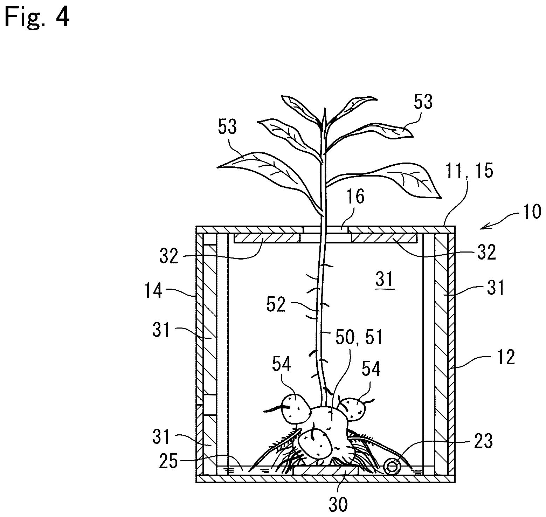

The first embodiment of the culture apparatus according to the present invention is explained with reference to Figures 1-4.

The first embodiment of the culture apparatus 10 comprises a light-shading case 11 and a water-level adjustment means 20 that supplies culturing liquid 25 at a constant water level, is used together with a light source not shown herein. In the first embodiment of the culture apparatus 10, a case where among plant whole bodies 50, a potato, a root vegetable, is cultured is explained.

A mounting table 30 is set on the bottom surface of the light-shading case 11, and internal objects 31,32 are arranged on its inner side surface and the inner surface of the lid 15.

When the culture apparatus 10 and the method for culturing a plant whole body 50 according to the present invention are used, since there is no need for soil, anyone can culture desired plants anytime, anywhere without any location restrictions.

In addition, since the root system is not hidden in soil, it is possible to directly observe the functions of a root system, especially root hairs, which will further advance the study of plant ecology.

Furthermore, since plants are grown by consistently using the "same manufacturing method" from research and development to commodification and commercialization (regional implementation, social implementation), the time period until implementation and industrialization can be shortened, it is possible to easily collaborate with all cutting-edge technologies (not only IT, and also opt-technology, nanotechnology, gene editing technology, etc.), plants can be transferred, and scientific approaches for identity, homogeneity, cleanliness, reproducibility, etc. can be adopted, which leads to new technological development.

Therefore, based on the present invention, a brand new conceptual "PLANT FACTORY" can be launched, and it becomes a driving force to make inventions for realizing an installation of a plant factory for plant culture, as long as there is enough light for photosynthesis, not only in dry areas and disaster-stricken areas where an abundant supply of water cannot be expected, and without limiting to the ground, in space such as vehicles, freight cars, ships, and aircraft, and even in outer space, such as space stations and other planets.

The light-shading case 11 comprises a light-shading case main body 12 and a lid 15 that covers an upper opening of the light-shading case main body 12.

The light-shading case main body 12 is a box with a substantially U-shaped cross-section, and the opening part 13 on one side of the body is provided with a door 14 that can be opened and closed by opening from the top. The door 14 is preferably provided as necessary. For the plant whole body 50 to be cultured in the light-shading case 11, by opening and closing door 14, for example, it becomes easy to observe and manage a seed potato 51 of potatoes and becomes easy to harvest generated and grown daughter tubers.

The boundary between the light-shading case main body 12 and the lid 15, and the boundary between opening part 13 and door 14 have a sealed structure that prevents light from entering from the outside.

The shape and size of the light-shading case 11 depend on the plant whole body 50 to be cultured, but it is not limited as long as the case 11 has a spacial area that can accommodate root systems and grown underground storage organs such as storage roots (e.g., sweet potato, Japanese yam, Japanese white radish, turnip, carrot, edible burdock, ginseng), subterranean stems (e.g., potato, taro, onion, garlic, turmeric), etc.

Further, the shape is not limited as long as there is a spacial area that can accommodate root systems, grown underground storage organs, and subterranean stems of the plant whole body 50 to be cultured. It may be, not limited to rectangular parallelepiped shape, for example, cubic shape, cylindrical shape, truncated cone shape, quadrangular truncated pyramid shape, or for example, substantially semicircular, substantially triangular, substantially trapezoidal, substantially hexagonal cylinder in longitudinal section. Naturally, it can be selected as appropriate depending on the cultured plants and culturing environment.

The lid 15 has a shape that can cover the upper opening of the light-shading case main body 12 to shade light, and is composed of two plate-shaped bodies that can be divided into two, and it may be formed from a single plate. If the lid 15 can be divided into two parts, it will be easier to manage and take out the whole plant body 50 to be cultured. It is preferred that particularly when the root system becomes enlarged, the door 14 can be opened to allow observation of the root system of the whole plant body 50, making it easy to collect it. The lid 15 has a through hole 16 in its center through which the stem 52 of the plant whole body 50 can pass. The through hole 16 may be, for example, a round hole, an elliptical hole, a triangular hole, a square hole, a slit-like long hole, or an appropriate combination thereof.

The through hole 16 plays not only a role of letting the terrestrial part of the plant whole body 50 to pass through in order to support the stem 52 of the plant whole body 50 and also a role of letting light in. Although the position of the through hole 16 is not particularly limited, it is preferably on the central axis of the light-shading case 11. The shape of the through hole 16 is not particularly limited, and its external dimensions may be large enough to accommodate the trunk or stem 52 of the plant whole body 50 to be cultured, for example, 1 to 10 cm. In the culture apparatus of the present invention, for example, when culturing potatoes, the diameter of the through hole 16 can be formed to be 15 to 65 mm.

The light-shading case 11, except for the through hole 16, is sealed to prevent light from entering from the outside.

In a case where the through hole 16 is a long hole like a slit, when the stem of the plant whole body 50 grows and leaves from the through hole 16, it is preferred to prevent light from penetrating by applying a light-shading sheet avoiding the stem part of the plant whole body 50. This is to prevent stolons generated from potatoes from being exposed to light and metamorphosing into stems.

The water-level adjustment means 20 include, for example, a ball tap, but are not necessarily limited to this, and may be adjusted by combining a water level sensor and a solenoid valve.

The culturing liquid 25 is held in the bottom surface of the light-shading case 11, and its water level is adjusted by the water-level adjustment means 20.

The water-level adjustment means 20 may directly inject the culturing liquid 25 into the light-shading case 11 via a water supply port (not shown).

The culturing liquid 25 may also be supplied to the inner part of the light-shading case 11 via the supply pipe 23. This is to prevent imbalance of nutrients in the culturing liquid 25 and to ensure uniform growth of the plant whole body 50.

The culturing liquid 25 may be water or a nutrient solution containing water and nutrition required for the growth of the plant whole body to be cultured. The culturing liquid 25 may be stagnant water. The culture apparatus 10 does not require a water flow mechanism or an oxygen supply mechanism, but the addition of such mechanisms is not excluded.

The mounting table 30 is preferably formed so that it mounts an enlarged part of the plant whole body to be cultured, that is, storage roots (e.g., sweet potato, Japanese yam, Japanese white radish, turnip, carrot, edible burdock, ginseng), subterranean stems (e.g., potato, taro, onion, garlic, turmeric), etc. to prevent the enlarged part from being deeply immersed into liquid, and to allow liquid-phase roots immersed into the liquid.

The mounting table 30 may be made of the same material as the internal objects 31,32 explained later, but not limited to this, for example, it may be a so-called drain board formed with stainless steel rods.

In short, as long as the plant whole body 50, for example, the lower surface of a seed potato 51 of potatoes to be cultured is not deeply immersed in the culturing liquid 25 and can grow, its material and shape are not critical.

The internal objects 31,32 are used to maintain constant humidity and temperature within the light-shading case 11 by sucking up the culturing liquid 25 held in the light-shading case 11 by capillary action and evaporating it.

The material of the internal objects 31,32 can be manufactured from organic solid material, non-metal inorganic solid material, pulp, paper, woven fabric, non-woven fabric, microporous body, etc. alone or any combinations thereof.

One specific embodiment of the internal objects 31,32 may be a microporous fired body of non-metal inorganic solid materials including continuous pores that are voids, in which the average pore size of the voids is 3 µm or less, the voids with a pore size of 3 µm or less account for 70% or more of the total void volume, and the void rate is 10 to 80% (vol/vol) of the entire fired body.

The internal objects 31,32 have a function of stabilizing the temperature and humidity inside the light-shading case 11.

The humidity is adjusted within the range of 20 to 100% within the humidity range when growing a plant whole body 50.

The temperature is a temperature appropriate for a plant whole body 50 to be grown, and is regulated externally by nature or by a temperature control device. There is no need to attach a temperature control device to the culture apparatus 10 according to the present invention, but it may be included optionally.

The internal objects 31,32 showing such a function have a water absorption capacity capable of retaining water, for example, at 20°C, 0.005 to 500 times, preferably 0.01 to 100 times, more preferably 0.025 to 50 times, most preferably 0.05 to 5 times with respect to the amount per unit weight of the material for the internal objects 31,32 (weight/weight). The material for the internal objects 31,32 is not particularly limited as long as a microporous body having, for example, a continuous pore with a void diameter of 0.02 to 900 µm, preferably 0.05 to 80 µm, more preferably 0.1 to 9 µm, and most preferably 0.2 to 5 µm, at a void rate (volume/volume) of 0.05 to 1, preferably 0.2 to 0.4 to the microporous body.

In addition, the internal objects 31,32 may be any material having the above-mentioned characteristics, and is preferably made of materials that are resistant to various culture conditions or medium conditions such as sterilizing at high temperature and high pressure in an autoclave, or exposing to strong alkaline, strong acidic, high temperature, low temperature, high salt concentration, applying pressure, reduced pressure, organic solvents, radiation, or gravity, and the like. Examples include, for example, porous bodies obtained by kneading, molding, and firing non-metal inorganic solid materials such as No. 10 soil, porcelain No. 2 soil (Shiroyama Cerapot Co., Ltd.), Murakami clay (Niigata) and Mikawa clay (Marushun Ceramic Co., Ltd.), and materials made of open-cell plastic foam materials such as polyvinyl alcohol foam, polyurethane foam, polystyrene foam, vinyl chloride resin foam, polyethylene foam, polypropylene foam, phenol resin foam, and urea resin foam. In particular, when a non-metal inorganic solid material is made into a porous material that is microporous and easily absorbs and releases water, it is preferably to add, for example, 50 to 60% by weight of petalite, alumina, etc., and to fire it. In general, the petalite is preferably those containing 76.81% by weight of SiO₂, 16.96% by weight of Al₂O₂, 4.03% by weight of LiO₂, 0.26% by weight of K₂O, and 1.94% by weight of unavoidable impurities. The non-metal inorganic solid material may contain powdered inorganic foam. Furthermore, it is desirable that the internal objects 31,32 used in the culture apparatus according to the present invention are made of a material that does not substantially reduce its strength or change its shape even when it absorbs water. Non-metal pottery made of inorganic materials has a stable structure, and the internal objects 31,32 made of paper or cloth are also useful depending on the plant being grown.

Molding methods for non-metal inorganic solid materials include, for example, molding methods known in the art such as casting molding, extrusion molding, press molding, and potter's wheel molding, and especially from the view point of mass production and cost reduction, extrusion molding is preferred. Further, drying after molding can be performed using conventional methods and conditions known in the art. The subsequent firing of the molded body is not particularly limited as long as it is carried out under conditions and by a method that are normally carried out, but for example, oxidation firing or the like can be selected, because it is easy to obtain the desired void, and the firing temperature is 1000°C to 2000°C, preferably 1100°C to 1500°C, more preferably 1150°C to 1250°C, and most preferably 1200°C. If the firing temperature of the non-metal inorganic solid material is less than 1000°C, sulfur components tend to remain, while if it exceeds 2000°C, the desired water absorbency cannot be obtained.

On the other hand, methods for molding a microporous body made of open-cell plastic foam include, for example, methods such as melt foam molding, solid phase foam molding, and cast foam molding. The main steps in melt foam molding are melt kneading, unfoamed sheet molding, heat foaming or extrusion foaming, cooling, cutting, and processing. In solid phase foam molding, the polymer is foamed in a solid phase or near solid phase. In addition, in cast foam molding, liquid raw materials (monomers or oligomers) are cast and foamed while reacting in the atmosphere. Further, a blowing agent is generally used to foam open-cell plastic foam.

The culture apparatus 10 according to the present invention may further include a support or sleeve for supporting the plant whole body 50.

When culturing a plant whole body 50 to be cultured in the form of a seed, bulb, or seed potato, the culture apparatus 10 may further include a mounting table 30 for the seed, bulb, or seed potato. The dimensions of the mounting table 30 should be such that the target seed, bulb, or seed potato can be placed thereon, and the mounting table 50 can be accommodated inside the light-shading case 11.

A time period during which a trunk, stem, branch, leaf, etc. appearing from the seed, bulb or seed potato is less than the height of the light-shading case 11, it may further include a support (not shown) that guides the seedlings to grow towards the light from the through hole 16 formed in the lid part 15.

Similarly, in the case where culture of the plant whole body 50 to be cultured is started from the form of small seedlings at a height less than the height of the light-shading case 11, it may further include a support (not shown) that guides the seedlings to grow towards the light from the through hole 16 formed in the lid part 15.

In order to avoid enlarged parts of the root system of the plant whole body 50 to be cultured, such as storage root (sweet potato, Japanese yam, Japanese white radish, turnip, carrot, edible burdock, ginseng) and subterranean stem (potato, taro, onion, garlic, turmeric, etc.), etc. from coming into contact with the culturing liquid, a mounting table may be set in which the enlarged part is placed and the liquid-phase root is immersed in the culturing liquid.

Examples for the plant whole body 50 according to the present invention are listed in Table 1.

**[Table 1]**

| Use Classification | Family | Genus | Species |
|---|---|---|---|
| Food crops | Poaceae | Oryza | O. sativa |
| | Poaceae | Zea | Z. mays |
| | Poaceae | Triticum | T. aestivum |
| | Fabaceae | Arachis | A. hypogaea |
| | Fabaceae | Vigna | V. angularis |
| | Fabaceae | Glycine | G. max |
| Fiber crops | Malvaceae | Gossypium | Gossypium spp. |
| | Juncaceae | Juncus | J. decipiens |
| | Malvaceae | Hibiscus | H. cannabinus |
| Oil crops | Pedaliaceae | Sesamum | S. indicum |
| | Brassicaceae | Brassica | Brassica spp. |
| Recreational plants | Solanaceae | Nicotiana | N. tabacum |
| | Rubiaceae | Coffea | Coffea spp. |
| | Theaceae | Camellia | C. sinensis |
| | Cannabaceae | Humulus | H. lupulus |
| Spice crops | Piperaceae | Piper | P. nigrum |
| | Zingiberaceae | Curcuma | C. longa |
| | Brassicaceae | Eutrema | E. japonicum |
| Leafy vegetables | Asteraceae | Lactuca | L. sativa |
| | Asteraceae | Glebionis | G. coronaria |
| | Asteraceae | Petasites | P. japonicus |
| | Asteraceae | Cichorium | C. intybus |
| | Apiaceae | Coriandrum | C. sativum (coriander) |
| | Apiaceae | Cryptotaenia | C. canadensis subsp. japonica |
| | Apiaceae | Apium | A. graveolens var. dulce |
| | Apiaceae | Petroselinum | P. crispum |
| | Brassicaceae | Brassica | B. rapa subsp. pekinensis |
| | Brassicaceae | Brassica | B. oleracea var. capitata |
| | Brassicaceae | Brassica | B. oleracea var. gemmifera |
| | Brassicaceae | Brassica | B. oleracea var. italica |
| | Brassicaceae | Brassica | B. oleracea var. botrytis |
| | Brassicaceae | Brassica | B. rapa var. chinensis |
| | Brassicaceae | Brassica | B. rapa var. perviridis |
| | Brassicaceae | Brassica | B. rapa var. nipposinica |
| | Lamiaceae | Ocimum | O. basilicum |
| | Lamiaceae | Perilla | P. frutescens var. crispa |
| | Basellaceae | Basella | B. alba |
| | Malvaceae | Corchorus | C. olitorius |
| | Zingiberaceae | Zingiber | Z. mioga |
| Leafy vegetables | Chenopodiaceae (Amaranthaceae) | Spinacia | S. oleracea |
| | Chenopodiaceae (Amaranthaceae) | Beta | B. vulgaris var. cicla |
| | Liliaceae (Amaryllidaceae) | Allium | A. tuberosum |
| | Liliaceae (Amaryllidaceae) | Allium | A. cepa |
| | Liliaceae (Amaryllidaceae) | Allium | A. sativum |
| | Liliaceae (Amaryllidaceae) | Allium | A. fistulosum |
| | Liliaceae (Amaryllidaceae) | Allium | A. chinense |
| | Liliaceae (Amaryllidaceae) | Allium | A. ampeloprasum |
| | Liliaceae (Asparagaceae) | Asparagus | A. officinalis |
| Root vegetables | Convolvulaceae | Ipomoea | I. batatas |
| | Solanaceae | Solanum | S. tuberosum |
| | Apiaceae | Daucus | D. carota subsp. sativus |
| | Araceae | Colocasia | C. esculenta |
| | Dioscoreaceae | Dioscorea | D. japonica |
| | Zingiberaceae | Zingiber | Z. officinale |
| | Asteraceae | Arctium | A. lappa |
| | Brassicaceae | Brassica | B. rapa var.rapa |
| | Brassicaceae | Raphanus | R. sativus |
| | Liliaceae | Lilium | Lilium spp. |
| | Chenopodiaceae | Beta | B. vulgaris subsp. vulgaris |
| | Nelumbonaceae | Nelumbo | N. nucifera |
| Fruit vegetables | Cucurbitaceae | Cucumis | C. sativus |
| | Cucurbitaceae | Cucumis | C. melo |
| | Cucurbitaceae | Citrullus | C. lanatus |
| | Cucurbitaceae | Cucurbita | Cucurbita spp. |
| | Cucurbitaceae | Cucurbita | C. pepo |
| | Cucurbitaceae | Momordica | M. charantia |
| | Solanaceae | Solanum | S. melongena |
| | Solanaceae | Solanum | S. lycopersicum |
| | Solanaceae | Capsicum | C. annuum (green pepper) |
| | Solanaceae | Capsicum | C. annuum (bell pepper) |
| | Solanaceae | Capsicum | C. annuum (chili pepper) |
| | Solanaceae | Capsicum | C. annuum (shishito pepper) |
| | Fabaceae | Phaseolus | P. vulgaris |
| | Fabaceae | Vicia | V. faba |
| | Fabaceae | Pisum | P. sativum |
| | Rosaceae | Fragaria | Fragaria × ananassa |
| | Malvaceae | Abelmoschus | A. esculentus |
| Trees, Fruit Trees | Rutaceae | Citrus | C. unshiu |
| | Ebenaceae | Diospyros | D. kaki |
| | Rosaceae | Malus | M. domestica |
| | Rosaceae | Pyrus | P. pyrifolia var. culta |
| | Rosaceae | Prunus | P. persica |
| | Rosaceae | Prunus | C. avium |
| | Rosaceae | Rhaphiolepis | R. bibas |
| | Fagaceae | Castanea | C. crenata |
| | Ericaceae | Vaccinium | Vaccinium spp. |
| | Musaceae | Musa | Musa spp. |
| | Lauraceae | Persea | P. americana |
| | Bromeliaceae | Ananas | A. comosus |
| | Anacardiaceae | Mangifera | M. indica |
| | Actinidiaceae | Actinidia | Actinidia spp. |
| | Oleaceae | Olea | O. europaea |
| | Moraceae | Ficus | F. carica |
| | Caricaceae | Carica | C. papaya |
| | Sapindaceae | Litchi | L. chinensis |
| | Passifloraceae | Passiflora | P. edulis |
| | Vitaceae | Vitis | Vitis spp. |
| Flowers | Violaceae | Viola | Viola × wittrockiana |
| | Caryophyllaceae | Dianthus | Dianthus spp. |
| | Tropaeolaceae | Tropaeolum | T. majus |
| | Asteraceae | Chrysanthemum | C. morifolium |
| | Asteraceae | Cosmos | Cosmos spp. |
| | Orchidaceae | Phalaenopsis | Phalaenopsis spp. |
| Medicinal plants | Ginkgoaceae | Ginkgo | G. biloba |
| | Asteraceae | Artemisia | Artemisia spp. |
| | Paeoniaceae | Paeonia | P. lactiflora |
| | Ephedraceae | Ephedra | Ephedra spp. |
| | Apiaceae | Angelica | A. acutiloba |
| | Apiaceae | Cnidium | C. officinale |
| | Apiaceae | Bupleurum | B. stenophyllum |
| | Scrophulariaceae | Rehmannia | R. glutinosa |
| | Rutaceae | Zanthoxylum | Z. piperitum |
| | Fab ace ae | Glycyrrhiza | G. uralensis |
| | Polygonaceae | Rheum | Rheum spp. |
| | Campanulaceae | Platycodon | P. grandiflorus |
| | Saururacea | Houttuynia | H. cordata |
| | Ranunculaceae | Coptis | Coptis spp. |
| | Ranunculaceae | Aconitum | Aconitum spp. |
| | Berberidaceae | Nandina | N. domestica |
| | Papaveraceae | Papaver | P. somniferum |
| | Lamiaceae | Mentha | M. canadensis var. piperascens |
| | Gentianace ae | Gentiana | Gentiana spp. |
| | Gentianace ae | Swertia | S. japonica |
| | Solanaceae | Scopolia | S. japonica |
| | Araceae | Pinellia | P. ternata |
| | Rutaceae | Phellodendron | P. amurense |
| | Orchidaceae | Bletilla | B. striata |
| Trees | Ginkgoaceae | Ginkgo | G. biloba |
| | Rutaceae | Poncirus | P. trifoliata |
| | Rosaceae | Rosa | Rosa spp. |
| | Rosaceae | Cerasus | C. jamasakura |
| | Theaceae | Camellia | C. japonica |
| | Lauraceae | Cinnamomum | C. camphora |
| | Sapindaceae | Acer | A. maximowiczianum |
| | Anacardiaceae | Toxicodendron | T. vernicifluum |
| Trees: Lumber | Cupressaceae | Chamaecyparis | C. obtusa |
| | Cupressaceae | Cryptomeria | C. japonica |
| | Pinaceae | Pinus | P. densiflora |

The culture method for a plant whole body according to the present invention will be explained bellow.

The present invention provides
a culture method for a plant whole body using the aforementioned culture apparatus for a plant whole body, which comprises at least
a step of forming a spacial area capable of accommodating a root system of the plant whole body within the light-shading case by arranging an internal object showing capillary force at least a part of an inner side surface from among an inner surface of the light-shading case holding culturing liquid;
a step of supplying a culturing liquid into the light-shading case before or after the step of forming a spacial area;
a step of growing root parts that absorb a water component and nutrition from the liquid phase in the culturing liquid held within the light-shading case; and
a step of growing root parts that absorb oxygen from the vapor phase in a water component and oxygen present inside the spacial area of the light-shading case.

The main aim of the present invention is to provide a culture method for a plant whole body 50 wherein a root system of the plant whole body 50, in particular, an enlarged area, that is, storage roots, subterranean stems, and the like is placed on a mounting table 30 set on the bottom surface of the light-shading case 11 holding culturing liquid to create an environment suitable for growing a plant whole body 50.

In the present invention, "an environment suitable for growing a plant whole body" means a spacial area that does not require soil, maintains a humidity of 20 to 100% RH, and separately forms a region for "liquid-phase roots" mainly absorbing a water component and nutrition and a region for "vapor-phase roots" mainly absorbing oxygen in the roots of the plant whole body 50 to be cultured. This spacial area contains a water component from the culturing liquid 25 held in the bottom surface of the light-shading case 11, and gas components such as oxygen, nitrogen, carbon dioxide. The gas components can be vented inside and outside the light-shading case 11 via the through hole 16. In addition, the temperature within the spacial area only needs to be within the appropriate temperature range for the plant whole body 50 to be cultured, and since the root system is isolated, albeit incompletely, from the outside air, there are no sudden temperature changes, making it especially suitable for culture. Special temperature control mechanism is not required, but it may be included optionally.

The water component is supplied directly from the culturing liquid 25 held in the bottom surface of the light-shading case 11 and/or is supplied from the culturing liquid 25 that has been sucked up from the bottom surface by capillary action due to continuous pores, which are voids present in the internal objects 31,32 arranged on the inner side surface of the light-shading case 11.

In the light-shading case 11 having internal objects 31,32, the liquid-phase root is immersed in the culturing liquid 25 held in the bottom surface of the light-shading case 11, and the vapor-phase root is not in contact with the culturing liquid 25.

Unlike the ceramic culture method developed by the present inventors [JP H10-150871 A], in the culture method for plant whole body 50 according to the present invention, any root does not require a contact with the inner side surface of the light-shading case 11 having the internal objects 31,32 in order to grow. However, it is not excluded that overgrown roots come into contact with an inner surface of the light-shading case 11.

The culturing liquid 25 held in the light-shading case 11 is water or a nutrient solution containing nutrition required for growing the plant whole body 50 to be cultured, and does not need to be in a fluid state, which is stagnant water lacking dissolved oxygen. Therefore, in the present invention, in order to replenish oxygen, there is no need for a water flow mechanism that flows culturing liquid 25 or an oxygen replenishment mechanism that directly replenishes culturing liquid 25 with oxygen. This is because the culture method according to the present invention sufficiently grows the "vapor-phase root" which mainly absorbs oxygen.

The nutrition required for the growth of the plants is at least essential macroelements such as nitrogen, phosphate, potassium, calcium, magnesium and sulfur, in addition to carbon, hydrogen and oxygen. Furthermore, it includes essential trace elements such as iron, manganese, boron, zinc, molybdenum, copper, chlorine, nickel; and useful elements such as silicon, sodium, and cobalt.

In the culture method for a plant whole body 50 according to the present invention, the culture of the plant whole body 50 can be started from the form of seeds, bulbs or seed potatoes, which can be rooted and germinated in the culture apparatus 10 according to the present invention. Alternatively, it can be started from the form of seedling.

One embodiment of the internal objects 31,32 arranged on the inner surface of the light-shading case is a fired body made of a non-metal inorganic solid material, and contains continuous pores that are voids, and the void rate of the entire fired body is 10 to 80% (vol/vol), the average pore size of the void is 3 µm or less, and the voids with a pore size of 3 µm or less account for 70% or more of the total voids in volume ratio.

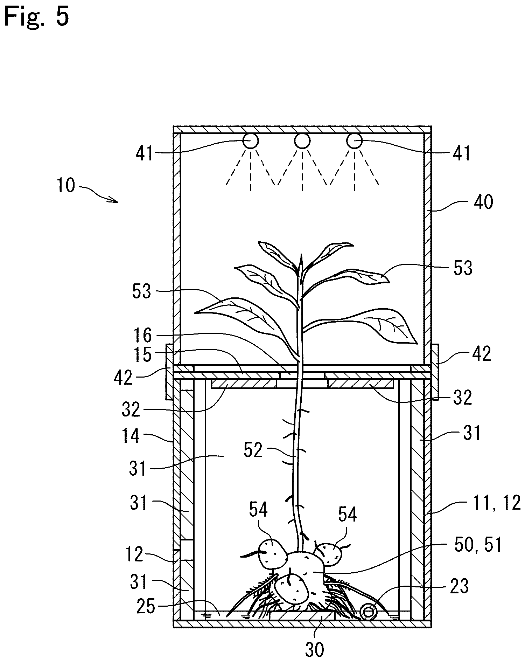

In the second embodiment of the culture apparatus 10 according to the present invention, as shown in Figure 5, a lighting case 40 is mounted on the light-shading case 11 via a positioning frame 42 having a substantially T-shaped cross section. It is preferable to assemble the light-shading case 11, the lighting case 40, and the positioning frame 42 so that they can be separated, if necessary.

A light source 41 provided on the ceiling surface of the lighting case 40 grows the plant whole body 50 by illuminating light toward the lid 15 of the light-shading case 11.

The lighting case 40 is not limited to a rectangular parallelepiped shape, but preferably has a shape that can be stacked on the light-shading case 11, and in addition to the cubic shape, it may have a cylindrical shape with, for example, a semicircular cross section, a trapezoid cross section, an inverted trapezoid cross section, a triangular cross section, a hexagonal cross section. Furthermore, it is even more preferable that the shape of the lighting case 40 is such that other light-shading cases 11 can be stacked on top of each other.

The light source 41 may be provided on, not limited to the ceiling surface of the lighting case 40, but may be set on an inner side surface, and naturally the location, number, and direction of installation can be appropriately selected as necessary. Further, the light source 41 is not limited to a light source having an elongated shape, and naturally a light source that emits light in a spot-like manner or a combination of these may be used.

The light source 41 may be the same as that used in the first embodiment. However, in consideration of the temperature rise within the lighting case 40, it is not necessary to be the same as that used in the first embodiment, and different light sources may be used in combination.

Examples of the light source 41 include, for example, an LED lamp, a fluorescent lamp, a halogen lamp, a sodium lamp, a metal halide lamp, and an ultraviolet lamp.

The second embodiment is substantially the same as the first embodiment of the present invention except for the lighting case 40. Therefore, the same numbers are assigned to the same parts and the description thereof will be omitted.

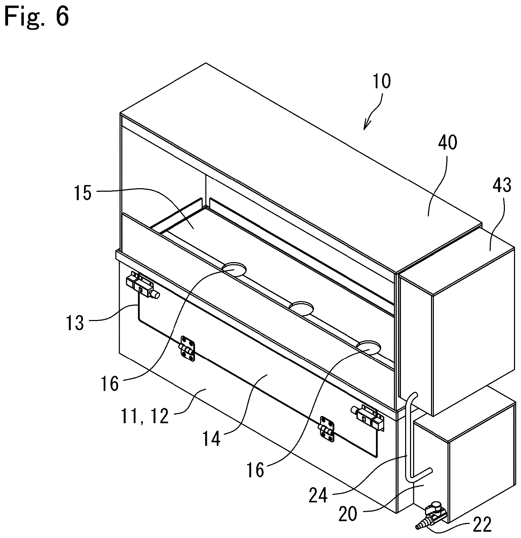

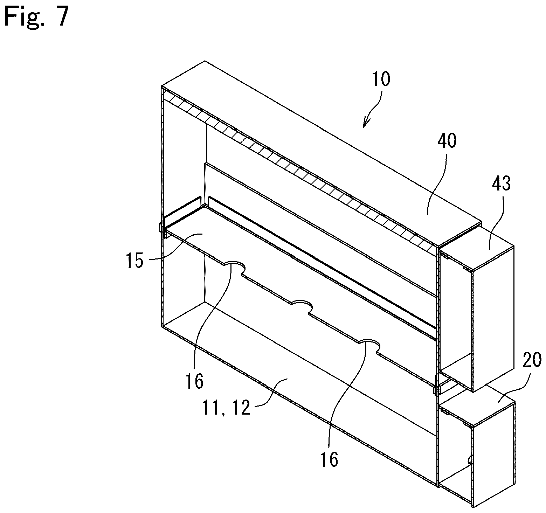

In the third embodiment of the culture apparatus 10 according to the present invention, as shown in Figures 6 to 8, a lighting case 40 is mounted on the light-shading case 11, as in the second embodiment described above.

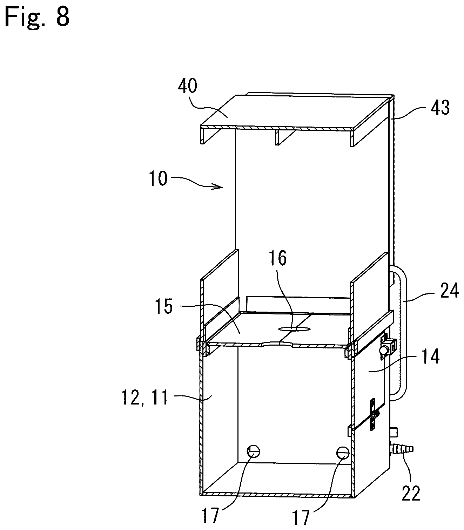

The light-shading case 11 is provided with a door 14 that opens downward, and the lid 15 is provided with three through holes 16 at a predetermined pitch. The light-shading case main body 12 and the water-level adjustment means 20 communicate via two water supply ports 17, 17 (see Figure 8).

A lighting case 40 is mounted on the top surface of the light-shading case 11. A water storage tank 43 that is connected to the water-level adjustment means 20 via a connection hose 24 and supplies the culturing liquid 25 is attached to the lighting case 40. A light source (not shown) is provided on the ceiling surface of the lighting case 40.

The third embodiment is substantially the same as the second embodiment of the present invention. Therefore, the same numbers are assigned to the same parts and the description thereof will be omitted.

Further, in the above embodiment, the temperature is a temperature appropriate for the plant whole body 50 to be grown, and is regulated externally by nature or by a temperature control device. There is no need to attach a temperature control device to the culture apparatus 10 according to the present invention, but it may be included optionally.

The culture apparatus 10 according to the second and third embodiments has an advantage that land can be used effectively by stacking a plurality of the culture apparatus 10, and even a small land can be used.

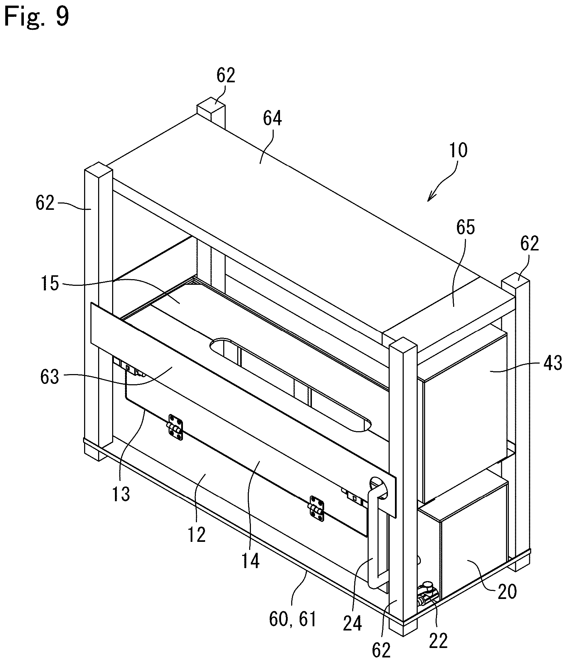

In the fourth embodiment of the culture apparatus 10 according to the present invention, the light-shading case 11 is mounted on a support frame 60, as shown in Figure 9.

The support frame 60 has a lighting unit 64 as a top plate spanning the upper end of supporting pillars 62 erected at the four corners of a rectangular bottom plate 61. The outer peripheral edge of the bottom plate 61 is bent and raised to form a rib in order to increase mechanical strength. Further, a reinforcement plate 63 is spanned between adjacent supporting pillars 62.

The lighting unit 64 has a built-in LED (not shown) as a light source, and also includes a control unit 65. The lighting unit 64 illuminates the light-shading case 11 with light from the built-in LED via a diffuser (not shown) attached to its lower surface. The diffuser uniformizes the amount of light emitted by the LED by diffusely reflecting the light.

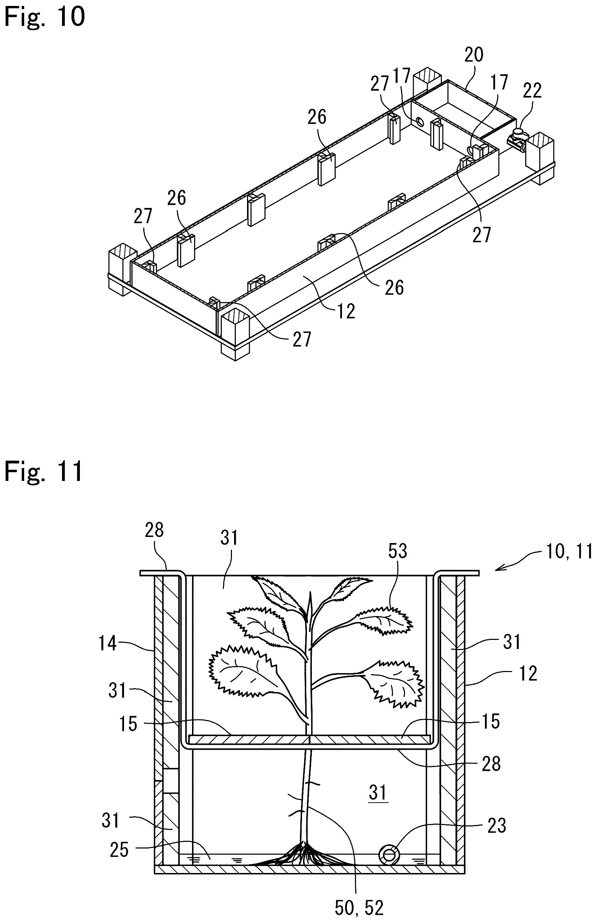

Further, in the fourth embodiment, as shown in Figure 10, a holder 26 having a T-shaped cross section and a holder 27 having an L-shaped cross section are attached to the inner side surface of the light-shading case 11. By inserting an internal object 31 (not shown) through the holder 26 and holder 27, it can be detachably attached.

According to this embodiment, the work of attaching and removing the internal object 31 is simplified, and the workability is improved. For this reason, there is an advantage that replacement and cleaning of the internal object 31 are facilitated, and maintainability is improved. Naturally, the holders 26 and 27 are not limited to being attached to the inner side surface of the light-shading case main body 12, but may also be attached to the ceiling surface of the lid 15. Furthermore, naturally only the holder 26 or only the holder 27 may be attached to the light-shading case 11.

The internal object 31 is not necessarily limited to the inner side surface and the ceiling surface of the light-shading case 11, but may be erected at the center of the bottom surface like a pillar or a partition wall. This arrangement has the advantage that the humidity in the internal space can be maintained more uniformly.

Furthermore, the internal object 31 is not limited to being arranged as a mounting table on the bottom surface of the light-shading case 11, but may be set over the entire bottom surface of the light-shading case 11. The internal object 31 used in this case preferably has not only the desired capillary force but also a water retention capacity capable of supplying the culturing liquid to the whole plant body. Examples of the internal object 31 include paper, nonwoven fabric, foamable resin, and microporous materials. Specific examples of microporous materials include those disclosed in International Publication No. WO2004/101736, for example.

Furthermore, the internal object 31 may be arranged diagonally by leaning against the inner side surface of the light-shading case 11. When the internal object 31 is arranged diagonally, the through hole 16 of the lid 15 is preferably provided along the outer peripheral edge of the lid 15. By arranging the internal objects 31 as described above, it becomes easier to culture carrots, radish, edible burdock, etc., for example.

The same parts are given the same numbers and the explanation will be omitted.

In the fifth embodiment of the culture apparatus 10 according to the present invention, as shown in Figure 11, a plurality of hanging tools 28 formed, for example, with bent wires are spanned at a predetermined pitch opposing edges of the light-shading case main body 12. The lid 15 is formed, for example, by abutting end edges of two pieces of black plastic cardboard against each other and hanging them on the hanging tool 28. Furthermore, notches (not shown) are made at opposing positions of the abutted end surfaces of the plastic cardboard to form through holes.

A plastic cardboard to be used is not limited to black one, may be, for example, ones with white translucency. When a plastic cardboard with white translucency is used, it is preferable to cover its surface with aluminum foil to shield light.

According to this embodiment, since the lid 15 is formed using lightweight plastic cardboard, there is an advantage that the entire culture apparatus can be made lighter. In addition, according to this embodiment, since it is possible to easily form an internal space with an appropriate height depending on the cultured plants, there is an advantage that a wide variety of plants can be cultured by sharing one light-shading case main body 12. Therefore, there is no need to change the shape of the light-shading case 11 for each cultured plant, which has the advantage of convenience.

The same parts are given the same numbers and the explanation will be omitted.

Various embodiments have been described above in detail with reference to the drawings, and various aspects of the present invention will now be described. In the following description, reference numerals are also included as an example.

The culture apparatus for a plant whole body according to the first aspect of the present invention, comprise
a light-shading case 11 that has at least one through hole 16 on its ceiling surface and holds culturing liquid 25; and
internal objects 31,32 showing capillary force arranged on at least a part of an inner side surface from among an inner surface of the light-shading case 11.

The culture apparatus 10 for a plant whole body 50 according to the second aspect is the culture apparatus 10 for a plant whole body 50 according to the first aspect, wherein a water-level adjustment means 20 for adjusting a water level of the culturing liquid 25 is connected to the light-shading case 11.

The culture apparatus 10 for a plant whole body 50 according to the third aspect of the present invention is the culture apparatus 10 for a plant whole body 50 according to the first or second aspect, wherein the light-shading case 11 comprises a light-shading case main body 12 in a form of a box, and a lid 15 that covers an upper opening of the light-shading case main body 12 and is removable.

The culture apparatus 10 for a plant whole body 50 according to the fourth aspect of the present invention is the culture apparatus 10 for a plant whole body 50 according to the third aspect, wherein the lid 15 is suspended by spanning multiple hanging tools 28 that span opposing opening edges of the light-shading case main body 12.

The culture apparatus 10 for a plant whole body 50 according to the fifth aspect of the present invention is the culture apparatus 10 for a plant whole body 50 according to any one of the first to fourth aspects, wherein the through hole 16 may be in a form of a slit-like long hole.

The culture apparatus 10 for a plant whole body 50 according to the sixth aspect is the culture apparatus 10 for a plant whole body 50 according to any one of the first to fifth aspects of the present invention, wherein a door 14 that can be opened and closed is set on at least one side of the light-shading case 11.

The culture apparatus 10 for a plant whole body 50 according to the seventh aspect of the present invention is the culture apparatus 10 for a plant whole body 50 according to any one of the first to sixth aspects, wherein an internal object 31 is arranged on the entire inner side surface of the light-shading case 11.

The culture apparatus 10 for a plant whole body 50 according to the eighth aspect of the present invention is the culture apparatus 10 for a plant whole body 50 according to any one of the first to seventh aspects, wherein another internal object 32 is arranged on the inner surface of the lid 15 of the light-shading case 11 other than an area of the through hole 16.

The culture apparatus 10 for a plant whole body 50 according to the ninth aspect of the present invention is the culture apparatus 10 for a plant whole body 50 according to any one of the first to eighth aspect, wherein another internal object 32 having water retention capacity to supply the culturing liquid 25 to the plant whole body 50 may be laid on the entire bottom surface of the light-shading case 11.

The culture apparatus 10 for a plant whole body 50 according to the tenth aspect of the present invention is the culture apparatus 10 for a plant whole body 50 according to any one of the first to ninth aspects, wherein another internal object 32 may be removably arranged on the light-shading case 11 via at least one holder 26,27 that is attached on at least an inner side surface from among an inner surface of the light-shading case 11.

The culture apparatus10 for a plant whole body 50 according to the eleventh aspect of the present invention is the culture apparatus 10 for a plant whole body 50 according to any one of the first to tenth aspects, wherein another internal object 32 may be arranged diagonally against the inner side surface of the light-shading case 11.

The culture apparatus 10 for a plant whole body 50 according to the twelfth aspect of the present invention is the culture apparatus 10 for a plant whole body 50 according to any one of the first to eleventh aspects, wherein a mounting table 30 that mounts the plant whole body 50 may be set on a bottom surface of the light-shading case 11.

The culture apparatus10 for a plant whole body 50 according to the thirteenth aspect of the present invention is the culture apparatus 10 for a plant whole body 50 according to the twelfth aspect, wherein the mounting table 30 may be made of the same material for the internal objects 31,32.

The culture apparatus 10 for a plant whole body 50 according to the fourteenth aspect of the present invention is the culture apparatus 10 for a plant whole body 50 according to the twelfth aspects, wherein the mounting table 30 may be made up of a drain board.

The culture apparatus 10 for a plant whole body 50 according to the fifteenth aspect of the present invention is the culture apparatus 10 for a plant whole body 50 according to any one of the first to fourteenth aspects, wherein the internal objects 31,32 is preferably a fired body made of a non-metal inorganic solid material, contains continuous pores that are voids, and the void rate of the entire fired body is 10 to 80% (vol/vol), the average pore size of the void is 3 µm or less, and the voids with a pore size of 3 µm or less account for 70% or more of the total voids in volume ratio.

The culture apparatus 10 for a plant whole body 50 according to the sixteenth aspect of the present invention is the culture apparatus 10 for a plant whole body 50 according to any one of the first to fifteenth aspects, wherein a lighting case 40 provided with a light source 41 illuminating light to a top surface of the light-shading case 11 may be stacked on the light-shading case 11.

The culture apparatus 10 for a plant whole body 50 according to the seventeenth aspect of the present invention is the culture apparatus 10 for a plant whole body 50 according to any one of the first to fifteenth aspects, wherein a lighting unit 64 provided with a light source illuminating light to a top surface of the light-shading case 11 is set above the light-shading case 11.

The culture method for a plant whole body 50 according to the eighteenth aspect is a culture method for a plant whole body 50 using the culture apparatus 10 for a plant whole body 50 according to any one of the first to seventeenth aspects, which comprises at least
a step of forming a spacial area capable of accommodating a root system of the plant whole body 50 within the light-shading case 11 by arranging internal objects 31,32 showing capillary force on at least a part of an inner side surface from among an inner surface of the light-shading case 11 holding culturing liquid 25;
a step of supplying a culturing liquid 25 into the light-shading case 11 before or after the step of forming a spacial area;
a step of growing root parts that absorb a water component and nutrition from the liquid phase in the culturing liquid 25 held within the light-shading case 11; and
a step of growing root parts that absorb oxygen from the vapor phase in a water component and oxygen present inside the spacial area of the light-shading case 11.

The culture method for a plant whole body 50 according to the nineteenth aspect of the present invention is the culture method for a plant whole body 50 according to the eighteenth aspect, wherein the plant whole body 50 is placed on a mounting table 30 which is set on the bottom surface of the light-shading case 11 to culture.

The culture method for a plant whole body 50 according to the twentieth aspect is the culture method for a plant whole body 50 according to the eighteenth or nineteenth of the present invention, wherein the culturing liquid 25 held in the light-shading case 11 is water or a nutrient solution containing nutrition required for the growth of the plant whole body 50 to be cultured, and is stagnant water.

The culture method for a plant whole body 50 according to the twenty-first aspect is the culture method for a plant whole body 50 according to the twentieth aspect, wherein the nutrition is an essential macroelement selected from the group consisting of nitrogen, phosphate, potassium, calcium, magnesium and sulfur; an essential trace element selected from the group consisting of iron, manganese, boron, zinc, molybdenum, copper, chlorine, nickel; or an useful element selected from the group consisting of silicon, sodium, cobalt.

### [Examples]

The content of the present invention will be explained in more detail by showing examples below, but these examples are for the purpose of showing some embodiments of the present invention and explaining the present invention, are not intended to limit the present invention. Variations of these embodiments will readily occur to those skilled in the art, and the scope of the present invention is defined by the claims appended below and variations thereof.

### Example 1

### (1) Culture apparatus

The present invention targets as a plant whole body, a plant that has an enlarged root system. For this reason, the light-shading case of the culture apparatus needs to have a shape, size, and weight that can support the plants to be grown and accommodate the enlarged root system. Therefore, the culture apparatus for a plant whole body relating to Example 1 is, as shown in Figure 9, composed of a light-shading case having a length of 90 cm, a width of 30 cm and a height of 30.5 cm; and a light source illuminating a light to the plant to be cultured.

The removable lid that covers the light-shading case main body has a through hole consisting of a long hole with a width of 5 cm and a length of 66 cm along its longitudinal center line in order to support the plant. After the potato stem grew and passed through the through hole, except for the part of the through hole through which the stem passed, the other parts were closed with light-shading tape.

The light-shading case relating to Example 1 is not provided with a door.

Internal objects having a width of 18.0 cm, a height of 30.8 cm, and a thickness of 1.0 cm were attached and integrated with the inner side surface of the light-shading case and the ceiling surface of the lid, with dimensions adjusted as appropriate. The details of the functions and characteristics of internal objects will be described later.

Mounting tables were set on three locations in the bottom surface of the light-shading case, located directly below the through hole, at a predetermined pitch. The mounting table used was the internal object described above with dimensions adjusted as appropriate.

The height of the mounting table was adjusted by increasing the number of internal objects as necessary.

### (2) Light source

Three LED lamps (6000K (Kelvin)) were provided in parallel at a height of approximately 35 cm from the top of the light-shading case and were lit from 7:00 to 19:00. Initially, the interior lights were turned on 24 hours a day, but from Day 23 of the test, they were switched to being turned on 12 hours a day from 7:00 to 19:00.

The photon flux density irradiated onto the top surface of the lid was measured using a measuring instrument (MQ-100, manufactured by Apogee). The measurement results are shown in Figure 10. The unit of photon flux density is µmol/m²/s.

The maximum photon flux density was 111 (µmol/m²/s), and the minimum photon flux density was 53 (µmol/m²/s).

The wavelength distribution contained in the light source was measured with a wavelength distribution measuring device (Gospectro manufactured by Goyalab), and a monitor showing the measurement results of the wavelength distribution measuring device was photographed. The photographic results are shown in Figure 11. The horizontal axis is the wavelength (unit: nm), and the vertical axis is the spectral irradiance (unit: mW/m²/nm) indicating the amount of energy.

From the measurement results, it was found that the spectral irradiance reached its maximum when the wavelength was 451 nm, and the maximum spectral irradiance was 393 mW/m²/nm.

### (3) Cultured plants

Three potatoes treated with chemicals to prevent mold were placed on a mounting table. In order to improve the efficiency of the work, pre-sprouted potatoes were used as seed potatoes.

### (4) Culturing liquid

Water was used as culturing liquid until the three seed potatoes took root. In that case, the water level of the culturing liquid was set to exceed the surface of the mounting table set at the bottom surface of the light-shading case and to a point where the lower part of the seed potato was slightly submerged.

After rooting, the culturing liquid was changed to a nutrient solution, and a total of two internal objects were stacked to form a mounting table to prevent the seed potatoes from rotting. Adjustment was made so that the lower surface of the seed potato and the level of the culturing liquid were approximately the same. The components and concentration of the nutrient solution were adjusted according to the growth level of the potatoes.

### (5) Internal object

As a material for the internal object made of the firing material used in the present invention, Mikawa Pottery tile clay R2-6 was used. Table 2 shows the results of quantitative analysis of Mikawa Pottery tile clay R2-6 (conducted at Aichi Industrial Science and Technology Center).

**[Table 2]**

| Quantitative Analysis | | | | | | | (Content: %) | |
|---|---|---|---|---|---|---|---|---|
| SiO₂ | Al₂O₃ | Fe₂O ₃ | TiO₂ | CaO | MgO | Na₂O | K₂O | LOI |
| 67.4 | 19.2 | 3.32 | 0.56 | 0.37 | 0.56 | 0.62 | 2.34 | 5.62 |

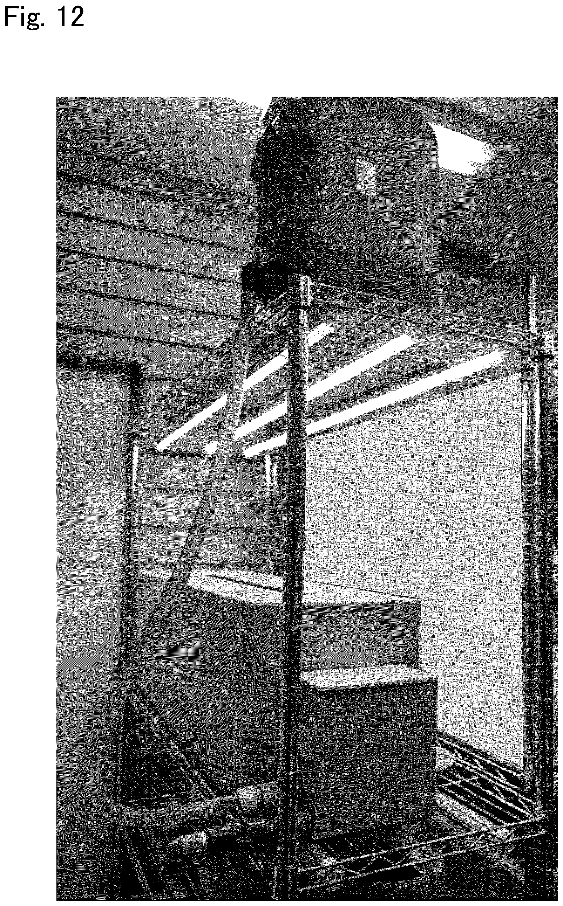

In Mikawayaki pottery (Marushun Ceramic Co., Ltd.), a microporous firing material (Clay R2-6 for pottery tiles) was molded using a regular mold for a flower pot, and it was fired in a gas kiln under the conditions: firing at 1090°C × 13 hours/cooling 30 hours in the gas kiln to manufacture internal objects made of the microporous fired body. The manufacturing conditions and sizes for the manufactured internal objects were shown in Table 3. An electron micrograph of a cross section of this microporous fired body is illustrated in Figure 12.

**[Table 3]**

| Pottery | Material | Firing Temperature | Firing time/Method | Type of Kiln | Quantity | Horizontal length (cm) | Vertical length (cm) | Thickness (cm) | Weight (9) |
|---|---|---|---|---|---|---|---|---|---|
| Marushun Cera. | Clay for Pottery Tiles R26 | 1090°C | 13h-Firing/30h-Cooling in a kiln | Gas Kiln | 90 | 18.0 | 30.8 | 1.0 | 1,360 |

The void rate and void composition of the internal objects made of a microporous fired body were calculated for each sample using the following procedure using a filtration type centrifugation method.
(1) A target microporous fired body sample is crushed to obtain a sample piece (5 to 8 mm square, approximately 0.5 g) that is sized to be caught in the middle of a microcentrifuge tube.
(2) The sample piece is dried to a constant weight, the dry weight Ws is measured, and the dry weight Wt of the microcentrifuge tube is measured.
(3) The sample piece is soaked in distilled water for 24 hours.
(4) The sample piece is taken out, the water adhering to the surface is lightly wiped off with tissue paper. The wet weight W of the small sample is measured. The dry weight Ws of the sample piece is subtracted from the wet weight W to determine the total water absorption weight W0 (=W-Ws) of the sample piece.
(5) This sample piece is put into a microcentrifuge tube. At this time, make sure that the sample piece is caught in the middle of the tube and does not touch the bottom.
(6) After centrifuging at 3,000 rpm for 5 minutes, the sample piece is taken out, and the weight Wa of the microcentrifuge tube with water held at the bottom is measured. The weight Wt of the microcentrifuge tube is subtracted from this weight to determine the amount of water removed at 3,000 rpm W3000 (=Wa-Wt).
(7) The sample piece is put again into the microcentrifuge tube, which still retains the held water, and centrifuged at 5,500 rpm for 5 minutes. After that, the sample piece is taken out, and the weight Wb of the microcentrifuge tube with water held at the bottom is measured. The weight Wa of the microcentrifuge tube with water held at the bottom is subtracted from this weight to determine the amount of water removed at 5,500 rpm W5500 (=Wb-Wa).
(8) The sample piece is put again into the microcentrifuge tube, which still retains the held water, and centrifuged at 8,000 rpm for 5 minutes. After that, the sample piece is taken out, and the weight Wc of the microcentrifuge tube with water held at the bottom is measured. The weight Wb of the microcentrifuge tube with water held at the bottom is subtracted from this weight to determine the amount of water removed at 8,000 rpm W8000 (=Wc-Wb).
(8) The sample piece is put again into the microcentrifuge tube, which still retains the held water, and centrifuged at 10,500 rpm for 5 minutes. After that, the sample piece is taken out, and the weight Wd of the microcentrifuge tube with water held at the bottom is measured. The weight Wc of the microcentrifuge tube with water held at the bottom is subtracted from this weight to determine the amount of water removed at 10,500 rpm W10500 (=Wd-Wc).
(9) Finally, the total weight of removed water is subtracted from the total water absorption weight W0 to determine the remaining water weight Wr (=W0-Wa-Wb-Wc-Wd) that was not removed even by centrifugation at 10,500 rpm.
(10) The above measurements are performed on nine sample pieces, and the void rate and void composition of the target microporous fired body sample are calculated using the sum of each measurement value. Table 4 shows the results.

**[Table 4]**

| No. | Before cetrifugation | | | | After 3,000 rpm centrifugation | | After 5,500 rpm centrifugation | | After 8,000 rpm centrifugation | | After10,500 rpm centrifugation | | End of cetrifugation |
|---|---|---|---|---|---|---|---|---|---|---|---|---|---|
| | Weight of Dry Sample (Ws g) | Total Weight of Wet Sample (W g) | Total Weight of Adsorbed Water (W0 g) | Weight of Tube (Wt g) | Weight of Tube + Water (Wa g) | Weight of Removed Water (W3000 g) | Weight of Tube + Water (Wb g) | Weight of Removed Water (W5500 g) | Weight of Tube + Water (Wcg) | Weight of Removed Water (W8000 g) | Weight of Tube + Water (Wd g) | Weight of Removed Water (W105000 g) | Weight of Remaining Water (Wr g) |
| 1 | 0.4007 | 0.4640 | 0.0633 | 0.9369 | 0.9431 | 0.0062 | 0.9663 | 0.0222 | 0.9748 | 0.0096 | 0.9774 | 0.0026 | 0.0128 |
| 2 | 0.4488 | 0.5063 | 0.0575 | 0.9369 | 0.9399 | 0.0040 | 0.9633 | 0.0234 | 0.9760 | 0.0117 | 0.9784 | 0.0034 | 0.0160 |
| 3 | 0.4284 | 0.4830 | 0.0646 | 0.9301 | 0.9329 | 0.0028 | 0.9668 | 0.0229 | 0.9684 | 0.0126 | 0.9706 | 0.0021 | 0.0142 |
| 4 | 0.4630 | 0.5195 | 0.0666 | 0.9170 | 0.9196 | 0.0026 | 0.9466 | 0.0260 | 0.9640 | 0.0084 | 0.9676 | 0.0036 | 0.0169 |
| 6 | 0.4631 | 0.5120 | 0.0689 | 0.9396 | 0.9466 | 0.0070 | 0.9732 | 0.0266 | 0.9823 | 0.0091 | 0.9843 | 0.0020 | 0.0142 |
| 6 | 0.6100 | 0.6865 | 0.0765 | 0.9466 | 0.9636 | 0.0071 | 0.9860 | 0.0314 | 0.9994 | 0.0144 | 1.0047 | 0.0063 | 0.0183 |
| 7 | 0.3917 | 0.4405 | 0.0488 | 0.9198 | 0.9224 | 0.0026 | 0.9426 | 0.0201 | 0.9535 | 0.0110 | 0.9662 | 0.0017 | 0.0134 |
| 8 | 0.4663 | 0.5258 | 0.0696 | 0.9296 | 0.9331 | 0.0036 | 0.9676 | 0.0244 | 0.9682 | 0.0107 | 0.9736 | 0.0063 | 0.0166 |
| 9 | 0.3265 | 0.3686 | 0.0421 | 0.9263 | 0.9296 | 0.0042 | 0.9492 | 0.0197 | 0.9644 | 0.0062 | 0.9573 | 0.0029 | 0.0101 |
| SUM | 3.9886 | 4.4962 | 0.5077 | 8.3807 | --- | 0.0400 | --- | 0.2167 | --- | 0.0926 | --- | 0.0289 | 0.1295 |

The void composition was calculated based on a correspondence table of centrifugal force and void diameter shown in Table 5, regarding the distance from the rotational center of the centrifugal device to the free water surface as a radius of rotation.

Here, the free water surface is regarded as the center between the upper end and the lower end of the microcentrifugal tube, and it was assumed that water comes out from pores having a void diameter of 3.5 µm or larger at 3,000 rpm, from pores having a void diameter of 1.0 µm or larger at 5,500 rpm, from pores having a void diameter of 0.5 µm or larger at 8,000 rpm, from pores having a void diameter of 0.3 µm or larger at 10,500 rpm, respectively to calculate the void composition. Table 6 summarizes the results.

Furthermore, the void rate for the entire fired body, which is this microporous fired body, was about 13%.

**[Table 5]**

| Rotational Number (rpm) | Rotational Radius (cm) | Centrifugal Force (g) | pF Value | Void diameter (µm) |
|---|---|---|---|---|
| 14,000 | 7.9719 | 17,500.00 | 4.24 | 0.1695 |
| 13,500 | 7.9719 | 16,272.32 | 4.21 | 0.1823 |
| 13,000 | 7.9719 | 15,089.29 | 4.18 | 0.1966 |
| 12,500 | 7.9719 | 13,950.89 | 4.14 | 0.2126 |
| 12,000 | 7.9719 | 12,857.14 | 4.11 | 0.2307 |
| 11,500 | 7.9719 | 11,808.04 | 4.07 | 0.2512 |
| 11,000 | 7.9719 | 10,803.57 | 4.03 | 0.2746 |
| 10,500 | 7.9719 | 9,843.75 | 3.99 | 0.3013 |
| 10,000 | 7.9719 | 8,928.57 | 3.95 | 0.3322 |
| 9,500 | 7.9719 | 8,058.04 | 3.91 | 0.3681 |
| 9,000 | 7.9719 | 7,232.14 | 3.86 | 0.4102 |
| 8,500 | 7.9719 | 6,450.89 | 3.81 | 0.4598 |
| 8,000 | 7.9719 | 5,714.29 | 3.76 | 0.5191 |
| 7,500 | 7.9719 | 5,022.32 | 3.70 | 0.5906 |
| 7,000 | 7.9719 | 4,375.00 | 3.64 | 0.6780 |
| 6,500 | 7.9719 | 3,772.32 | 3.58 | 0.7863 |
| 6,000 | 7.9719 | 3,214.29 | 3.51 | 0.9229 |
| 5,500 | 7.9719 | 2,700.89 | 3.43 | 1.0983 |
| 5,000 | 7.9719 | 2,232.14 | 3.35 | 1.3289 |
| 4,500 | 7.9719 | 1,808.04 | 3.26 | 1.6407 |
| 4,000 | 7.9719 | 1,428.57 | 3.15 | 2.0765 |
| 3,500 | 7.9719 | 1,093.75 | 3.04 | 2.7121 |
| 3,000 | 7.9719 | 803.57 | 2.91 | 3.6915 |
| 2,500 | 7.9719 | 558.04 | 2.75 | 5.3157 |
| 2,000 | 7.9719 | 357.14 | 2.55 | 8.3058 |
| 1,500 | 7.9719 | 200.89 | 2.30 | 14.7659 |
| 1,000 | 7.9719 | 89.29 | 1.95 | 33.2232 |

**[Table 6]**

| Void diameter (µm) | 0.3 or less | 0.3∼0.5 | 0.5∼1.0 | 1.0∼3.5 | 3.5 or more | SUM |
|---|---|---|---|---|---|---|
| cm 3 | 0.1295 | 0.0289 | 0.0926 | 0.2167 | 0.0400 | 0.5077 |
| % | 25.51 | 5.69 | 18.24 | 42.68 | 7.88 | 100.00 |

As a result of electron microscopic observation and measurement of void composition, it was found that continuous pores with a pore size of 0.2 to 5 µm (average pore size 3 pm) were formed on the surface of the internal objects made of this microporous fired body.

An internal object can be formed by wrapping not only a fired material but also a fibrous sheet such as paper, woven fabric, or non-woven fabric around a wire framework shaped like a plate.

An internal object can also be formed by compacting fibrous materials such as pulp and lint into a plate shape.

As an internal object, a microporous object in which specific continuous pores exist can be formed using a resin material, similar to the above-mentioned fired material.

### (6) Environment and time period for culturing potatoes

The culture apparatus consisting of the light-shading case described above was installed indoors at a room temperature of 20°C and a humidity of 50%, and was used for 116 days from November 23, 2022 to March 19, 2023, as shown in Table 13. After culturing, daughter tubers were harvested.

### (7) Test results

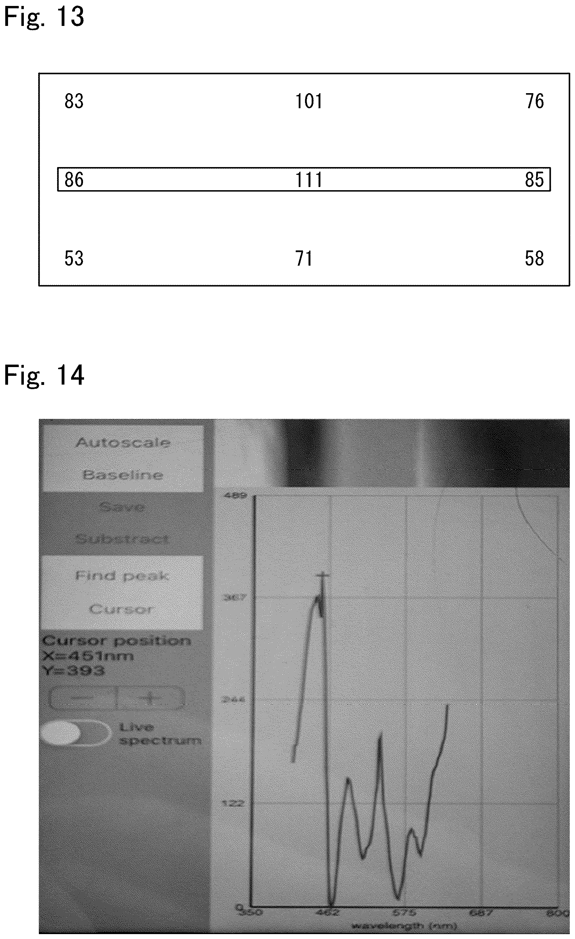

On Day 15 after the start of culture, as shown in Figure 14, many fluff-like lateral roots were growing on the surface of the liquid phase roots located in the air between the seed potato and the stem. The fluff-like lateral roots were determined to be vapor-phase roots because their tips were not submerged in water. The liquid-phase roots grew longer underwater, and the above-ground part continued to grow without dying.

On Day 27, the aboveground part passed through the through hole, and blooming was confirmed on Day 44. Formation of a fruit was confirmed on Day 50, and it was also confirmed that daughter tubers had formed on the seed potato.

On Day 80, the daughter tubers enlarged to a size exceeding that of the seed potato, and on Day 116, the daughter tubers were harvested. The weights of daughter tubers were 163.4g and 89.1g.

Potatoes grown using the culture apparatus of the present invention grew well, and daughter tubers appeared from seed potatoes. Note that during the culturing period, most of the liquid-phase roots and vapor-phase roots of potatoes grown using the culture apparatus of the present invention did not come into contact with the inner surface of the light-shading case. The potatoes taken out were in good condition with no algae attached.

As demonstrated from Example 1, according to the culture apparatus and culture method of the present invention, vapor-phase roots can be grown above the water surface using only stagnant water without using complicated water circulation equipment for cultured plants. At the same time, it was confirmed that liquid-phase roots can be grown in water.

That is, according to the present invention, it was possible to reproduce the environment of the aggregate structure of soil, which has been thought to affect the good growth of plants, without using soil.

Furthermore, since the present invention does not use soil, the roots of the plants are in a clean state with no soil or algae attached at the end of culture. Therefore, they can be shipped as is without complicated cleaning work.

### Example 2

### (1) Culture apparatus

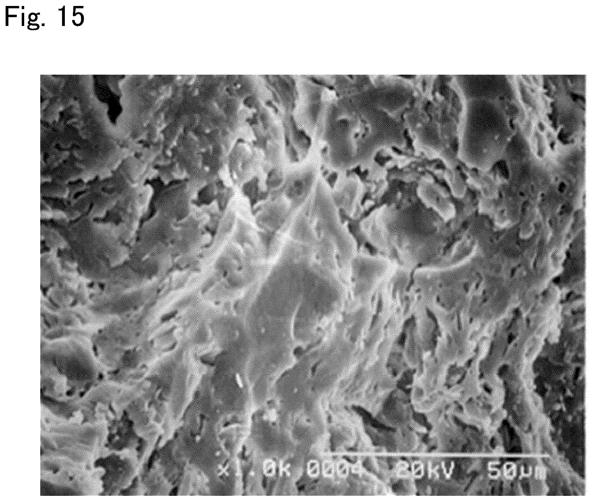

In Example 2, as shown in Figure 15, culture apparatus consisting of a light-shading case similar to that in Example 1 was used.

On the bottom surface of the light-shading case, mounting tables consisting of one internal object (thickness: 1.0 cm) were set at four locations at a predetermined pitch on the bottom surface located directly below the through hole. The mounting table used was the internal object described above with dimensions adjusted as appropriate.

After seed potatoes sufficiently rooted and grown, the height of the mounting table was raised by setting a fired body shaped like a flower pot made of the same material as the internal object upside down and using it as a mounting table.

### (2) Light source

Three LED lamps identical to those in Example 1 were provided in parallel and turned on for 12 hours from 7:00 to 19:00. The interior lights were turned on for 10 hours from 8:00 to 18:00.

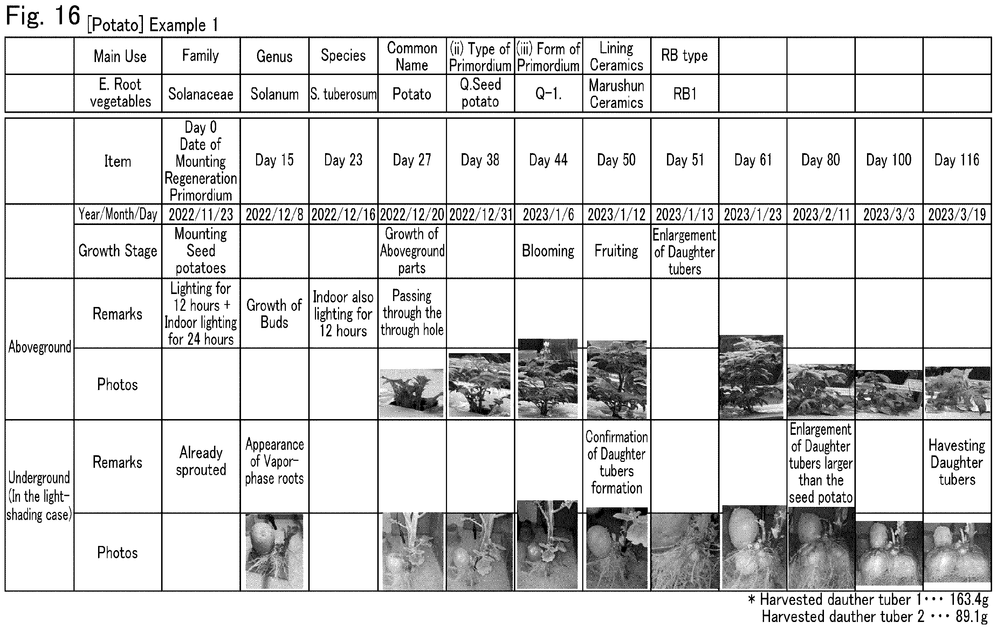

The photon flux density irradiated onto the top surface of the lid was measured using a measuring instrument (MQ-100, manufactured by Apogee). The unit of photon flux density is µmol/m²/s. The measurement results are shown in Figure 16.

The maximum photon flux density was 229 (µmol/m²/s), and the minimum photon flux density was 134 (µmol/m²/s).

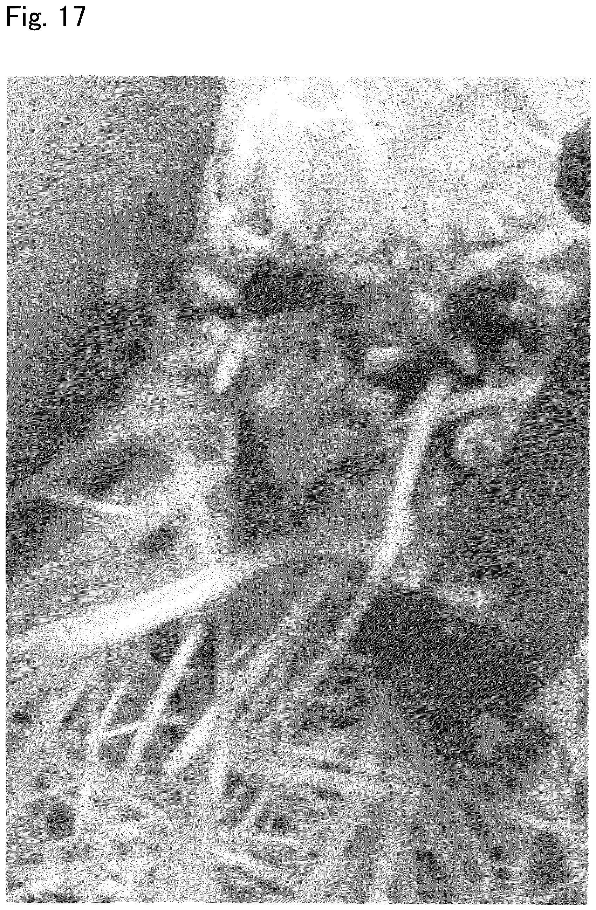

The wavelength distribution contained in the light source was measured with a wavelength distribution measuring device (Gospectro manufactured by Goyalab), and a monitor showing the measurement results of the wavelength distribution measuring device was photographed. The photographic results are shown in Figure 17. The horizontal axis is the wavelength (unit: nm), and the vertical axis is the spectral irradiance (unit: mW/m²/nm) indicating the amount of energy.

From the measurement results, it was found that the spectral irradiance was maximum when the wavelength was 428 nm, and the maximum spectral irradiance was 198 mW/m²/nm.

### (3) Cultured plants

Four potatoes treated with chemicals to prevent mold were placed on a mounting table. In order to improve the efficiency of the work, pre-sprouted potatoes were used as seed potatoes.

### (4) Culturing liquid

Water was supplied as a culturing liquid until the four seed potatoes took root. The water level of the culturing liquid was set to a depth (2 cm) that exceeded the surface of the mounting table set at the bottom surface of the light-shading case and slightly submerged the lower part of the seed potato.

After rooting, the culturing liquid was changed to a nutrient solution. After sufficient rooting, in order to prevent the seed potatoes from rotting, a pot-shaped fired body made of the same material as the internal object was turned upside down and set as a mounting table (height: 7 cm). However, the liquid phase roots were fully immersed in the nutrient solution.

The components and concentration of the nutrient solution were adjusted according to the growth level of the potatoes.

### (5) Internal object

The internal objects according to Example 2 are the same as those in Example 1, so a description thereof will be omitted.

### (6) Environment and time period for culturing Potatoes

A culture apparatus consisting of the light-shading case described above was installed indoors at a room temperature of 20°C and a humidity of 50%, and culture started on November 8, 2022, as shown in Table 18. The culture test is still ongoing as of April 28, 2023.

### (7) Test results

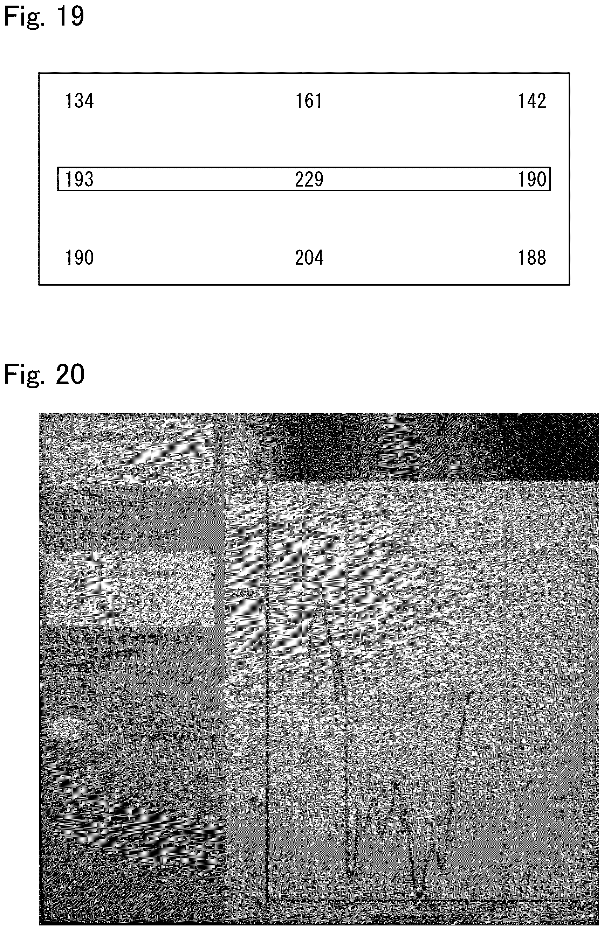

Rooting occurs on Day 6 after the start of culture, and on Day 12, as shown in Figure 19, the liquid-phase roots appeared from the seed potato elongate their tips into the water, and the surface located in the air had many fluff-like lateral roots appeared. The fluff-like lateral roots were determined to be vapor-phase roots because their tips were not submerged in water. On Day 22, the aboveground part passed through the through hole, and in the aboveground part, leaves expanded above the surface of the light-shading case on Day 28. Stolons appeared on Day 42, and the through hole was closed with light-shading tape on Day 63. Blooming was confirmed on Day 100, and it was also confirmed that daughter tubers formed.

By using the culture apparatus according to the present invention, cultured potatoes grew well and daughter tubers were appeared from seed potatoes. The liquid-phase roots of potatoes grown using the culture apparatus of the present invention grew longer to the internal object arranged on the inner side surface of the light-shading case.

### Example 3

### (Turmeric)

A light-shading case (RB1 type) having the same shape as in Example 1 was installed in a room set at a temperature of 22°C, and a humidity of 60%. Three LED lamps (6000K (Kelvin)) were provided above the light-shading case, and the lights were turned on for 14 hours for culture.

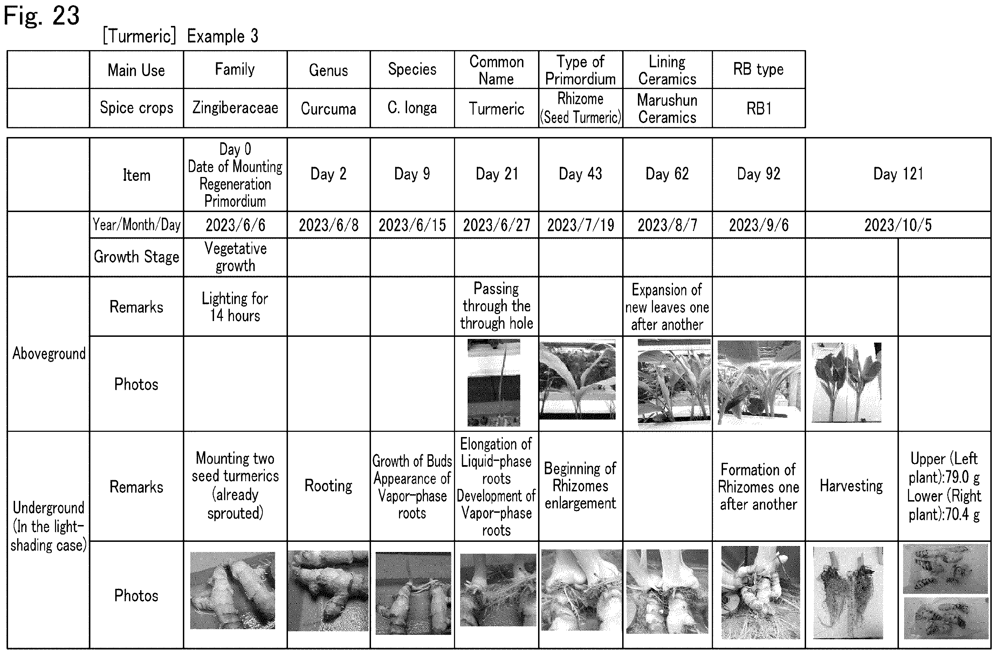

As shown in Figure 23, on June 6, 2023, two sprouted seed turmerics were placed on a ceramic plate set on the bottom surface of an RB1 light-shading case, and the roots were shaded from light using a lid. Rooting occurred on Day 2 from the start date, and on Day 9, buds grew and vapor-phase roots appeared. On Day 21, the terrestrial parts passed through the through hole. The rhizome started to enlarge on Day 43, and new leaves expanded on Day 62. The rhizome formed on Day 92 continued to enlarge. Harvested on Day 121. Of the two turmeric plants that were harvested, the plant on the left weighed a total of 79.0 g, and the plant on the right weighed a total of 70.4 g.

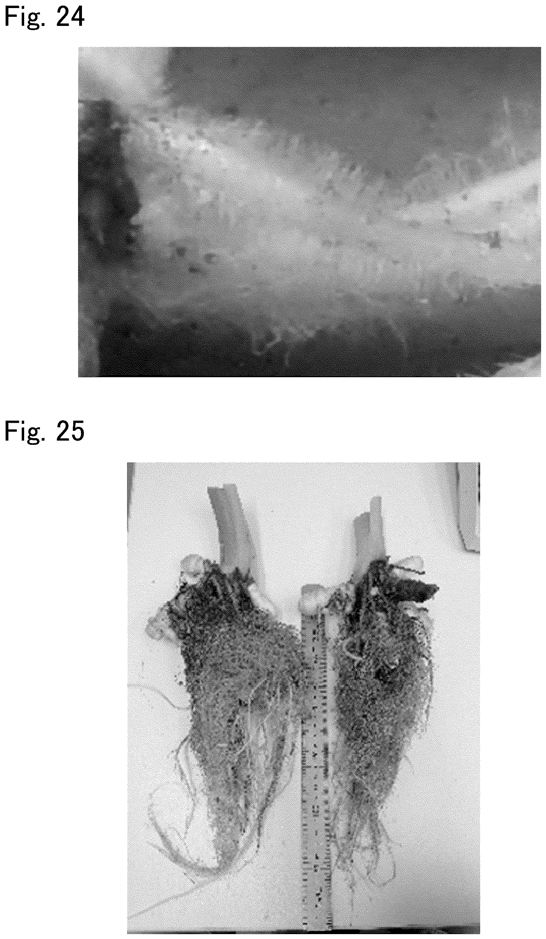

For reference, Figure 24 shows an enlarged view of the vapor-phase roots that appeared on Day 21, and Figure 25 shows an enlarged view of the roots of turmeric on Day 121.

### Example 4

### (Ginger)

A light-shading case (RB1 type) having the same shape as in Example 1 was installed in a room set at a temperature of 22°C, and a humidity of 60%. Three LED lamps (6000K (Kelvin)) were provided above the light-shading case, and the lights were turned on for 14 hours for culture.

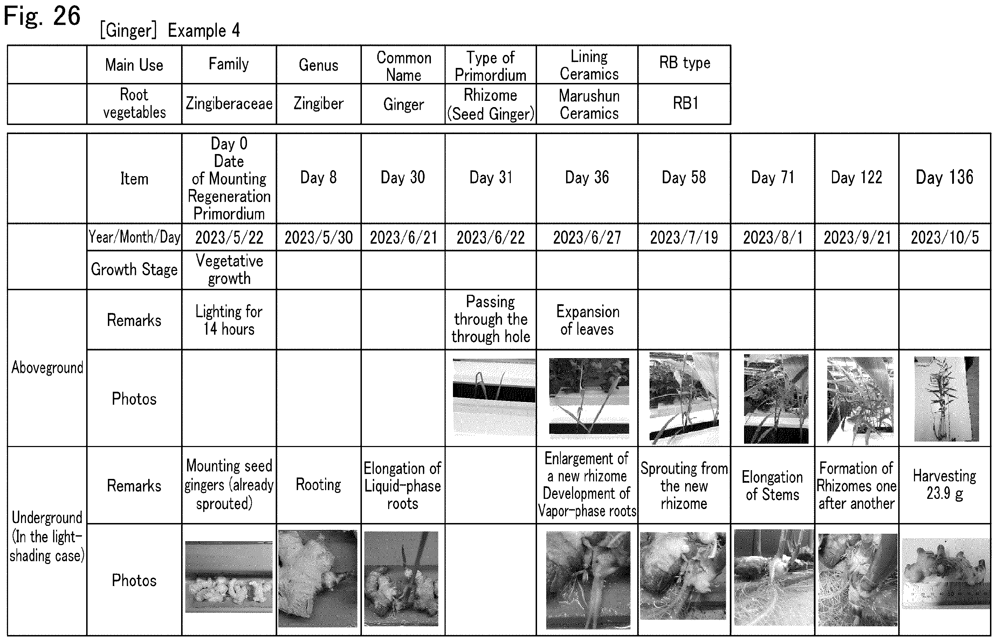

As shown in Figure 26, on May 22, 2023, sprouted seed gingers were placed on a ceramic plate set on the bottom surface of an RB1 light-shading case, and the roots were shaded from light using a lid. Rooting occurred on Day 8 from the start date, and on Day 30, liquid-phase roots elongated. On Day 31, leaves passed through the through hole, and vapor-phase roots developed. On Day 58, budding sprouted from a new rhizome. Stems elongated on Day 71, and a new rhizome formed on Day 122. Harvested on Day 136. The harvested gingers weighted 23.9 g.

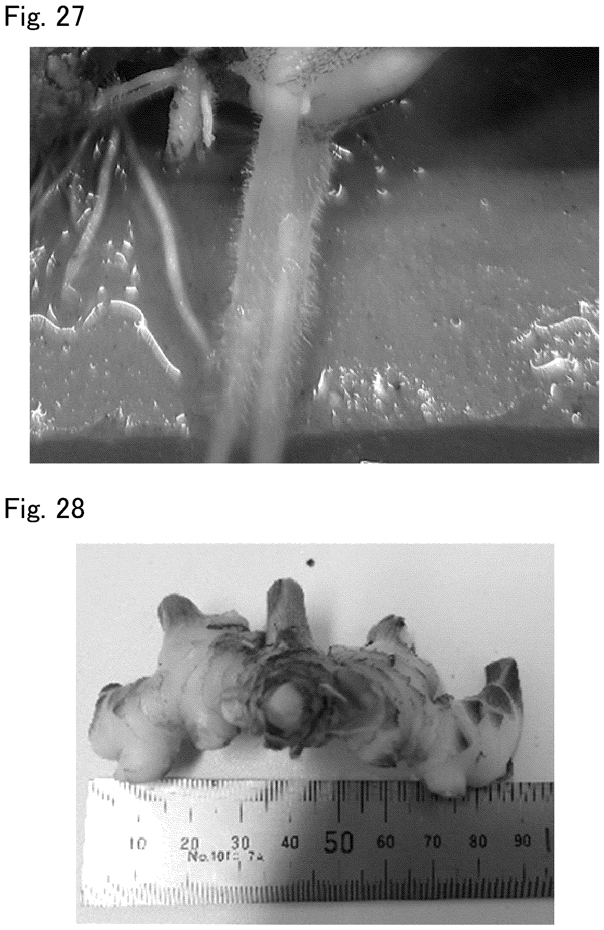

For reference, Figure 27 shows an enlarged view of the developed vapor-phase roots observed on Day 36, and Figure 28 shows an enlarged view of the roots of the ginger harvested on Day 136.

### Example 5

### (Corn)

Roots of a corn seedling purchased in a pot on April 26, 2023 were washed with water to remove soil. An RB1 type box was installed in a culturing box installed in a research building set at a temperature of 25°C. The inside of the culturing box was equipped with a ventilation fan, and a high-pressure sodium lamp (FEC Sunlux Ace NH360LS, manufactured by Iwasaki Electric Co., Ltd.) was lit for 12 hours as an illuminating light.

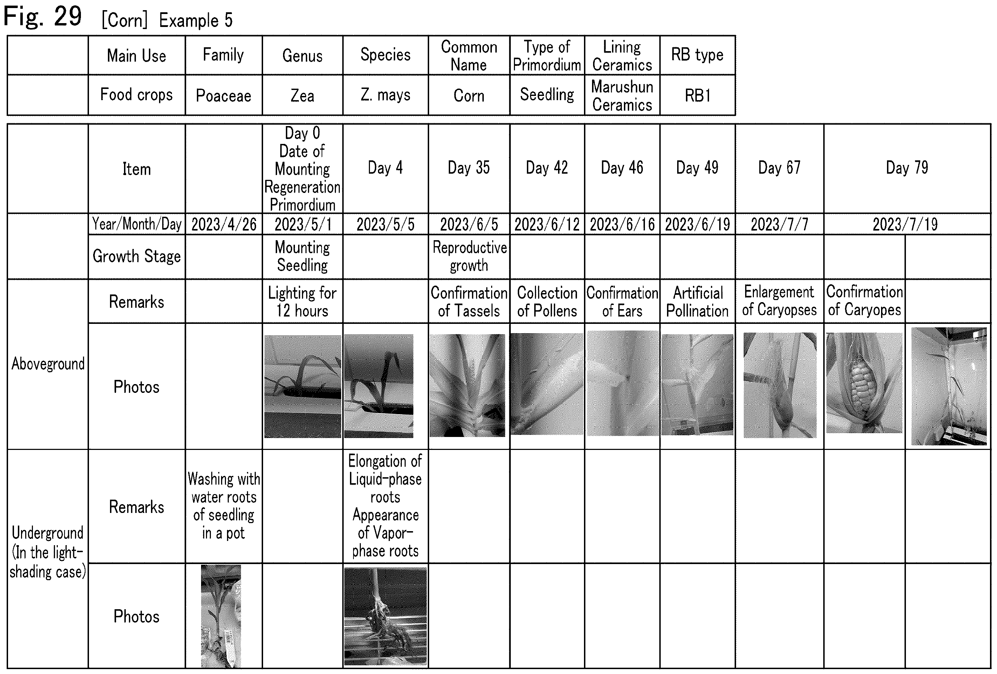

As shown in Figure 29, on May 1st, the corn seedling was set up using clips on a drainboard set on the bottom surface of the RB1 type box. At this time, the root tips of the corn seedling were immersed in the culturing liquid.

On Day 4 from the start date, elongation of liquid-phase roots and appearance of vapor-phase roots were visually confirmed. The tassels were confirmed on Day 35, and pollens were collected from the tassels on Day 42. The ears were confirmed on Day 46, and the ears were artificially pollinated on Day 49. The caryopses became enlarged, and caryopses were confirmed on Day 79.

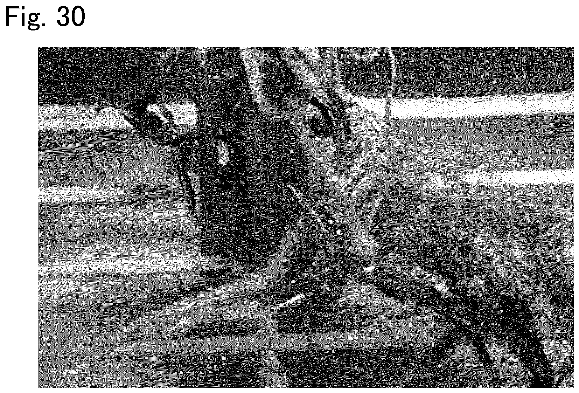

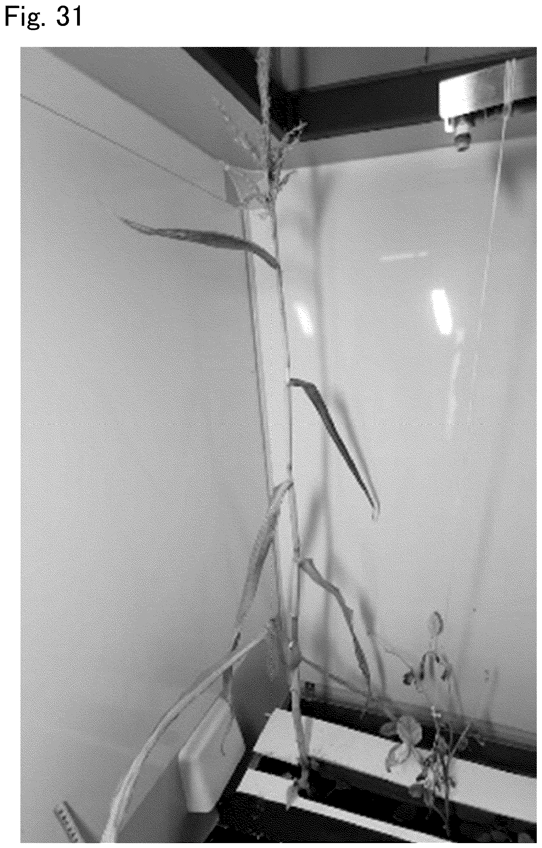

For reference, Figure 30 shows an enlarged view of the root parts observed on Day 4, and Figure 31 shows an enlarged view of the entire of the corn observed on Day 79.

### Example 6

### (Soybean)

Roots of a soybean seedling purchased in a pot on April 26, 2023 were washed with water to remove soil. On the other hand, an RB1 type box was installed in a culturing box installed in a research building set at a temperature of 25°C. The inside of the culturing box was equipped with a ventilation fan, and a high-pressure sodium lamp (FEC Sunlux Ace NH360LS, manufactured by Iwasaki Electric Co., Ltd.) was lit for 12 hours as an illuminating light.

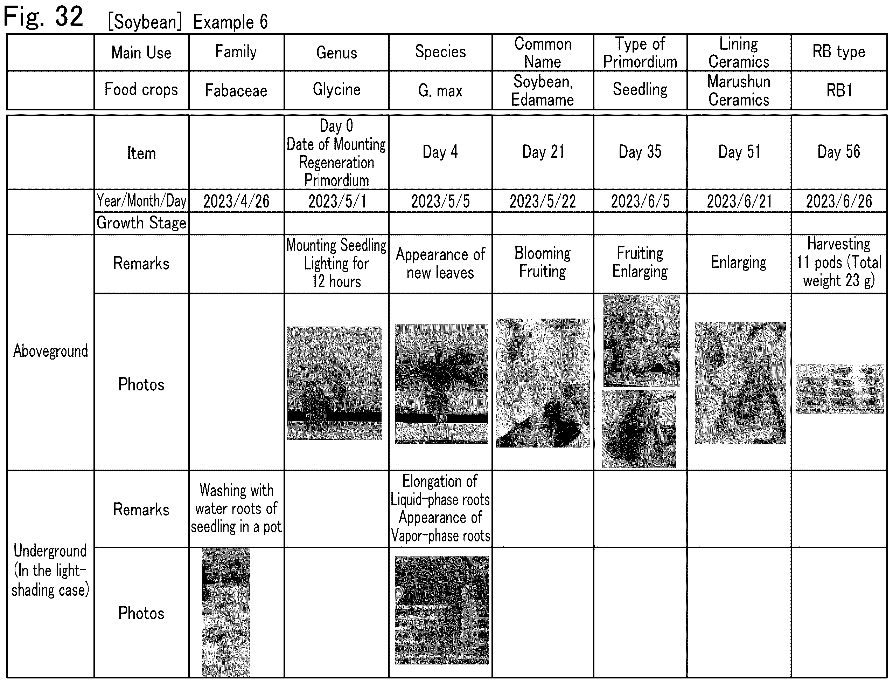

As shown in Figure 32, on May 1st, the corn seedling was set up using clips on a drainboard set on the bottom surface of the RB1 type box. At this time, the root tips of the soybean seedling were immersed in the culturing liquid.

On Day 4 from the start date, elongation of liquid-phase roots and appearance of vapor-phase roots were visually confirmed. They bloomed and fruited on Day 21. They bloomed and enlarged on Day 35. Enlargement progressed on Day 51 and harvested on Day 56. The total weight of the harvested soybeans was 23 g.

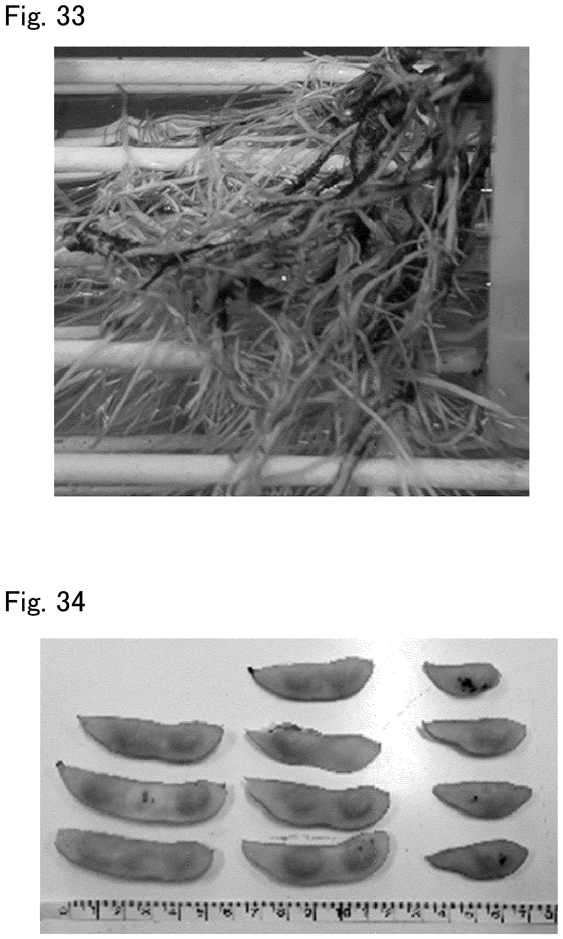

For reference, Figure 33 shows a partially-enlarged view of the root parts observed on Day 4, and Figure 34 shows an enlarged view of the entire of the soybean observed on Day 56.

### Example 7

### (Rapeseed)

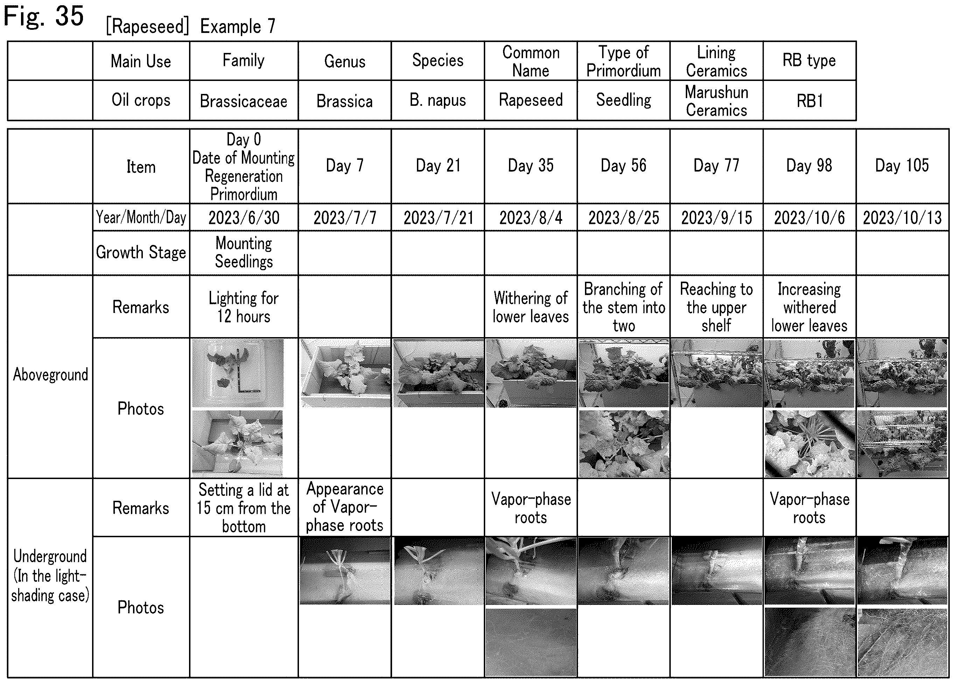

As shown in Figure 35, an RB1 type box was installed in a room set at a temperature of 20.5°C and a humidity of 70%. Then, rapeseed seedlings which were rooted from seeds were placed on a ceramic plate set on the bottom surface of the RB1 type box. Next, two pieces of black plastic cardboard with a thickness of 4 mm were butted against each other and hang at a height of 15 cm from the bottom surface to support the stem of the rapeseed seedlings and to shade the roots. An LED (SOLIDLITE EL-L01-LT104F-DQM-D2423) was used as an illumination light for 12 hours, and culture was started on June 30, 2023.

Vapor phase roots appeared on Day 7 from the start date. The lower leaves began to wither on Day 35, and the stem had branched into two on Day 56. On Day 77, the leaves reached the upper shelf, and on Day 105, the leaves also protruded to the sides.

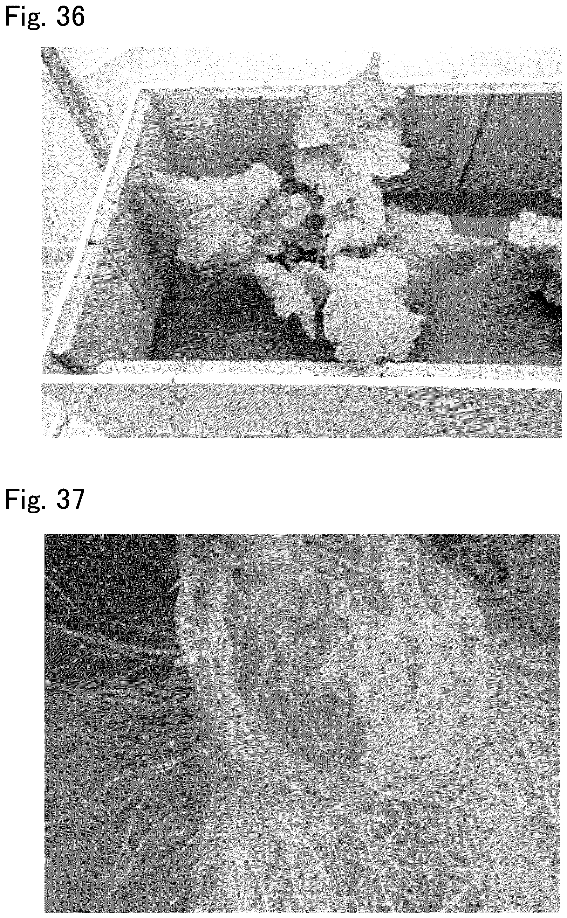

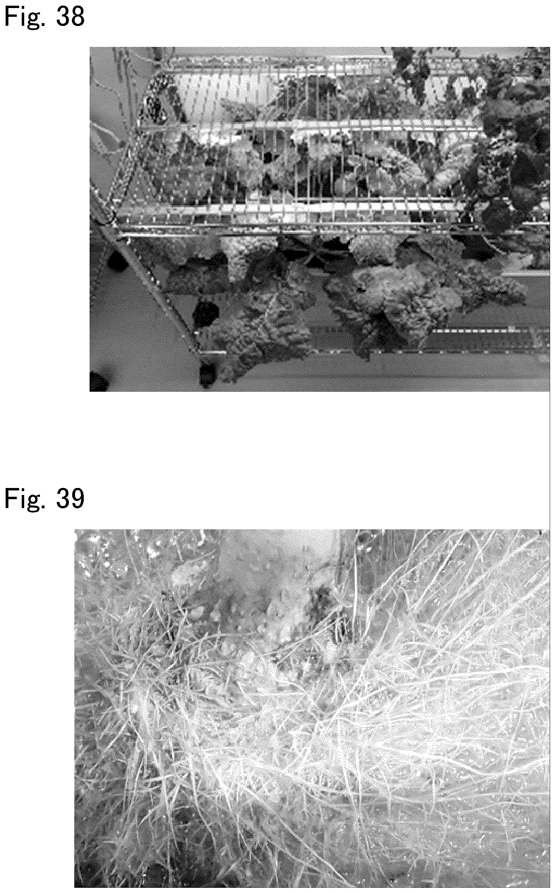

For reference, Figures 36 and 37 show enlarged views of growing seedlings and emerging vapor-phase roots observed on Day 77. Figures 38 and 39 show enlarged views of the grown rapeseed and roots observed on Day 105.

### Example 8

### (Basil)

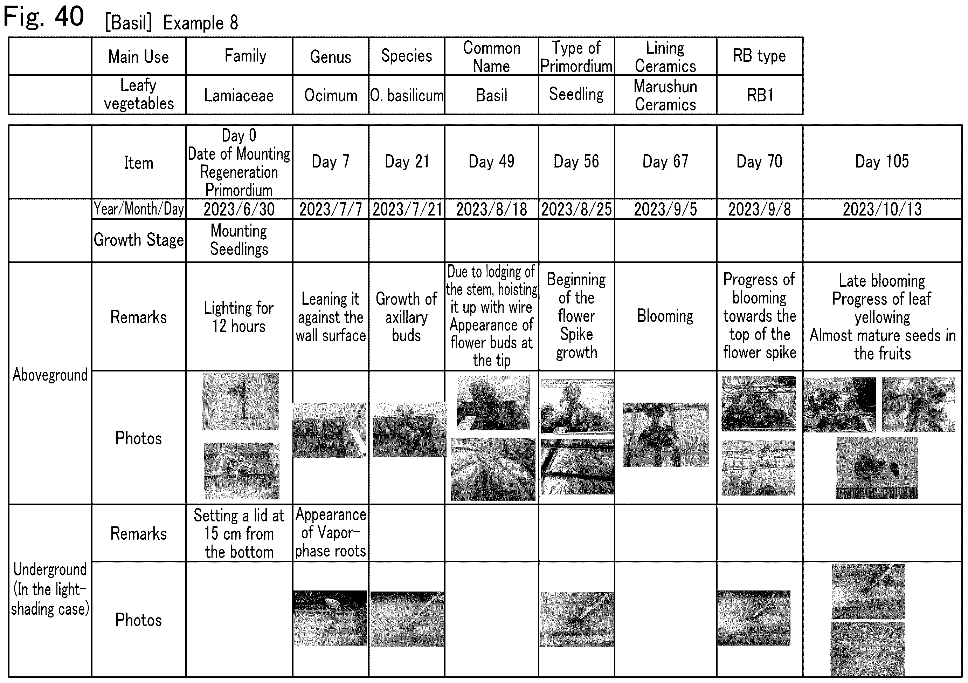

As shown in Figure 40, an RB1 type box was installed in a room set at a temperature of 20.5°C and a humidity of 70%. Then, basil seedlings rooted from seeds were placed on a ceramic plate set on the bottom surface of the RB1 type box. Next, two pieces of black plastic cardboard with a thickness of 4 mm were butted against each other and hang at a height of 15 cm from the bottom surface to support the stem of the rapeseed seedlings and to shade the roots. An LED (SOLIDLITE EL-L01-LT104F-DQM-D2423) was used as an illumination light for 12 hours, and culture was started on June 30, 2023.

Vapor-phase roots appeared on Day 7 from the start date. Flower buds appeared on Day 49, and flower spikes grew on Day 56. They bloomed on Day 67, and seeds almost matured on Day 105.

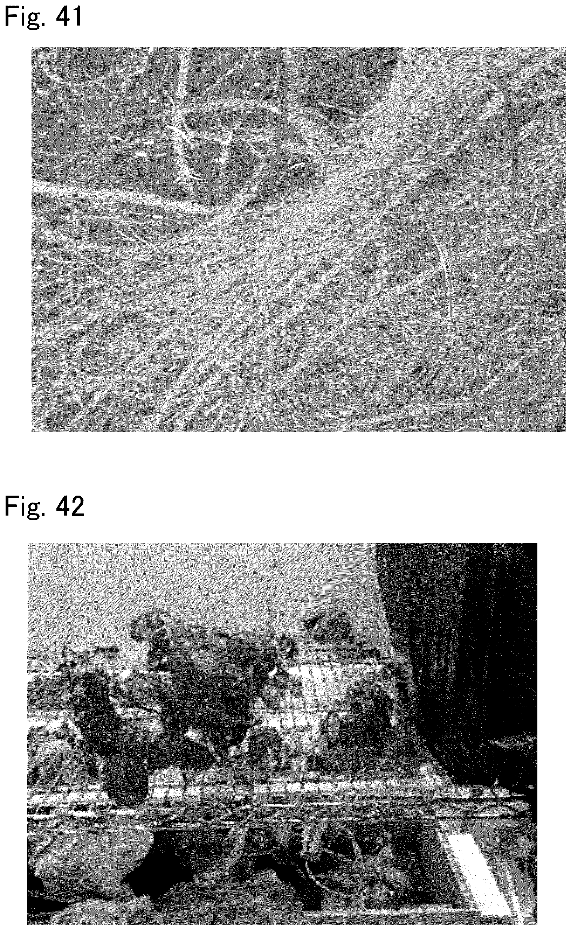

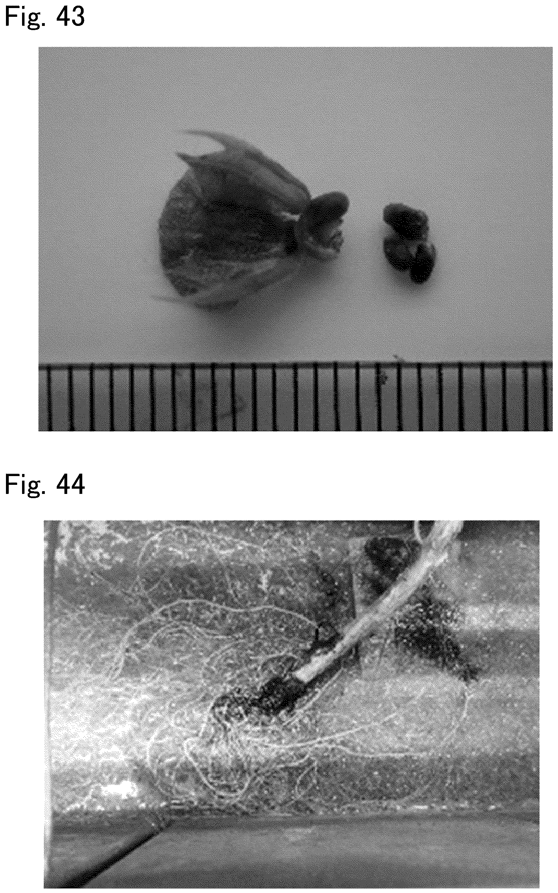

For reference, Figure 41 shows an enlarged view of vapor-phase roots appeared on Day 7. Figures 42, 43 and 44 show enlarged views of the grown basil, harvested seeds and root parts, respectively, observed on Day 105.

### Example 8

### (Japanese peppermint)

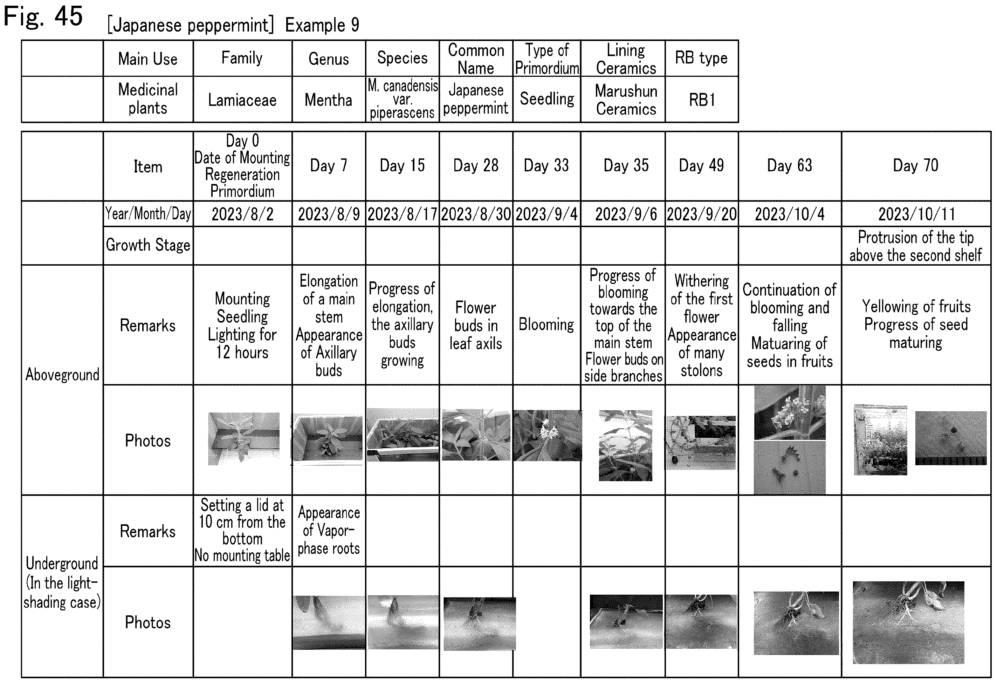

As shown in Figure 45, an RB1 type box was installed in a room set at a temperature of 20.5°C and a humidity of 70%. Then, a Japanese peppermint seedling which was cut and rooted was directly placed on the bottom surface of the RB1 type box. Next, two pieces of black plastic cardboard with a thickness of 4 mm were butted against each other and hang at a height of 10 cm from the bottom surface to support the stem of the Japanese peppermint seedling and to shade the roots. An LED (SOLIDLITE EL-L01-LT104F-DQM-D2423) was used as an illumination light for 12 hours, and culture was started on August 2, 2023.

Vapor-phase roots appeared on Day 7 from the start date. On Day 28, flower buds appeared on leaf axils, and they bloomed on Day 33. On Day 35, flower buds appeared also on side branches, and many stolons appeared on Day 49. On Day 63, seeds matured in fruits, and fruit mature further progressed on Day 70.

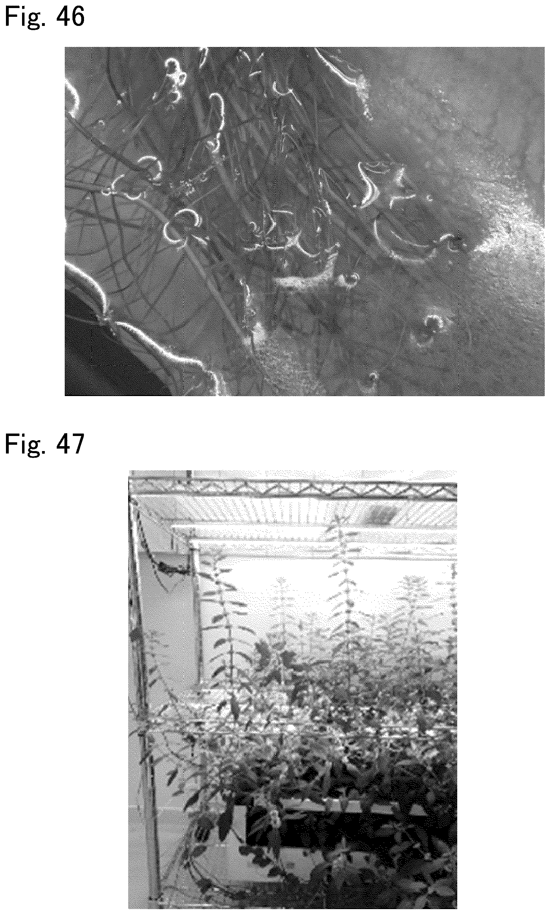

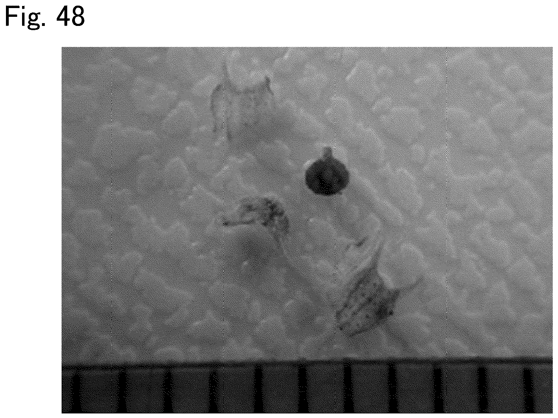

For reference, Figure 46 shows an enlarged view of vapor-phase roots appeared on Day 7. Figures 47 and 48 show enlarged views of the grown Japanese peppermint observed on Day 70, and maturing seeds, respectively.

### Example 10

### (Green perilla)

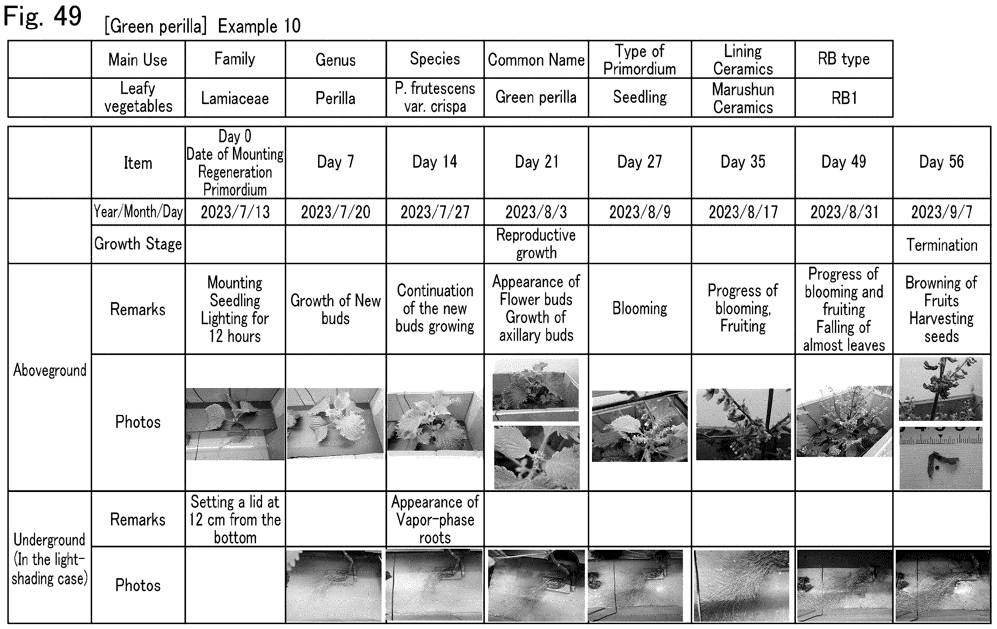

As shown in Figure 49, an RB1 type box was installed in a room set at a temperature of 20.5°C and a humidity of 70%. Then, a green perilla seedling which were cut and rooted was directly placed on the bottom surface of the RB1 type box. Next, two pieces of black plastic cardboard with a thickness of 4 mm were butted against each other and hang at a height of 12 cm from the bottom surface to support the stem of the green perilla seedling and to shade the roots. An LED (SOLIDLITE EL-L01-LT104F-DQM-D2423) was used as an illumination light for 12 hours, and culture was started on July 13, 2023.

New buds developed on Day 7 from the start date, and vapor-phase roots appeared on Day 14. Flower buds appeared on Day 21. Axillary buds also appeared, and they bloomed on Day 27. On Day 35, blooming progressed to fruit. On Day 56, the fruits turned brown and the seeds were harvested.

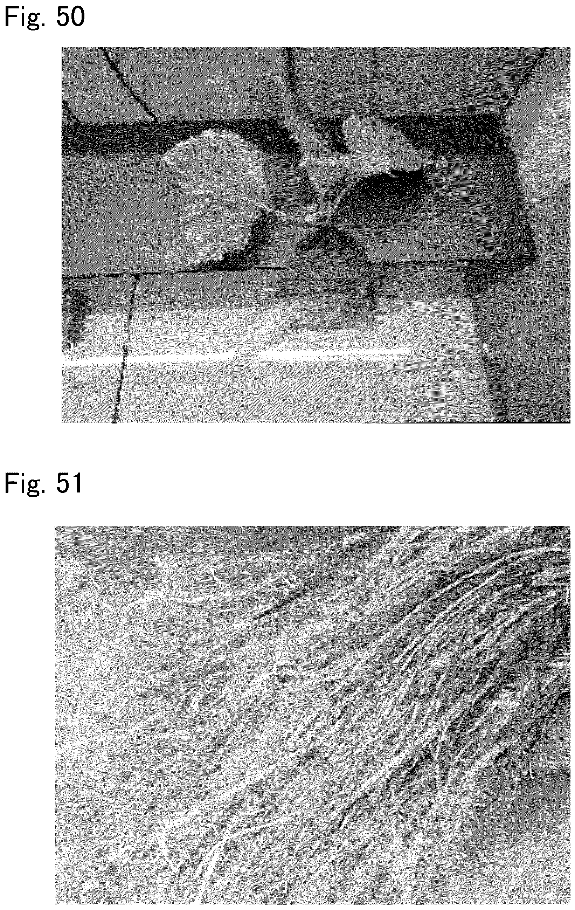

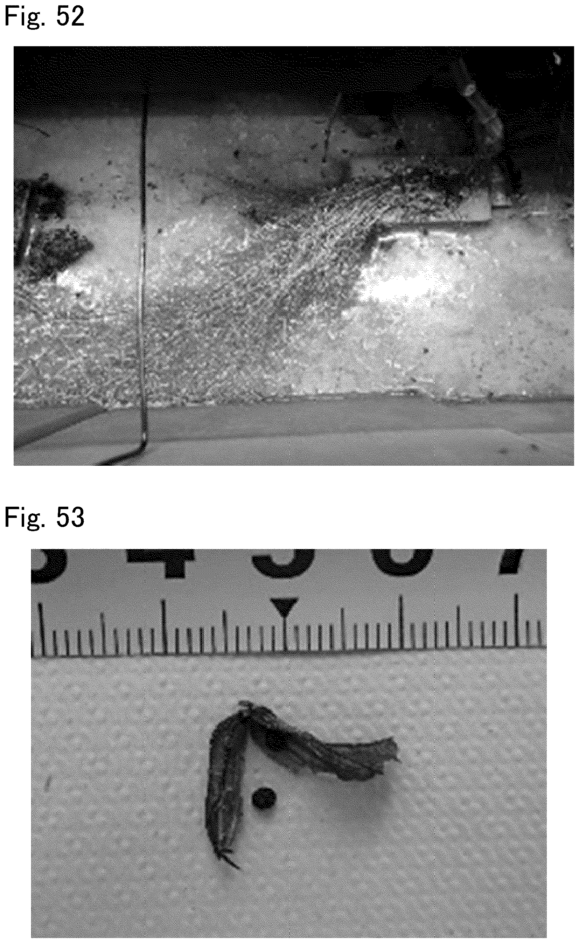

For reference, Figure 50 shows an enlarged view of a placement status for the green perilla seedling, Figures 51 shows a partially-enlarged view of the vapor-phase roots appearing on Day 14, Figure 52 shows an enlarged view of root parts observed on Day 56, and Figure 53 shows an enlarged view of a seed harvested on Day 56.

### Example 11

### (Strawberry)

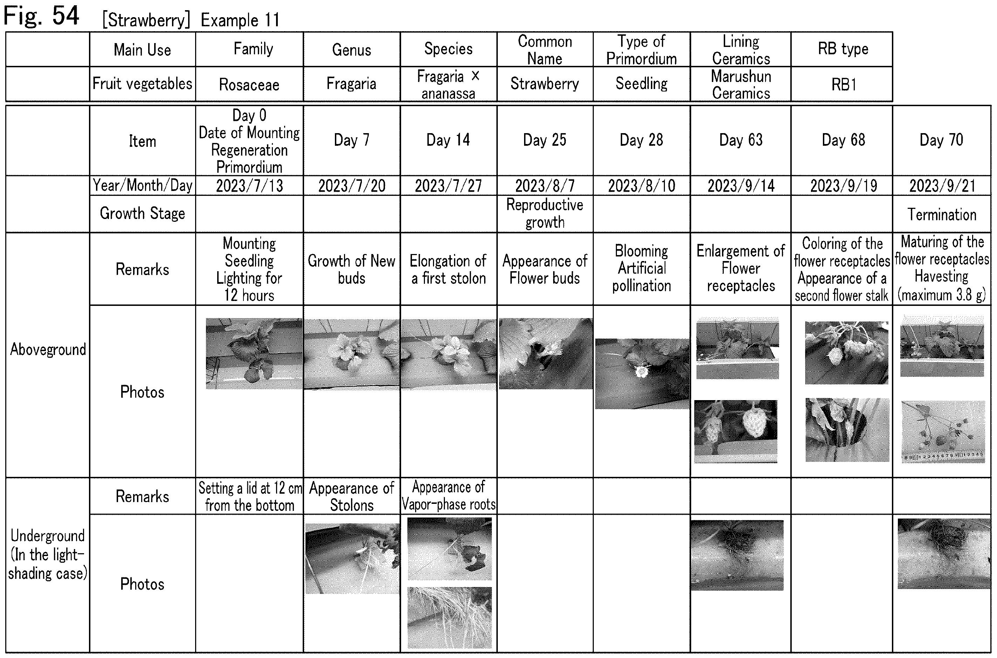

As shown in Figure 54, an RB1 type box was installed in a room set at a temperature of 20.5°C and a humidity of 70%. Then, a strawberry seedlings which was obtained by dividing its stolon and rooted was then placed on a ceramic plate set on the bottom surface of the RB1 type box. Next, two pieces of black plastic cardboard with a thickness of 4 mm were butted against each other and hang at a height of 12 cm from the bottom surface to support the stem of the strawberry seedling and to shade the roots. An LED (SOLIDLITE EL-L01-LT104F-DQM-D2423) was used as an illumination light for 12 hours, and culture was started on July 13, 2023.

Stolons appeared on Day 7 from the start date, and vapor-phase roots appeared on Day 14. Flower buds appeared on Day 25. They bloomed on Day 28, then, artificial pollination was carried out. On Day 68, enlarged flower receptacles began to change color. On Day 70, mature flower receptacles were harvested.

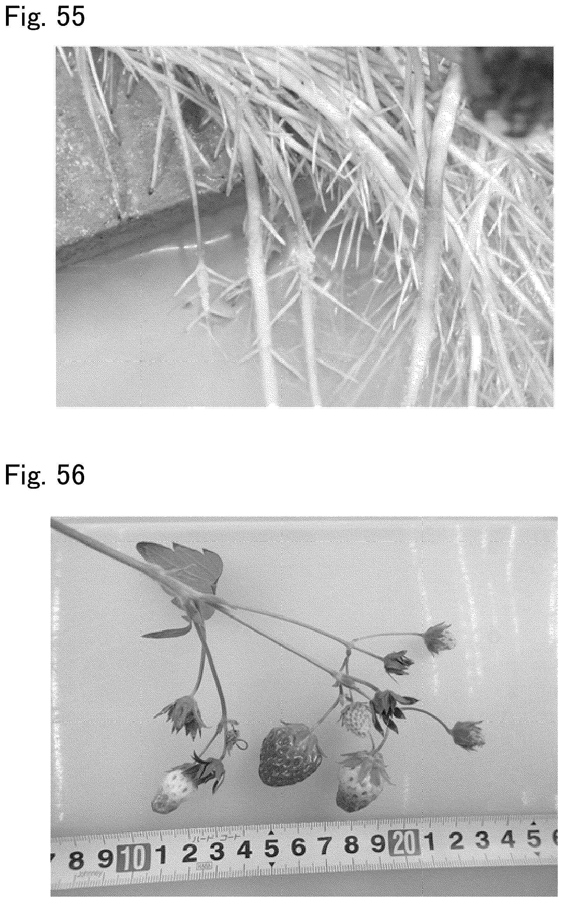

For reference, Figure 55 shows a partially-enlarged view of the vapor-phase roots appearing on Day 14, Figure 56 shows an enlarged view of strawberries harvested on Day 70.

### Example 12

### (Trifoliate orange)

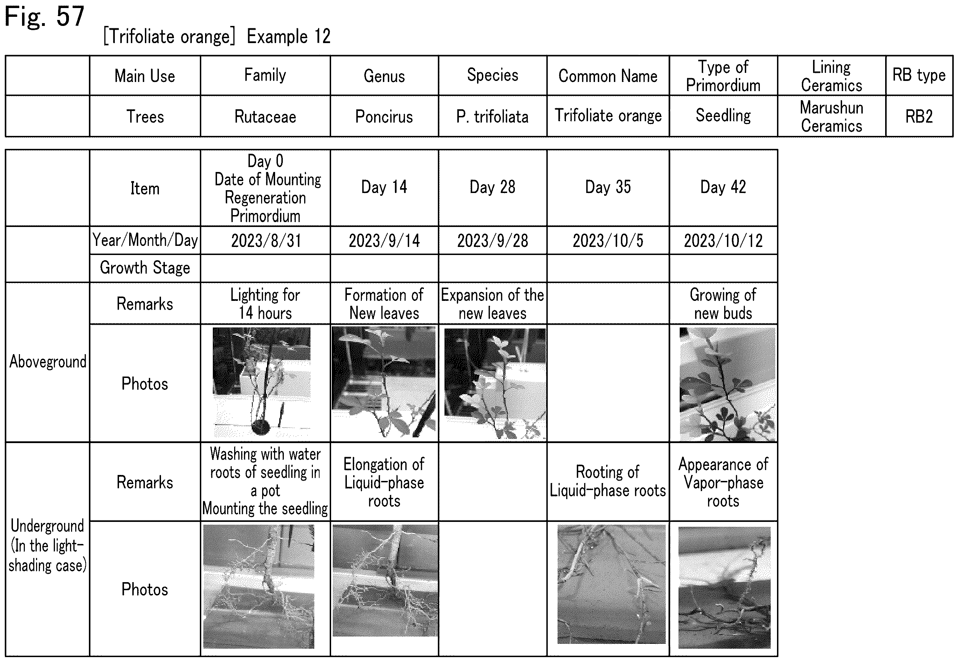

As shown in Figure 57, roots of a trifoliate orange seedling purchased in a pots were washed with water to remove soil. A light-shading case was installed in a room set at a temperature of 22°C and a humidity of 60%. As a light-shading case, that having the same structure as in the first embodiment, provided that a through hole had was made circle (hereinafter referred to as "RB2 type") was used. Then, three LED lamps (6000K (Kelvin)) were provided above the light-shading case (RB2 type), and the lights were turned on for 14 hours for culture.

The root part of the trifoliate orange was placed on a ceramic plate set on the bottom surface of the RB2 type box on August 31, 2023, the roots were shaded from light using a lid. Liquid-phase roots elongated on Day 14 from the start date, and new leaves expanded on Day 28. Liquid-phase roots took root on Day 35, and vapor-phase roots appeared on Day 42.

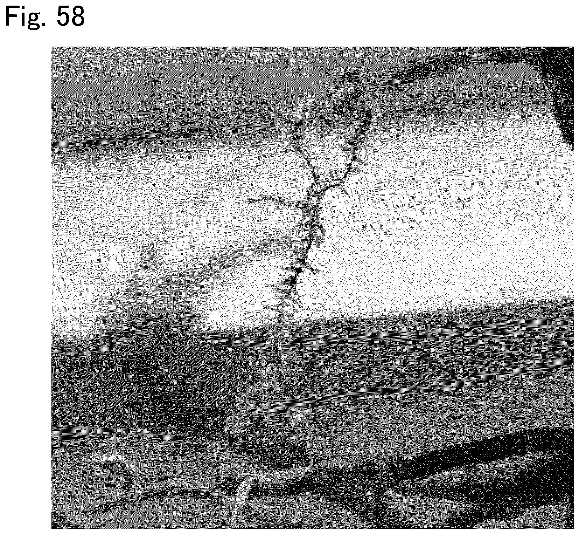

For reference, Figure 58 shows an enlarged view of the vapor-phase roots appeared on Day 42.

### Example 13

### (Tea tree)

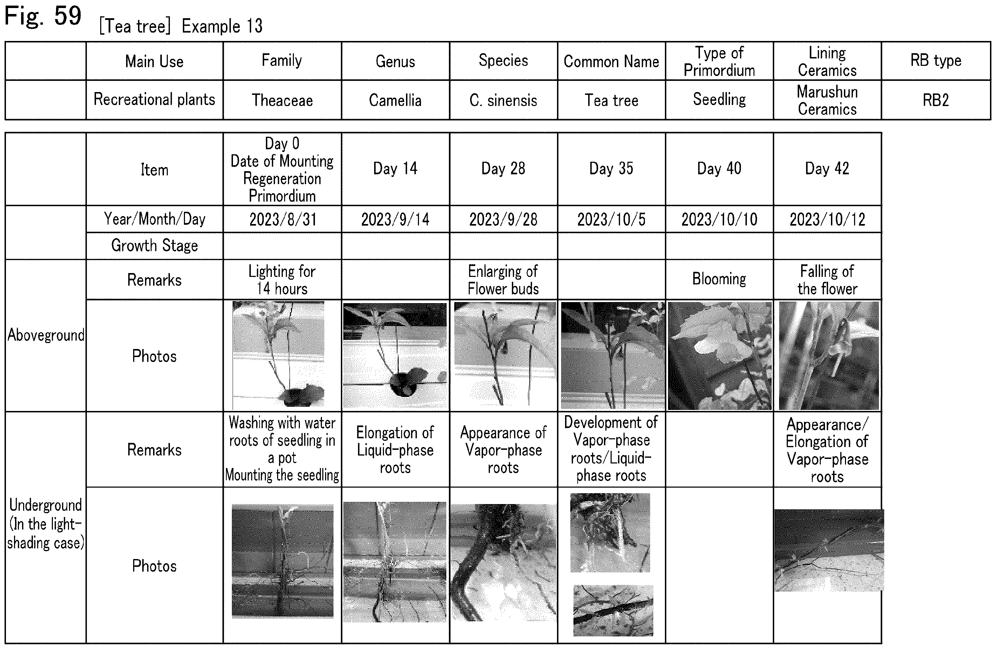

As shown in Figure 59, roots of a tea tree seedling purchased in a pot were washed with water to remove soil. An RB2 type box was installed in a room set at a temperature of 22°C and a humidity of 60%. Then, three LED lamps (6000K (Kelvin)) were provided above the RB2 type box, and the lights were turned on for 14 hours for culture.

The root part of the tea tree was placed on a ceramic plate set on the bottom surface of the RB2 type box on August 31, 2023, the roots were shaded from light using a lid. Liquid-phase roots elongated on Day 14 from the start date. Flower buds enlarged on Day 28, and vapor-phase roots appeared. On Day 35, the liquid-phase roots and vapor-phase roots further developed, and they bloomed on Day 40.

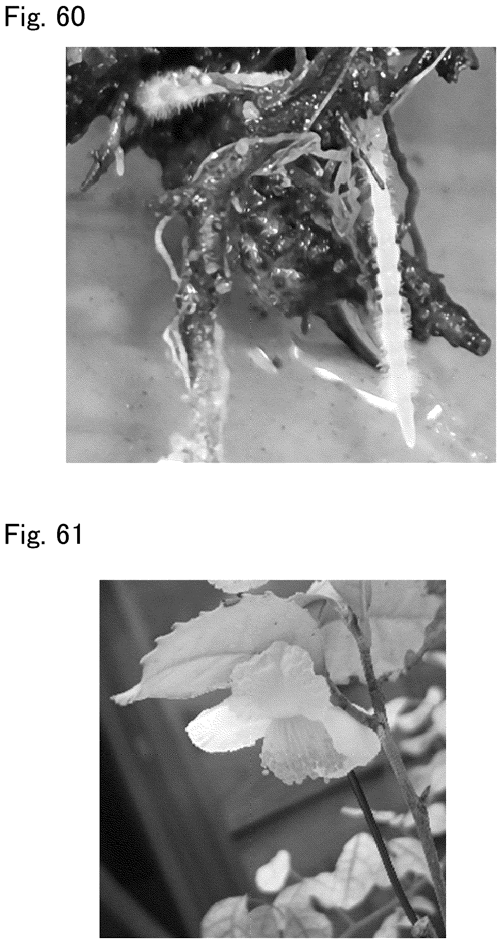

For reference, Figure 60 shows an enlarged view of the vapor-phase roots and liquid-phase roots developing at Day 35, and Figure 61 shows an enlarged view of the bloomed flower observed on Day 40.

### Example 14

### (Passion fruit)

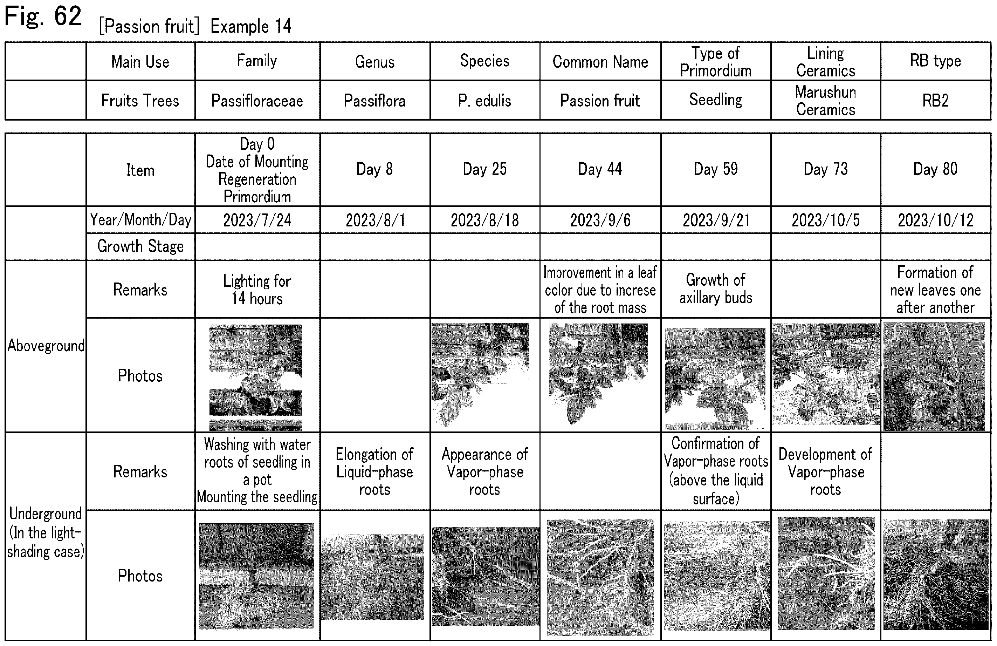

As shown in Figure 62, roots of a passion fruit seedling purchased in a pot were washed with water to remove soil. An RB2 type box was installed in a room set at a temperature of 22°C and a humidity of 60%. Then, three LED lamps (6000K (Kelvin)) were provided above the RB2 type box, and the lights were turned on for 14 hours for culture.

The passion fruit seedling was placed on a ceramic plate set on the bottom surface of the RB2 type box on August 31, 2023, the roots were shaded from light using a lid. Appearance of liquid-phase roots was confirmed on Day 8 from the start date, and appearance of vapor-phase roots was confirmed on Day 25. On Day 59, axillary buds grew, and it was confirmed that new leaves formed one after another even Day 80. Culture will continue in the future.

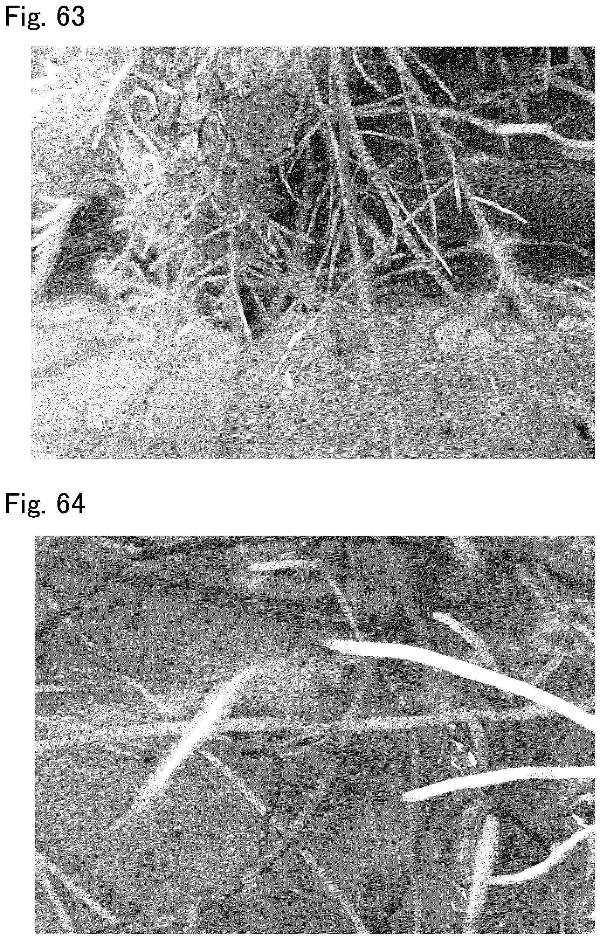

For reference, Figure 63 shows a partially-enlarged view of the vapor-phase roots appeared on Day 25, and Figure 64 shows an enlarged view of the developed vapor-phase roots observed on Day 73.

### Example 15

### (Fig)

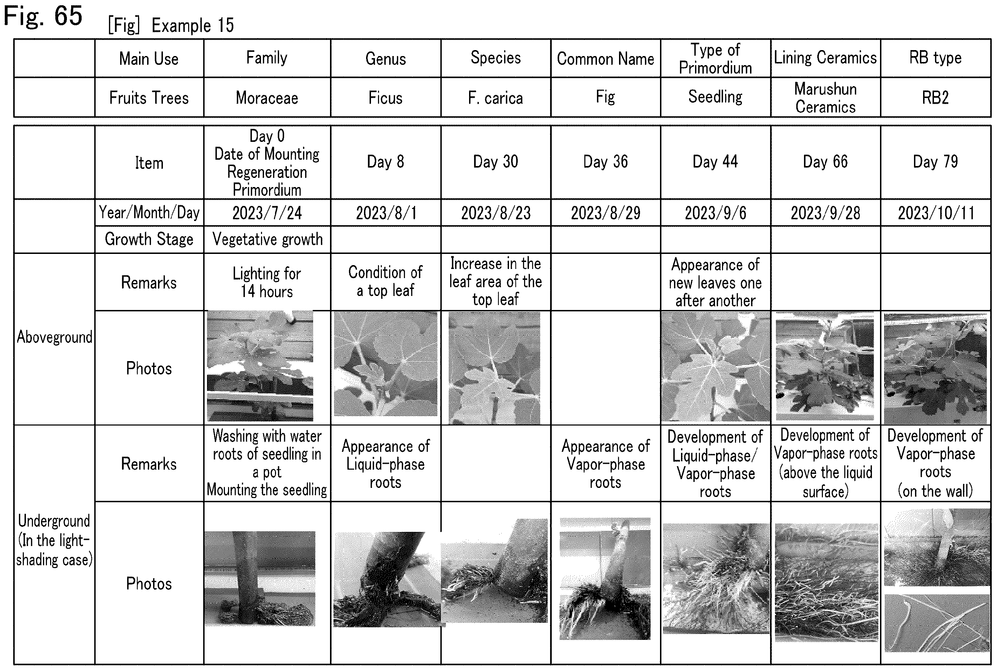

As shown in Figure 65, roots of a fig seedling purchased in a pot were washed with water to remove soil. An RB2 type box was installed in a room set at a temperature of 22°C and a humidity of 60%. Then, three LED lamps (6000K (Kelvin)) were provided above the RB2 type box, and the lights were turned on for 14 hours for culture.

The fig seedling was placed on a ceramic plate set on the bottom surface of the RB2 type box on July 24, 2023, the roots were shaded from light using a lid. Liquid-phase roots appeared on Day 8 from the start date, the leaf area of a top leaf increased on Day 30, and vapor-phase roots appeared on Day 36. New leaves appeared on Day 44, grown vapor-phase roots appeared from the liquid surface on Day 66, and vapor-phase roots were still developing from roots attached to the internal objects even on Day 79.

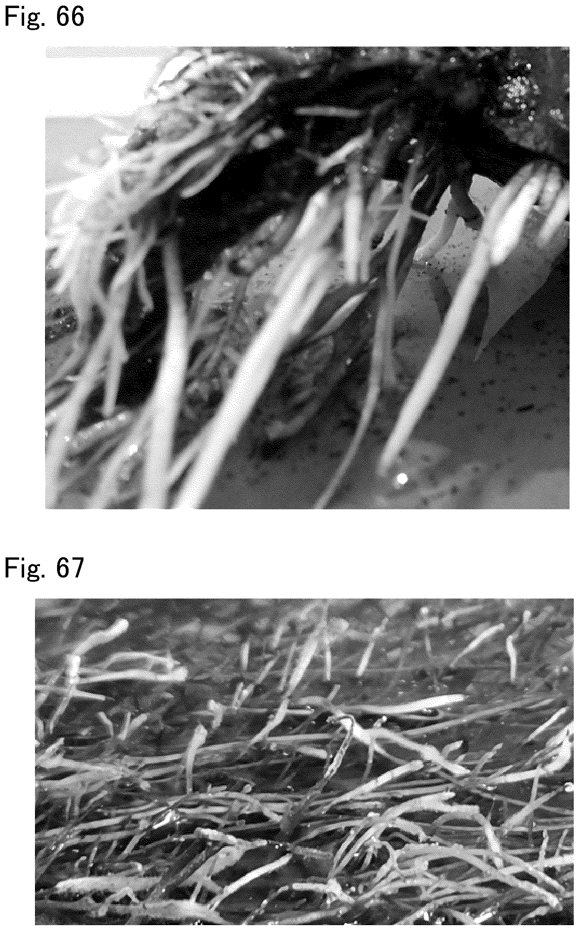

For reference, Figure 66 shows an enlarged view of the vapor-phase roots appeared on Day 36, and Figure 67 shows an enlarged view of vapor-phase roots appearing from the liquid surface on Day 66.

### Example 16

### (Chinese licorice)

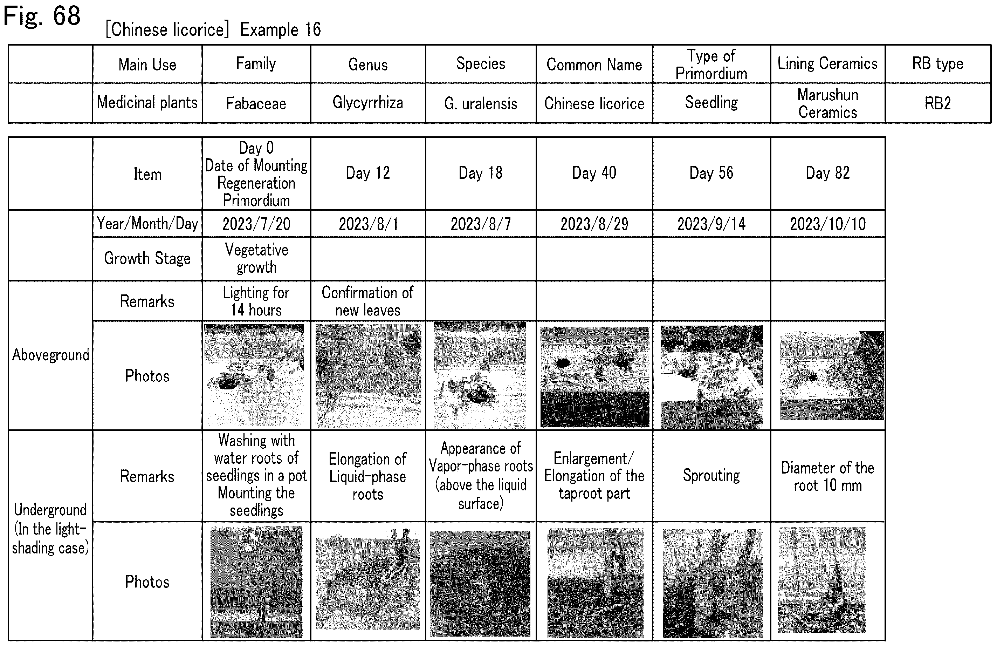

As shown in Figure 68, roots of Chinese licorice seedlings purchased in a pot were washed with water to remove soil. An RB2 type box was installed in a room set at a temperature of 22°C and a humidity of 60%. Then, three LED lamps (6000K (Kelvin)) were provided above the RB2 type box, and the lights were turned on for 14 hours for culture.

The Chinese licorice seedlings were placed on a ceramic plate set on the bottom surface of the RB2 type box on July 20, 2023, the roots were shaded from light using a lid. Liquid-phase roots elongated on Day 12 from the start date, and vapor-phase roots appeared on Day 18. A taproot part enlarged and elongated on Day 40. On Day 56, it sprouted, and the roots enlarged to the extent that the maximum diameter was 10 mm on Day 82.

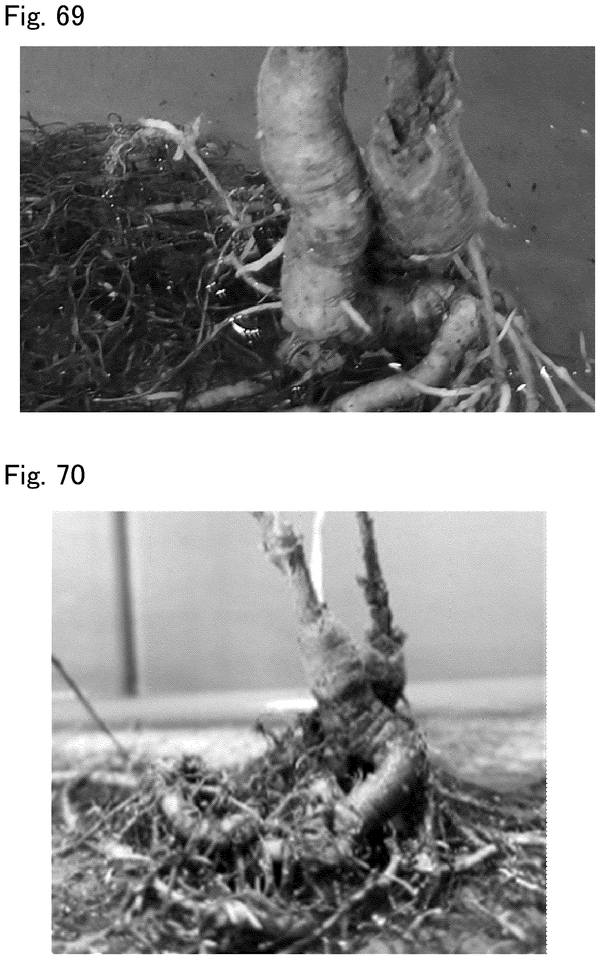

For reference, Figure 69 shows an enlarged view of the vapor-phase roots appeared on Day 18, and Figure 70 shows an enlarged view of the enlarged root part observed on Day 82.

### Example 17

### (Cotton)

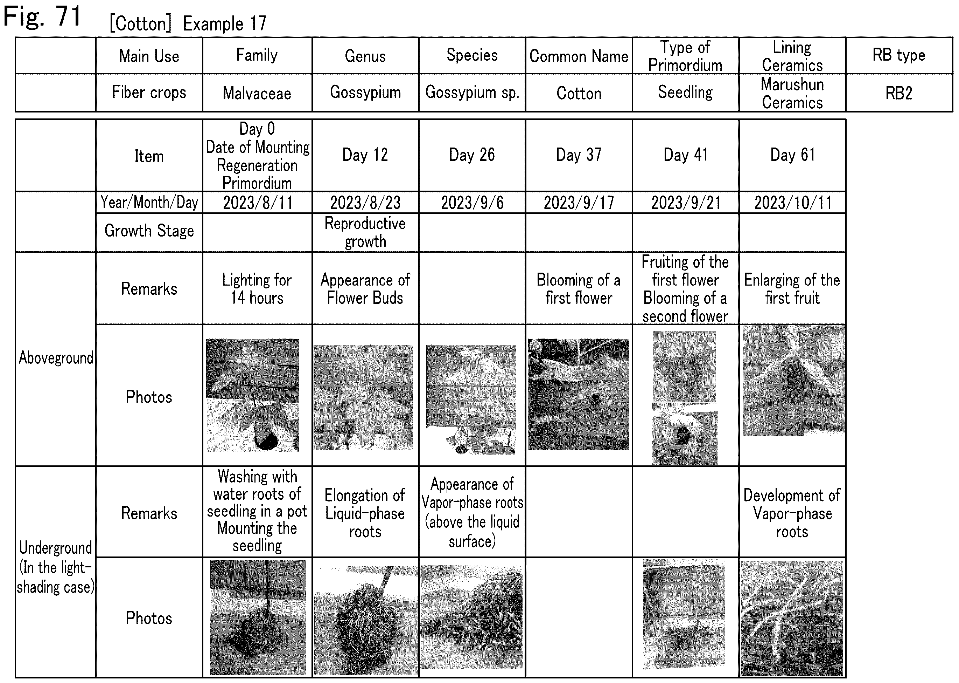

As shown in Figure 71, roots of a cotton seedling purchased in a pot were washed with water to remove soil. An RB2 type box was installed in a room set at a temperature of 22°C and a humidity of 60%. Then, three LED lamps (6000K (Kelvin)) were provided above the RB2 type box, and the lights were turned on for 14 hours for culture.

The cotton seedling was placed on a ceramic plate set on the bottom surface of the RB2 type box on August 11, 2023, the roots were shaded from light using a lid. Liquid-phase roots elongated on Day 12 from the start date, and flower buds appeared. On Day 26, vapor-phase roots appeared from the liquid surface, and the first flower bloomed on Day 37. On Day 41, the first flower bore a fruit, and the second flower bloomed. On Day 61, the first fruit was enlarging, and vapor-phase roots developed.

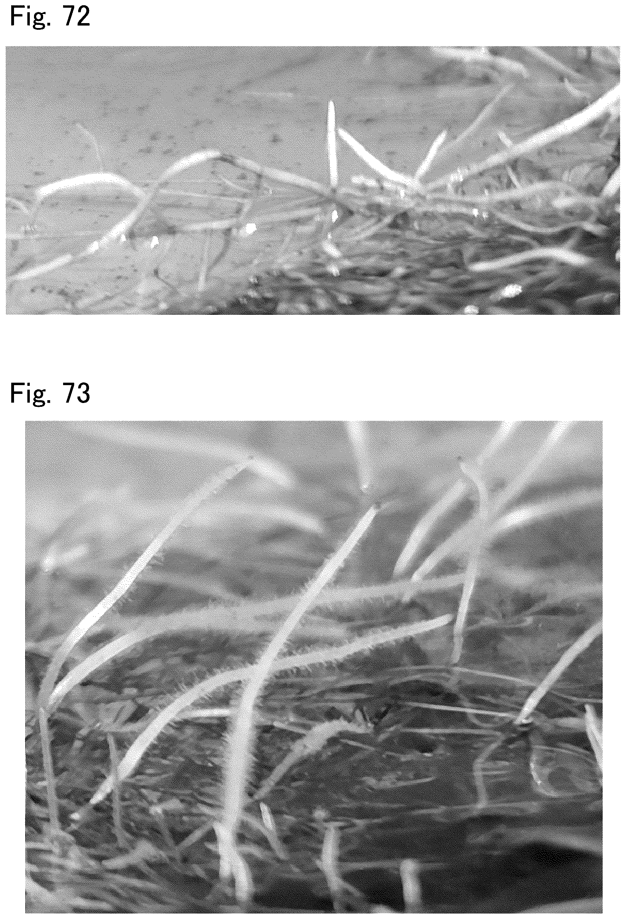

For reference, Figure 72 shows an enlarged view of the vapor-phase roots appeared on Day 26, and Figure 73 shows an enlarged view of the developed root part observed on Day 61.

### Example 18

### (Cherry tomato)

As shown in Figure 71, roots of a cherry tomato seedling purchased in a pot on April 19, 2023 were washed with water to remove soil. An RB2 type box was installed in a culturing box installed in a research building set at a temperature of 25°C. The inside of the culturing box was equipped with a ventilation fan, and a high-pressure sodium lamp (FEC Sunlux Ace NH360LS, manufactured by Iwasaki Electric Co., Ltd.) was lit for 12 hours as an illuminating light.

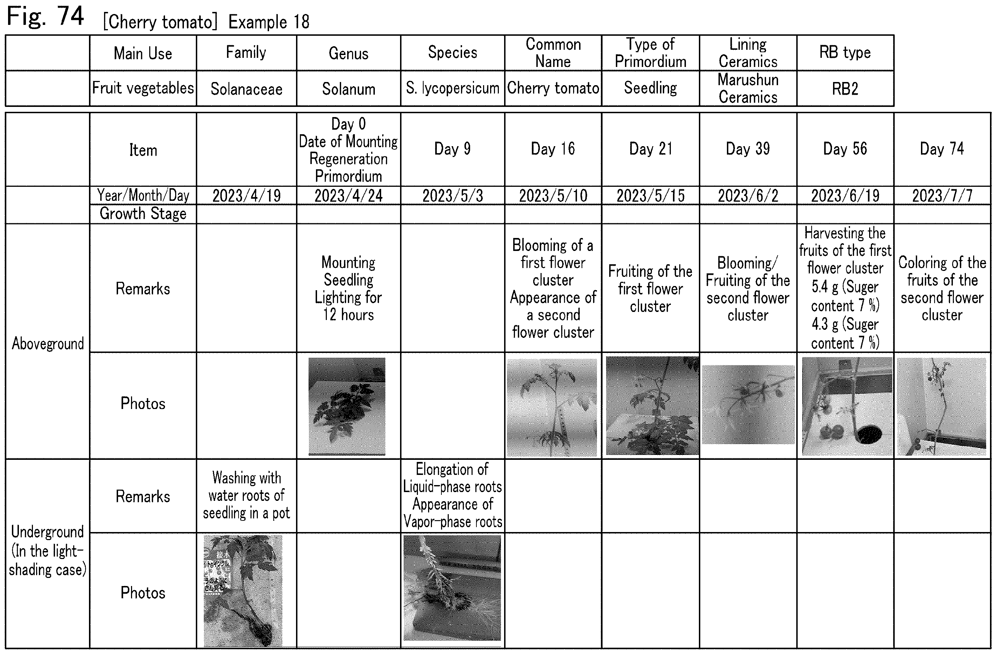

As shown in Figure 74, the cherry tomato seedling was placed on a ceramic plate set on the bottom surface of the RB2 type box on April 24, 2023, and culture started. Liquid-phase roots elongated on Day 9 from the start date, and vapor-phase roots appeared. On Day 16, the first flower cluster bloomed, and the second flower cluster appeared. On Day 21, the first flower cluster bore fruits, and the fruits enlarged. On Day 39, the second flower cluster bloomed, and it had born fruits. On Day 56, two fruits were harvested from the first flower cluster, and weights and sugar contents thereof were measured. On Day 74, it was confirmed that the fruits from the second flower cluster colored.

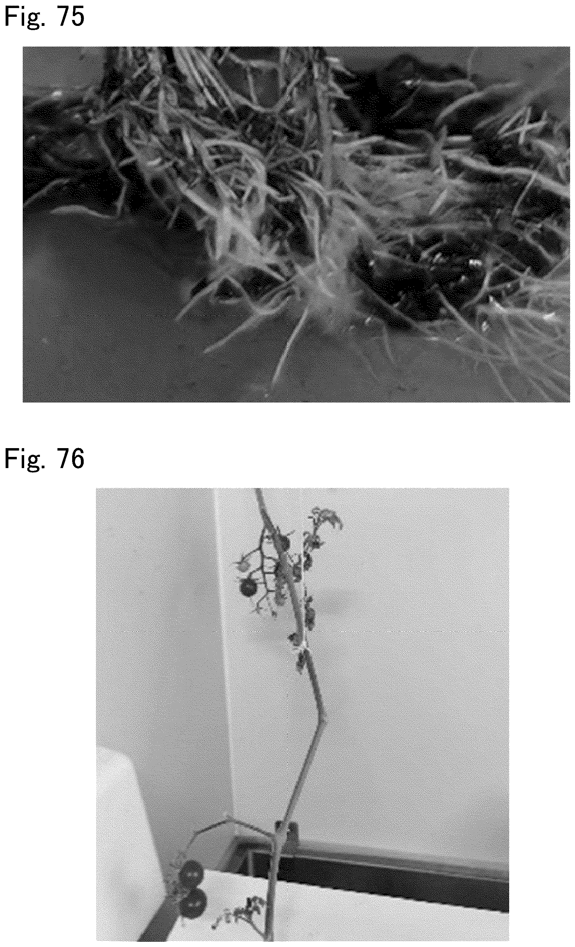

For reference, Figure 75 shows a partially-enlarged view of the root parts observed on Day 9, and Figure 76 shows an enlarged view of the cherry tomatoes observed on Day 74.

### Example 19

### (Cucumber)

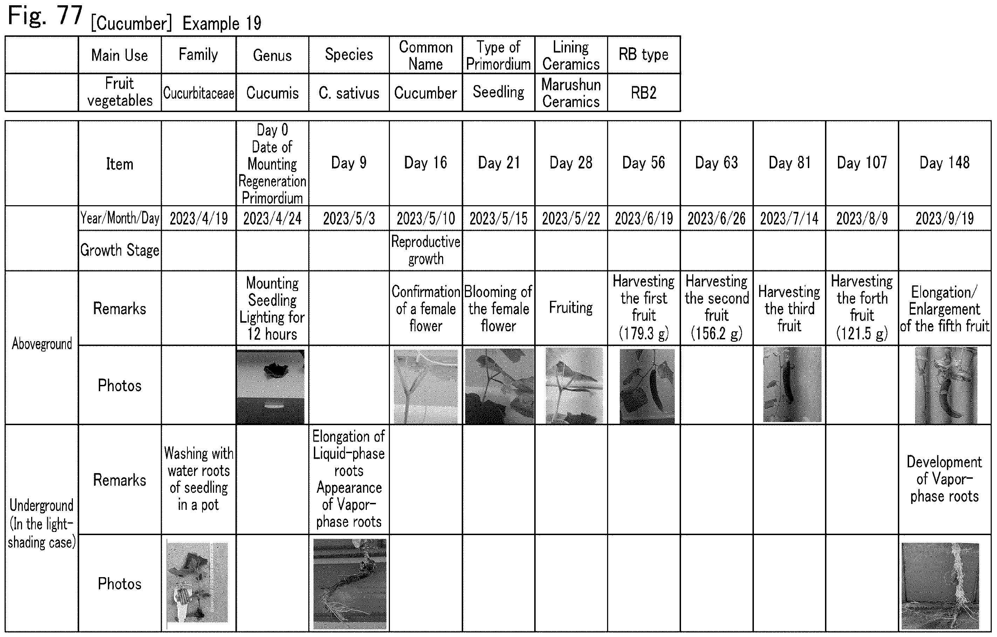

As shown in Figure 77, roots of a cucumber seedling purchased in a pot on April 19, 2023 were washed with water to remove soil. An RB2 type box was installed in a culturing box installed in a research building set at a temperature of 25°C. The inside of the culturing box was equipped with a ventilation fan, and a high-pressure sodium lamp (FEC Sunlux Ace NH360LS, manufactured by Iwasaki Electric Co., Ltd.) was lit for 12 hours as an illuminating light.

The cucumber seedling was placed on a ceramic plate set on the bottom surface of the RB2 type box on April 24, 2023. At this time, the upper surface of the ceramic plate was almost at the same level of the culturing liquid, and the root tip part of the cucumber seedling was submerged in the stagnant culturing liquid.

On Day 9 from the start date, elongation of liquid-phase roots and appearance of vapor-phase roots were visually confirmed. Female flowers were confirmed on Day 16, and blooming of the female flowers was confirmed on Day 21, and fruiting was confirmed on Day 28. The first fruit (179.3 g) was harvested on Day 56, the second fruit (156.2 g) was harvested on Day 63, the third fruit was harvested on Day 81, and the fourth fruit (121.5 g) was harvested on Day 107. Even Day 148 from the start date of culturing, it was confirmed that the fifth fruit was elongating and enlarging, and that liquid-phase roots and vapor-phase roots flourished.

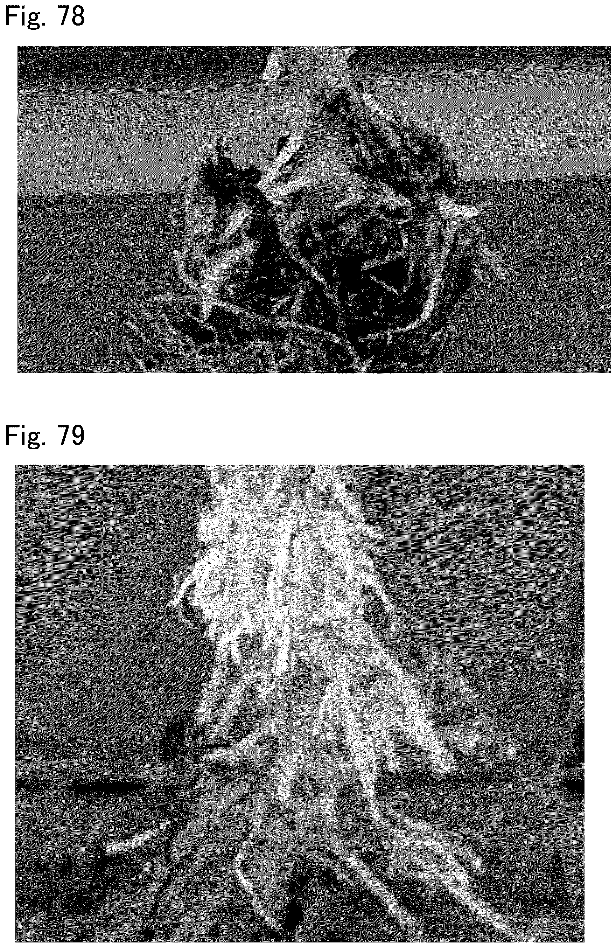

For reference, Figure 78 shows an enlarged view of the root parts observed on Day 9, and Figure 79 shows a partially-enlarged view of the root parts observed on Day 148.

### Example 20

### (Eggplant)

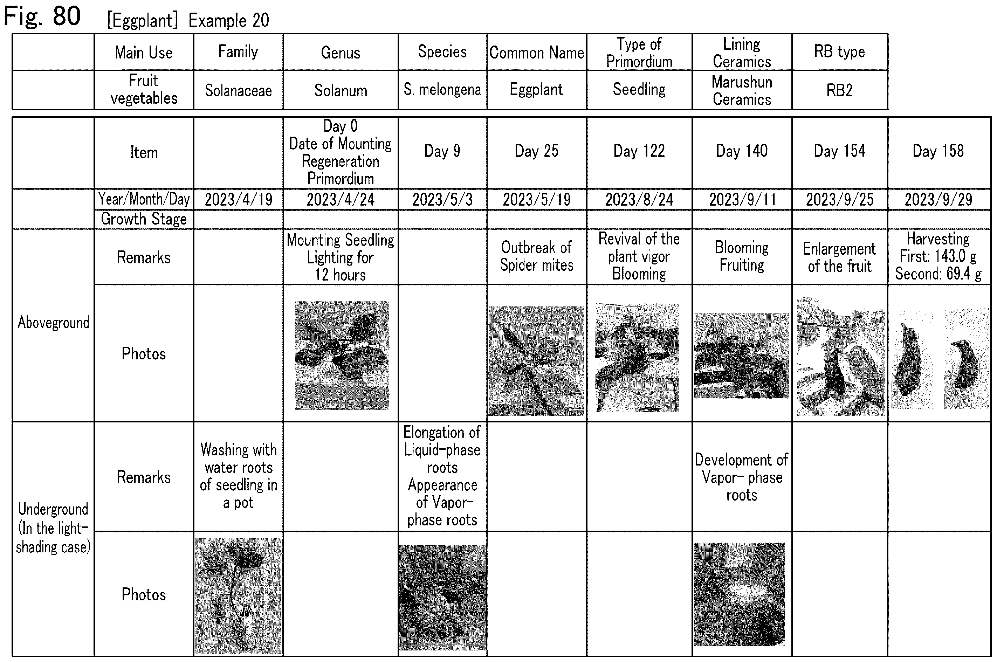

As shown in Figure 80, roots of an eggplant seedling purchased in a pot on April 19, 2023 were washed with water to remove soil. An RB2 type box was installed in a culturing box installed in a research building set at a temperature of 25°C. The inside of the culturing box was equipped with a ventilation fan, and a high-pressure sodium lamp (FEC Sunlux Ace NH360LS, manufactured by Iwasaki Electric Co., Ltd.) was lit for 12 hours as an illuminating light.

The eggplant seedling was placed on a ceramic plate set on the bottom surface of the RB2 type box on April 24, 2023. At this time, the upper surface of the ceramic plate was almost at the same level of the culturing liquid, and the root tip part of the eggplant seedling was submerged in the stagnant culturing liquid.

On Day 9 from the start date, elongation of liquid-phase roots and appearance of vapor-phase roots were visually confirmed. Spider mites appeared on Day 25. However, it regained plant vigor to bloom. On Day 140, flowers newly bloomed and bore fruits. On Day 154, the fruits enlarged, and two eggplants were harvested on Day 158. The first one weighted 143.0 g, and the second one weighted 69.4 g.

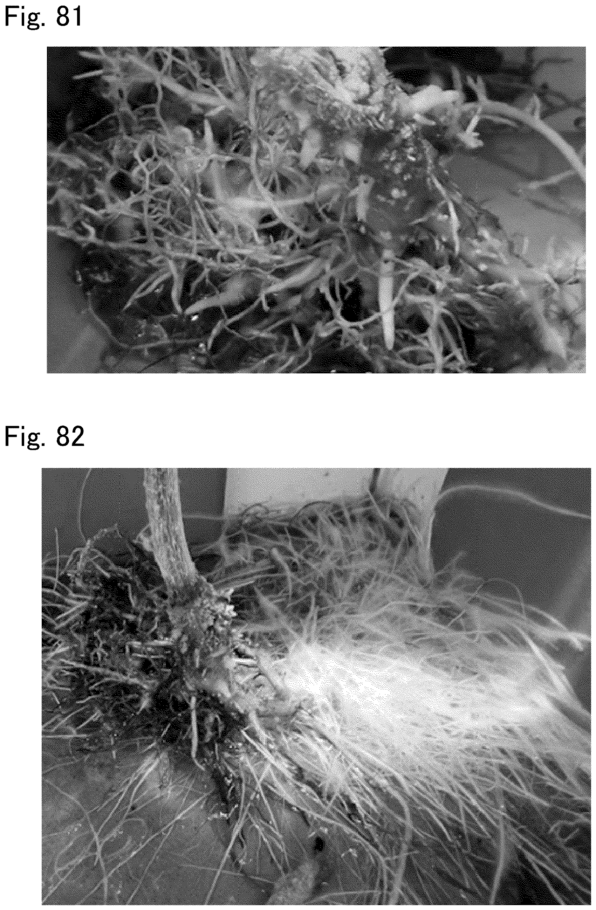

For reference, Figure 81 shows an enlarged view of the root parts observed on Day 9, and Figure 82 shows a partially-enlarged view of the root parts observed on Day 140.

### Example 21

### (Kinrenka (Nasturtium))

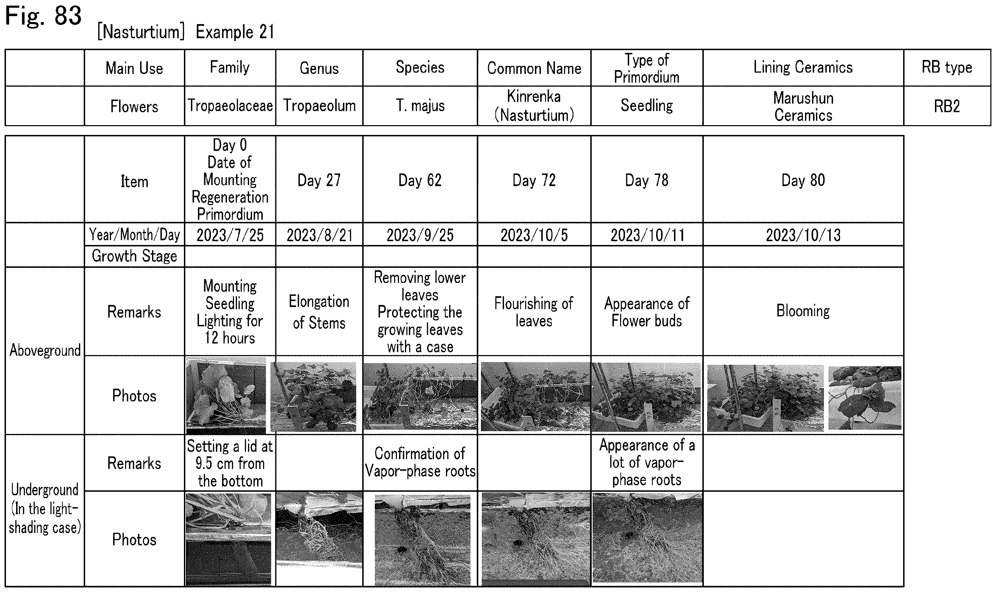

As shown in Figure 83, an RB2 type box was installed in a room set at a temperature of 20.5°C and a humidity of 70%. Additionally, a nasturtium seedling was directly placed on the bottom surface of the RB2 type box. Next, two pieces of white plastic cardboard with a thickness of 4 mm were butted against each other and hang at a height of 95 cm from the bottom surface to support the stem of the nasturtium seedling. In addition, the root part was shaded by covering the surface of the plastic cardboard with aluminum foil. An LED (SOLIDLITE EL-L01-LT104F-DQM-D2423) was used as an illumination light for 12 hours, and culture was started on July 25, 2023.

A stem elongated on Day 27 form the start date, and vapor-phase roots were confirmed on Day 62. On Day 72, leaves flourished. On Day 78, flower buds appeared and a lot of vapor-phase roots appeared, and they bloomed on Day 80.

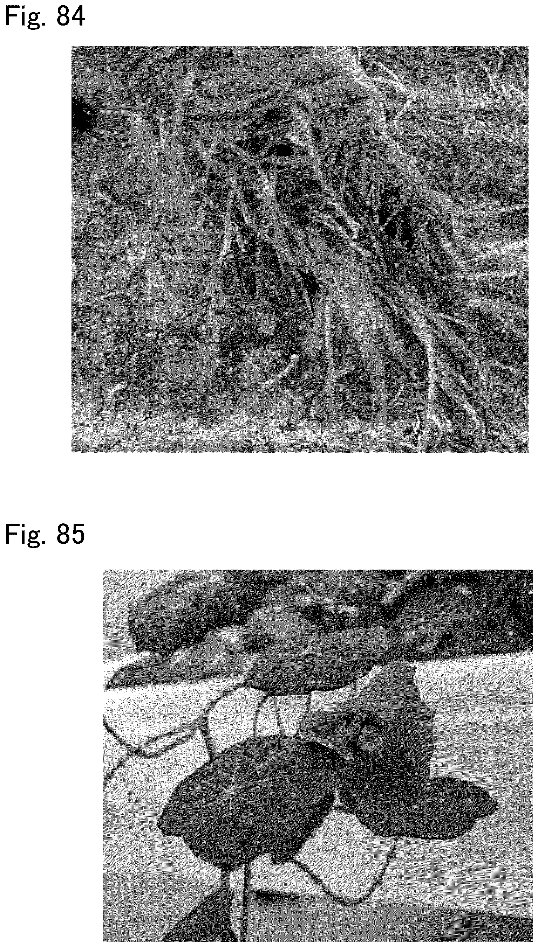

For reference, Figure 84 shows a partially-enlarged view of the vapor-phase roots observed on Day 62, and Figure 85 shows an enlarged view of the blooming status on Day 80.

### Example 22

### (Balloon flower)

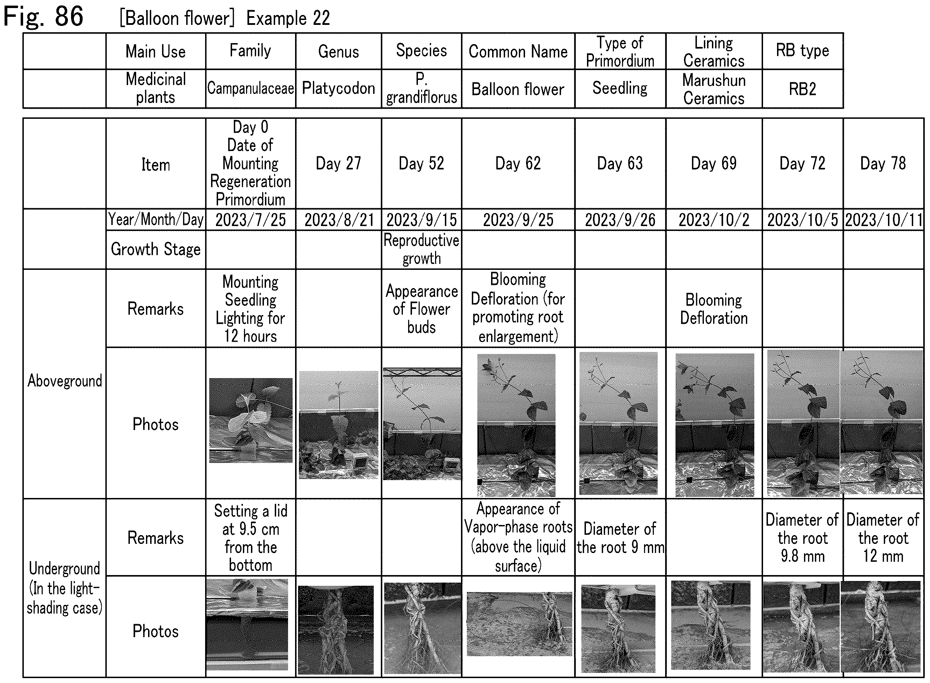

As shown in Figure 86, an RB2 type box was installed in a room set at a temperature of 20.5°C and a humidity of 70%. Additionally, a balloon flower seedling rooting from a seed was directly placed on the bottom surface of the RB2 type box. Next, two pieces of white plastic cardboard with a thickness of 4 mm were butted against each other and hang at a height of 95 cm from the bottom surface to support the stem of the balloon flower seedling. In addition, the root part was shaded by covering the surface of the plastic cardboard with aluminum foil. An LED (SOLIDLITE EL-L01-LT104F-DQM-D2423) was used as an illumination light for 12 hours, and culture was started on July 25, 2023.

Flower buds appeared on Day 52 form the start date, they bloomed on Day 62, and vapor-phase roots protruded from the liquid surface. In order to enhance enlargement of the roots, flowers were removed. On Day 69, they bloomed and similarly were removed. On Day 78, the diameter of the root became 12 mm.

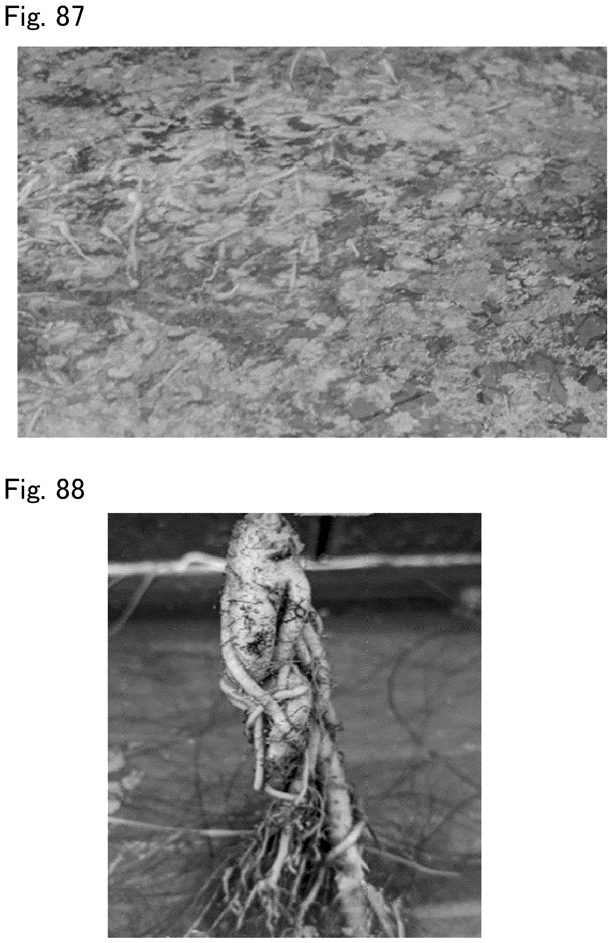

For reference, Figure 87 shows a partially-enlarged view of the vapor-phase roots observed on Day 62, and Figure 88 shows an enlarged view of the root part observed on Day 78.

### Example 23

### (Soybean)

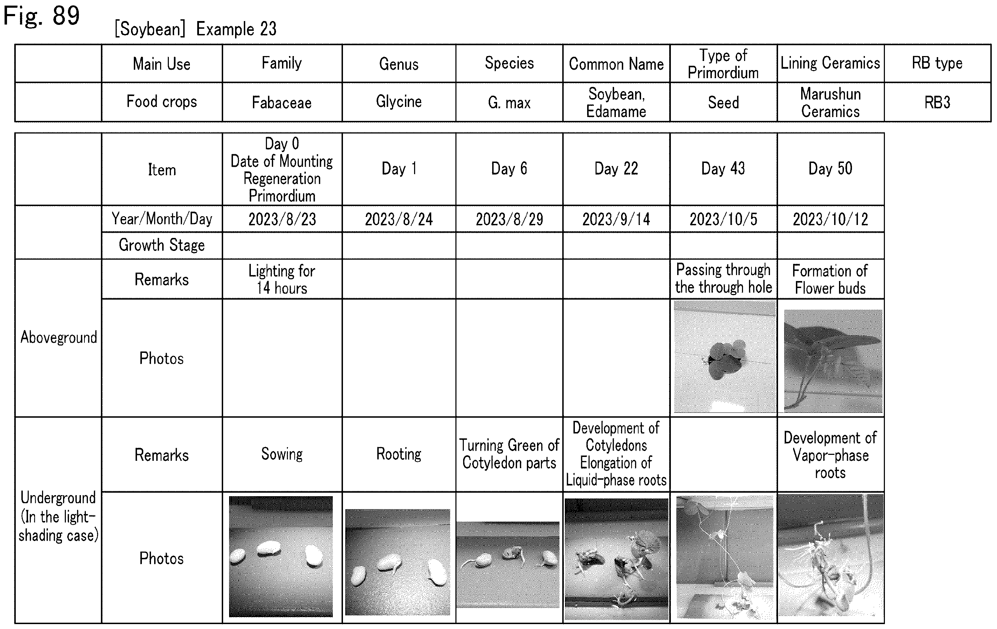

As shown in Figure 89, an RB3 type box was installed in a room set at a temperature of 22°C and a humidity of 60%. LED lamps (HMW95E2SV1A-RMmanuractured by Kyoritu Densho Co., Ltd.) were provided above the RB3 type box, and the lights were turned on for 14 hours for culture.

On August 23, 2023, soybeans were sown on a ceramic plate set on the bottom surface of the RB3 type box, and the plate was covered with a lid provided with a through hole. Rooting occurred on Day 1 from the start date, and the radicle elongated on Day 2. On Day 6, the cotyledon parts turned green, and on Day 22, the cotyledons grew and the liquid phase root elongated. On Day 43, the true leaves passed through the through hole. On Day 50, flower buds were formed and vapor-phase roots developed.

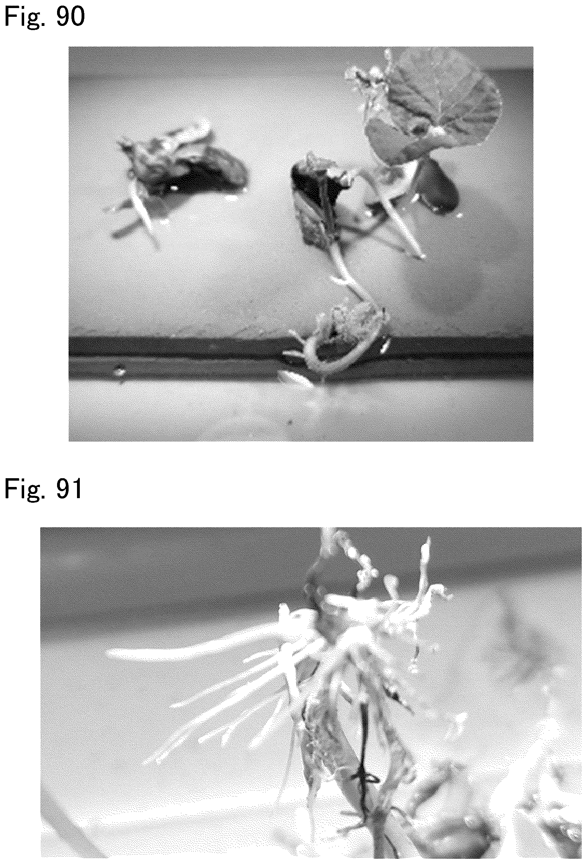

For reference, Figure 90 shows an enlarged view of the liquid-phase roots observed on Day 22, and Figure 91 shows an enlarged view of the developed vapor-phase roots observed on Day 50.

The "no soil-required plant culture" proposed by the present inventors can be applied to a wide range of plant varieties. Not only does it not require soil, it does not require a large land or flowing water, and it can be used to harvest almost all plants, including grains requiring large amount of roots, small woody plants (coffee, tea, etc.), and fruit trees. This enables culture in plant factories. The no soil-required plant culture technology dramatically increases the degree of freedom in plant culture, diversifies and industrializes plant culture methods, which have been limited to soil culture or hydroponics with equipment, to contribute to the supply of food and plant-based raw materials. Furthermore, it is possible to transfer plants and to adopt scientific approaches for identity, homogeneity, cleanliness, reproducibility, etc., which leads to new technological development. In addition, since this technology uses the "same manufacturing method" for the manufacture from research and development to commodification and commercialization, the time period until regional implementation, social implementation is achieved, can be shortened.

### [Industrial Applicability]

The plant factory created with the concept of "no soil-required plant culture" advocated by the present inventors can be operated by anyone, anywhere and anytime at low cost. Thus, as long as there is enough light for photosynthesis, not only in dry areas and disaster-stricken areas where an abundant supply of water cannot be expected, in space such as vehicles, freight cars, ships, and aircraft, and even in outer space, such as space stations and other planets.

### [Explanation of Symbols in the Drawings]

10 Culture apparatus
11. Light-shading case
12. Light-shading case main body
13 Opening
14 Door
15 Lid
16 Through hole
17 Water supply port
20 Water level adjustment means
21 Water supply pipe
22 Drain pipe
23 Supply pipe
24 Connection hose
25 Culturing liquid
26 Holder (T-shaped cross section)
27 Holder (L-shaped cross section)
28 Hanging tool
30 Mounting table (Internal object)
31 Internal object
32 Internal object
40 Lighting case
41 Light source
42 Positioning frame
43 Water storage tank
50 Plant whole body (Cultured plant: Potato)
51 Seed potato
52 Stem
53 Leaves
54 Daughter tuber
60 Support frame
61 Bottom plate
62 Supporting pillar
63 Reinforcement plate
64 Lighting unit (Top plate)
65 Control unit

## Claims

1. Culture apparatus for a plant whole body comprising
a light-shading case that has at least one through hole on its ceiling surface and holds culturing liquid; and
an internal object showing capillary force arranged on at least a part of an inner side surface from among an inner surface of the light-shading case.

2. The culture apparatus for a plant whole body according to claim 1, wherein a water-level adjustment means for adjusting a water level of the culturing liquid is connected to the light-shading case.

3. The culture apparatus for a plant whole body according to claim 1 or 2, wherein the light-shading case comprises a light-shading case main body in a form of a box, and a lid that covers an upper opening of the light-shading case main body and is removable.

4. The culture apparatus for a plant whole body according to claim 3, wherein the lid is hung by spanning multiple hanging tools that span opposing opening edges of the light-shading case main body.

5. The culture apparatus for a plant whole body according to any one of claims 1 to 4, wherein the through hole is in a form of a slit-like long hole.

6. The culture apparatus for a plant whole body according to any one of claims 1 to 5, wherein a door that can be opened and closed is set on at least one side of the light-shading case.

7. The culture apparatus for a plant whole body according to any one of claims 1 to 6, wherein the internal object is arranged on the entire inner side surface of the light-shading case.

8. The culture apparatus for a plant whole body according to any one of claims 1 to 7, wherein the internal object is arranged on the inner surface of the lid of the light-shading case other than an area of the through hole.

9. The culture apparatus for a plant whole body according to any one of claims 1 to 8, wherein another internal object having water retention capacity to supply the culturing liquid to the plant whole body is laid on the entire bottom surface of the light-shading case.

10. The culture apparatus for a plant whole body according to any one of claims 1 to 9, wherein the internal object is removably arranged on the light-shading case via at least one holder that is attached on at least an inner side surface from among an inner surface of the light-shading case.

11. The culture apparatus for a plant whole body according to any one of claims 1 to 10, wherein the internal object is arranged diagonally by leaning against the inner side surface of the light-shading case.

12. The culture apparatus for a plant whole body according to any one of claims 1 to 11, wherein a mounting table that mounts the plant whole body is set on a bottom surface of the light-shading case.

13. The culture apparatus for a plant whole body according to claim 12, wherein the mounting table is made of the same material for the internal object.

14. The culture apparatus for a plant whole body according to claim 12, wherein the mounting table is made up of a drain board.

15. The culture apparatus for a plant whole body according to any one of claims 1 to 14, wherein the internal object is a fired body made of a non-metal inorganic solid material, and contains continuous pores that are voids, and the void rate of the entire fired body is 10 to 80% (vol/vol), the average pore size of the void is 3 µm or less, and the voids with a pore size of 3 µm or less account for 70% or more of the total voids in volume ratio.

16. The culture apparatus for a plant whole body according to any one of claims 1 to 15, wherein a lighting case provided with a light source illuminating light to a top surface of the light-shading case is stacked on the light-shading case.

17. The culture apparatus for a plant whole body according to any one of claims 1 to 15, wherein a lighting unit provided with a light source illuminating light to a top surface of the light-shading case is set above the light-shading case.

18. A culture method for a plant whole body using the culture apparatus for a plant whole body according to any one of claims 1 to 17, which comprises at least
a step of forming a spacial area capable of accommodating a root system of the plant whole body within the light-shading case by arranging an internal object showing capillary force at least a part of an inner side surface from among an inner surface of the light-shading case holding culturing liquid;
a step of supplying a culturing liquid into the light-shading case before or after the step of forming a spacial area;
a step of growing root parts that absorb a water component and nutrition from the liquid phase in the culturing liquid held within the light-shading case; and
a step of growing root parts that absorb oxygen from the vapor phase in a water component and oxygen present inside the spacial area of the light-shading case.

19. The culture method for a plant whole body according to claim 18, wherein the plant whole body is placed on a mounting table which is set on the bottom surface of the light-shading case for culturing.

20. The culture method for a plant whole body according to claim 18 or 19, wherein the culturing liquid held in the light-shading case is water or a nutrient solution containing nutrition required for growing the plant whole body to be cultured, and is stagnant water.

21. The culture method for a plant whole body according to claim 20, wherein the nutrition is an essential macroelement selected from the group consisting of nitrogen, phosphate, potassium, calcium, magnesium and sulfur; an essential trace element selected from the group consisting of iron, manganese, boron, zinc, molybdenum, copper, chlorine, nickel; or an useful element selected from the group consisting of silicon, sodium, cobalt.
